(19) Europäisches Patentamt
European Patent Office
Office européen des brevets

(11) **EP 2 518 533 A1**

(12) **EUROPEAN PATENT APPLICATION**
published in accordance with Art. 153(4) EPC


(43) Date of publication:
**31.10.2012 Bulletin 2012/44**

(21) Application number: **10838980.0**

(22) Date of filing: **24.12.2010**

(51) Int Cl.:
***G02B 5/02*** *(2006.01)* ***F21S 2/00*** *(2006.01)*
***G02B 5/30*** *(2006.01)* ***G02F 1/1335*** *(2006.01)*
***F21Y 103/00*** *(2006.01)*

(86) International application number:
**PCT/JP2010/007490**

(87) International publication number:
**WO 2011/077742 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2009 JP 2009295817**
**28.12.2009 JP 2009297761**
**28.12.2009 JP 2009297762**
**26.03.2010 JP 2010073650**
**07.06.2010 JP 2010129944**



(71) Applicant: **Mitsui Chemicals, Inc.**
**Tokyo 105-7117 (JP)**

(72) Inventors:
- **IWATA, Masataka**
  **Chiba 299-0265 (JP)**
- **OKAMURA, Tomoyuki**
  **Chiba 299-0265 (JP)**
- **SHIMADA, Koichi**
  **Chiba 299-0265 (JP)**
- **INATOMI, Yuji**
  **Chiba 299-0265 (JP)**
- **KAWASUMI, Tamio**
  **Chiba 299-0265 (JP)**
- **ERIGUCHI, Michio**
  **Chiba 299-0265 (JP)**
- **MISUMI, Masaki**
  **Chiba 299-0265 (JP)**

(74) Representative: **HOFFMANN EITLE**
**Patent- und Rechtsanwälte**
**Arabellastrasse 4**
**81925 München (DE)**


# (54) POLARIZING DIFFUSION FILM, PRODUCTION METHOD THEREFOR, AND LIQUID CRYSTAL DISPLAY DEVICE COMPRISING POLARIZING DIFFUSION FILM


(57) Disclosed are a film with excellent polarization selectivity and excellent diffusion properties, and a means for easily producing the same. The polarizing diffusion film has an intrinsic birefringence of at least 0.1 and substantially comprises one type of crystalline resin; and in the polarizing diffusion film, the total light transmittance is 50 to 90% in relation to visible light, the transmission haze is 15 to 90% in relation to visible light, and the degree of transmission polarization is 20 to 90% in relation to visible light.


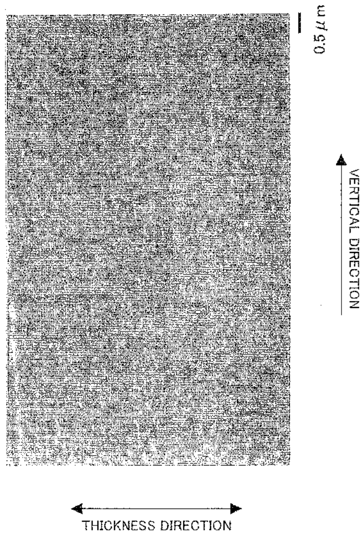


FIG.1A

EP 2 518 533 A1

## Description

### Technical Field

The present invention relates to a polarizing diffuser film, a method of manufacturing the same, and a liquid crystal display device including the polarizing diffuser film.

### Background Art

Liquid crystal display devices have been widely used as display devices for electrical devices including computers, TV sets and cellular phones, but are increasingly required to have further improved display characteristics as well as lower power consumption. A possible approach to meet these requirements is twofold: adequately diffusing light from the light source, and improving the use efficiency of light from the light source. When the light emitted from the light source is adequately diffused, the liquid crystal display device is able to offer wider viewing angles and/or increased in-plane luminance uniformity. High light-use efficiency can realize not only increased luminance of the entire liquid crystal display device for brighter display, but also lower power consumption.

Patent Document 1 discloses a reflective polarizer which allows polarized light beam (a) of particular linear polarization to pass though but reflects polarized light beam (b) with polarization perpendicular to that of light beam (a). Patent Document 1 also discloses a liquid crystal display device which includes this reflective polarizer. The liquid crystal display device includes, in the order from the display-screen surface, a liquid crystal cell, a reflective polarizer, a backlight, and a diffusive reflector. Among light beams with different polarizations from the backlight, polarized light beam (a) passes through the reflective polarizer as a display light beam, whereas polarized light beam (b) is reflected back by the reflective polarizer as a reflection light beam. Polarized light beam (b) reflected by the reflective polarizer is again reflected by the diffusive reflector while being randomly polarized, whereby the light beam is converted to light containing both polarized light beam (a) and polarized light beam (b). Among light beams of the randomly-polarized light, polarized light beam (a) passes through the reflective polarizer (a) as a display light beam, whereas polarized light beam (b) is again reflected as a reflected light beam. Patent Document 1 claims that the use efficiency of light from the backlight can be enhanced in this way. The disclosed reflective polarizer is a multi-layered film consisting of films A made of polyethylene naphthalate and films B made of copolyester prepared using a diacid such as naphthalenedicarboxylic acid or terephthalic acid as an acid component.

As another reflective polarizer, Patent Documents 2 and 9 disclose a sheet made of a first transparent resin continuous phase dispersed with particles or other forms of a second transparent resin. The sheet similarly allows polarized light beam (a) to pass through and reflects polarized light beam (b) with polarization perpendicular to that of light beam (a). This sheet is prepared by extrusion molding of a mixture of two different resins.

Patent Documents 3 to 5 disclose a light guide film or sheet to which haze anisotropy is imparted. Because only a light beam with particular polarization diffuses through and emits from the film when non-polarized light is incident on the film end (edge), the light guide may increase the use efficiency of the incident light. The disclosed film is prepared by uniaxial stretching of a polyethylene naphthalate film or the like which contains or is free of a filler.

Patent Document 6 discloses a production method of resin articles for container applications, which involves biaxial stretching of non-oriented crystallized resin (e.g., polyethylene terephthalate resin) sheets.

Luminance at 0° viewing angle (or normal-direction luminance) is known as one of the important characteristics for liquid crystal display devices. Patent Documents 7 and 8 disclose, as a means of enhancing normal-direction luminance, employing an optical film (e.g., reflective polarizer) having prisms on its surface for adjustment of the light emission angle with respect to the film surface.

### Citation List

#### Patent Literature

[PTL 1] Japanese Patent Application Laid-Open No.09-506985
[PTL 2] Japanese Patent Application Laid-Open No.2003-075643
[PTL 3] Japanese Patent Application Laid-Open No.11-281975
[PTL 4] Japanese Patent Application Laid-Open No.2001-264539
[PTL 5] Japanese Patent Application Laid-Open No.2001-49008
[PTL 6] Japanese Patent Application Laid-Open No.2005-531445
[PTL 7] Japanese Patent Application Laid-Open No.2007-272052

[PTL 8] Japanese Patent Application Laid-Open No.2007-206569
[PTL 9] Japanese Patent Application Laid-Open No.2000-506989

## Summary of Invention

### Technical Problem

As described above, since the reflective polarizer disclosed by Patent Document 1 is a laminate of multiple films A and B having different chemical structures, it requires a complicated manufacturing method. The complexity has been a hindering factor in the cost reduction. Moreover, in order to impart light diffusion property to the reflective polarizer, it has been necessary to provide an additional light diffusive member or layer onto the reflective polarizer by coating techniques or by bonding. The sheets disclosed by Patent Documents 2 and 9 are made of polymer alloy, thus requiring a complicated manufacturing method and making fine adjustment of polarization characteristics and light diffusion property difficult.

The films or sheets disclosed by Patent Documents 3 to 5 may be manufactured with a method which allows for relatively easy adjustment of optical characteristics. However, because the films or sheets disclosed by Patent Documents 3 to 5 are merely light guiding members for the light incident on their end (edge), they do not have a function to allow only a light beam with particular polarization to pass through among incident light with different polarizations, nor do they have a function to allow the incident light beam to diffuse through the film. This may be due to low crystallinity and low transmission haze in non-stretched films. Patent Document 6 discloses stretching crystallized resin films for enhancing transparency; however, sufficient polarization selectivity and light diffusion property are not attained in the stretched films. The films disclosed by Patent Documents 7 and 8 are made of two different resins and therefore a complicated manufacturing method is required, making fine adjustment of polarization characteristics and light diffusion property difficult.

There has therefore been a continuing need in the art for the development of such films which, when light is incident on the film surface, allow only a light beam with particular linear polarization to pass through and efficiently reflects a light beam with linear polarization perpendicular to that particular linear polarization, i.e., have "polarization selectivity" as well as light diffusion property. However, no films have yet been provided which are satisfactory in terms of both performance and manufacturing easiness.

It has also been demanded in the art to produce such films easily at high throughput.

An object of the present invention is to provide a film having polarization selectivity and light diffusion property, and a simple method of manufacturing the same. Another object of the present invention is to produce a film having polarization selectivity and light diffusion property at high throughput. Still another object of the present invention is to provide, by means of the film having polarization selectivity and light diffusion property, a liquid crystal display device that can provide vivid images at wide viewing angles, i.e., a liquid crystal display device that exhibits high luminance both at a normal viewing angle and off-normal viewing angles, thereby providing a liquid crystal display device that exhibits low power consumption by virtue of increased luminance.

### Solution to Problem

The inventors found that the transmission polarization degree and transmission haze of a polarizing diffuser film can be enhanced by forming sea-island structure in which microscopic bright portions (islands) are densely distributed in a dark portion (sea) for increased number of interfaces between the islands and the sea, and that by so doing total light reflectance and reflection polarization degree can also be enhanced, whereby unwanted polarized light components can be reflected by the polarizing diffuser film and re-used as incident light (i.e., light use efficiency can be enhanced).

The inventors also found that the formation of many microscopic crystalline portions - which are turned into bright island portions by stretching - in a non-stretched crystallized sheet plays a key role in the formation of sea-island structure in which microscopic bright portions (islands) are densely distributed in a dark portion (sea). The inventors also found that a non-stretched crystallized sheet having such microscopic crystalline portions exhibits particular hue and diffusion characteristics.

Moreover, the inventors attempted to increase the crystallization rate of a film made of crystalline resin such as polyester resin by the addition of a nucleating agent. As a result, the inventors found that the addition of a particular nucleating agent resulted in the crystalline resin having increased crystallization rate without disrupting the balance between polarization property and light diffusion property, in particular polarization property, of a resultant film and thereby the manufacturing efficiency can be increased.

Further, the inventors found that liquid crystal display devices that include a polarizing diffuser film that exhibits high transmission polarization degree and moderate transmission haze, both of which are accomplished by the formation of sea-island structure in which microscopic bright portions are densely distributed in a dark portion, exhibits high luminance both at a normal viewing angle and off-normal viewing angles. The present invention has been made based on these findings.

A first aspect of the present invention relates to polarizing diffuser films given below.

[1] A polarizing diffuser film made of substantially one kind of crystalline resin having an intrinsic birefringence of 0.1 or more, wherein a total light transmittance to visible light ranges from 50% to 90%, a transmission haze to visible light ranges from 15% to 90%, and a transmission polarization degree to visible light ranges from 20% to 90%.

[2] The polarizing diffuser film according to [1], wherein the total light transmittance to visible light ranges from 50% to 80%, a total light reflectance to visible light ranges from 20% to 50%, and a reflection polarization degree to visible light ranges from 50% to 95%.

[3] The polarizing diffuser film according to [2], wherein a diffuse reflectance at 100 $\mu$m film thickness ranges from 11% to 50%.

[4] The polarizing diffuser film according to [2] or [3], wherein the polarizing diffuser film is a uniaxially-stretched resin film, a crystallinity of the uniaxially-stretched resin film ranges from 8% to 40%, a sea-island structure is observed in a TEM image of a section of the uniaxially-stretched resin film, the section cut along a direction perpendicular to a stretching direction of the uniaxially-stretched resin film, the TEM image having an image area of 77 $\mu m^2$ and a length in film thickness direction of 0.1 $\mu$m, a sea portion and island portions of the sea-island structure are made of substantially the same composition, an average particle diameter of the island portions in a binarized image of the sea-island structure ranges from 0.1 $\mu$m to 0.8 $\mu$m, and the number of the island portions is 200 to 1,200 in the TEM image having an image area of 77 $\mu m^2$.

[5] The polarizing diffuser film according to [1], wherein the polarizing diffuser film further contains an alkali metal salt of a carboxylic acid having an HLB value of 1 to 7.5 as measured by Griffin's method, and the alkali metal salt is added in an amount of 0.005 weight parts to 0.4 weight parts per 100 weight parts of the crystalline resin.

[6] The polarizing diffuser film according to [5], wherein the carboxylic acid is an aliphatic carboxylic acid.

[7] The polarizing diffuser film according to [5] or [6], wherein the carboxylic acid has one or more aromatic rings.

[8] The polarizing diffuser film according to any one of [5] to [7], wherein the alkali metal salt of the carboxylic acid is sodium montanate or sodium benzoate.

[9] The polarizing diffuser film according to [1], wherein the polarizing diffuser film further contains a compound having barbituric acid structure having formula (I) or (II) below, and the compound having formula (I) or (II) is added in an amount of 0.005 weight parts to 10 weight parts per 100 weight parts of the crystalline resin,

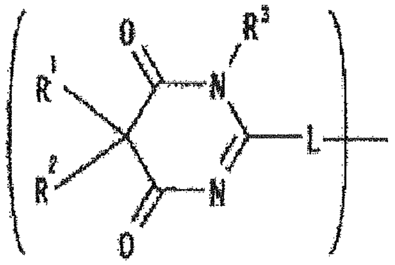

···(I)

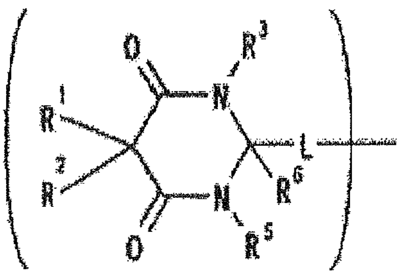

···(II)

where $R^1$-$R^3$ of formula (I) and $R^1$-$R^3$ and $R^5$-$R^6$ of formula (II) independently represent hydrogen, substituted or non-substituted $C_1$-$C_{10}$ alkyl group, substituted or non-substituted $C_1$-$C_{10}$ alkoxy group, substituted or non-substituted $C_3$-$C_{30}$ cyclic group, or -NH-$R^4$ (where $R^4$ represents the same group as $R^1$ or a $C_2$-$C_{20}$ carboxylic acid derivative); and L represents oxygen atom or sulfur atom.

[10] The polarizing diffuser film according to [1], wherein the polarizing diffuser film further contains a benzoic acid hydrazide compound having formula (III) below or an isocyanurate compound having formula (IV) below, and the compound having formula (III) or (IV) is added in an amount of 0.005 weight parts to 10 weight parts per 100 weight parts of the crystalline resin,

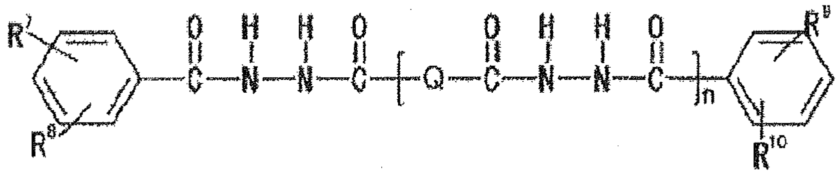

···(III)

where Q represents $C_1$-$C_{12}$ alkylene group, $C_2$-$C_{12}$ alkenylene group, $C_3$-$C_8$ cycloalkylene group, $C_4$-$C_{20}$ alkylene group having an ether bond, or $C_5$-$C_{20}$ alkylene group having a cycloalkylene group; n represents an integer of 0 or 1; $R^7$-$R^{10}$ independently represent hydrogen atom, hydroxy group, halogen atom, $C_2$-$C_{22}$ alkyl group, $C_3$-$C_8$ cycloalkyl group, $C_6$-$C_{18}$ aryl group, $C_7$-$C_{20}$ arylalkyl group, or $C_7$-$C_{20}$ alkylaryl; and $R^7$ and $R^8$, or $R^9$ and $R^{10}$ may be linked together to form a 5-membered or 8-membered ring,

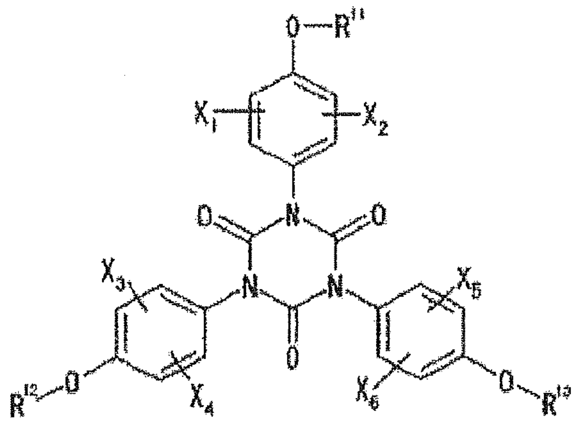

···(IV)

where $R^{11}$-$R^{13}$ independently represent hydrogen atom, $C_1$-$C_{10}$ alkyl group, $C_2$-$C_{10}$ alkenyl group, or $C_2$-$C_{10}$ acyl group; and $X_1$-$X_6$ independently represent hydrogen atom, $C_1$-$C_8$ alkyl group, $C_3$-$C_8$ cycloalkyl group, $C_6$-$C_{18}$ aryl group, or $C_7$-$C_{12}$ arylalkyl group.

[11] The polarizing diffuser film according to [1], wherein the polarizing diffuser film further contains a metal salt of sulfonamide compound having formula (V) below, and the compound having formula (V) is added in an amount of 0.005 weight parts to 10 weight parts per 100 weight parts of the crystalline resin,

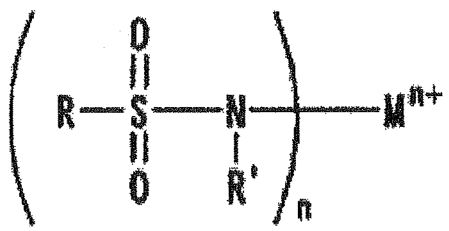

···(V)

where R and R' independently represent hydrogen atoms, halogen atom, alkali metal atom, amino group, substituted or non-substituted $C_1$-$C_{10}$ alkyl group, substituted or non-substituted $C_1$-$C_{10}$ alkoxy group, or substituted or non-substituted $C_3$-$C_{30}$ cyclic group; R and R' may be linked together to form a ring; n represents an integer of 1 or 2; when n is 1, M represents an alkali metal atom or $Al(OH)_2$; when n is 2, M represents a divalent metal atom, Al(OH) or linking group selected from $C_1$-$C_{12}$ alkylene group, $C_2$-$C_{12}$ alkenylene group, $C_3$-$C_8$ cycloalkylene group, $C_4$-$C_{20}$ alkylene group having an ether bond, $C_5$-$C_{20}$ alkylene group including cycloalkylene group, and/or $C_6$-$C_{12}$ arylene group; and when M represents the linking group, R' represents the alkali metal atom.

[12] The polarizing diffuser film according to [11], wherein M in formula (V) represents the alkali metal atom.

[13] The polarizing diffuser film according to any one of [2] to [12], wherein the transmission polarization degree at 100 μm film thickness ranges from 30% to 90%.

[14] The polarizing diffuser film according to any one of [2] to [13], wherein a crystallinity ranges from 8% to 40%.

[15] The polarizing diffuser film according to any one of [2] to [14], wherein the crystalline resin is polyester resin, aromatic polyether ketone resin, or liquid crystalline resin.

[16] The polarizing diffuser film according to any one of [2] to [15], wherein the crystalline resin is polyethylene terephthalate.

[17] The polarizing diffuser film according to any one of [2] to [16], wherein at least one side of the polarizing diffuser film has light condensable surface shape.

[18] The polarizing diffuser film according to [17], wherein the light condensable surface shape is a surface shape of the light polarizing diffuser film or a surface shape of a resin layer attached to a surface of the light polarizing diffuser film.

[19] The polarizing diffuser film according to [17 or [18], wherein the light condensable surface shape is one-dimensional prism, two-dimensional prism or microlens.

A second aspect of the present invention relates to methods of manufacturing a polarizing diffuser film given below.

[20] A method of manufacturing the polarizing diffuser film according to [1], including: preparing an amorphous sheet made of substantially one kind of crystalline resin having an intrinsic birefringence of 0.1 or more; preparing, from the amorphous sheet, a crystallized sheet, diffuse light from the crystallized sheet having a value of -25 to -10 in terms of b* value in the CIE L*a*b* space as measured in accordance with JIS Z8722 and JIS Z8729; and stretching the crystallized sheet mainly uniaxially.

[21] A method of manufacturing the polarizing diffuser film according to [1], including: preparing an amorphous sheet made of substantially one kind of crystalline resin having an intrinsic birefringence of 0.1 or more; preparing, from the amorphous sheet, a crystallized sheet having a D2/D1 ratio of 1.5 or more, where D1 is a less wavelength-dependent light scattering ratio and is derived from Equations (1A), (1B) and (2), and D2 is a wavelength-dependent light scattering ratio and is derived from Equations (1A), (1B) and (3); and stretching the crystallized sheet mainly uniaxially,

$$-\frac{1}{t}\mathrm{Ln}\ (T^*/100) = \frac{k}{\lambda^4} + C \quad \cdots (1A)$$

$$T^* = \frac{T_{para}}{T_{total}/100 + R_d/100} \quad \cdots (1B)$$

where T* is non-scattering ratio, λ is wavelength (nm), Ttotal is total light transmittance, Tpara is parallel light transmittance, and Rd is diffuse reflectance,

$$D1 = \{1 - \exp(-C \cdot t')\} \times 100 \quad \cdots (2)$$

where D1 is less wavelength-dependent light scattering ratio, C is scattering coefficient for less wavelength-dependent light scattering, and t' is thickness (μm) of crystallized sheet,

$$D2 = \{1 - \exp(-\frac{k}{\lambda^4} \cdot t')\} \times 100 \quad \cdots (3)$$

where D2 is wavelength-dependent light scattering ratio, k is scattering coefficient, and t' is thickness (μm) of crystallized sheet.

[22] A method of manufacturing the polarizing diffuser film according to any one of [2] to [4], including: preparing a crystallized sheet by heating an amorphous sheet made of substantially one kind of crystalline resin having an intrinsic birefringence of 0.1 or more; and stretching the crystallized sheet mainly uniaxially.

[23] A method of manufacturing the polarizing diffuser film according to any one of [5] to [8], including: preparing a crystallized sheet by heating an amorphous sheet made of substantially one kind of crystalline resin having an intrinsic birefringence of 0.1 or more, the amorphous sheet further containing the alkali metal salt of the carboxylic acid having an HLB value of 1 to 7.5 as measured by Griffin's method; and stretching the crystallized sheet mainly uniaxially.

[24] A method of manufacturing the polarizing diffuser film according to any one of [9] to [12], including: preparing a crystallized sheet by heating an amorphous sheet made of substantially one kind of crystalline resin having an intrinsic birefringence of 0.1 or more, the amorphous sheet further containing the compound having any one of formulas (I) to (V); and stretching the crystallized sheet mainly uniaxially.

[25] The method according to any one of [20] to [24], wherein the amorphous sheet is heated to a crystallinity of 3% or higher at temperature T1 satisfying Equation (4),

$$Tc\text{-}40^{\circ}C \leq T1 < Tm\text{-}10^{\circ}C \ \ldots \ \text{Equation (4)}$$

where Tc is crystallization temperature of the crystalline resin, and Tm is melting point of the crystalline resin.
[26] The method according to any one of [20] to [25], wherein the crystallized sheet has a transmission haze to visible light ranging from 7% to 70% and a crystallinity ranging from 3% to 20%.
[27] The method according to any one of [20] to [26], wherein heating time of the amorphous sheet ranges from 5 seconds to 20 minutes.

A third aspect of the present invention relates to liquid crystal display devices given below.
[28] A liquid crystal display device including in order: a surface light source A for backlight unit; one or more optical devices B and/or air gap B; the polarizing diffuser film C according to claim 1; and a liquid crystal panel D formed of a liquid crystal cell sandwiched by two or more polarizing plates, wherein a ratio of transmission polarization degree to transmission haze of the polarizing diffuser film C is 1.6 or more, and a 30° luminance ratio measured in accordance with TCO'03 Displays ranges from 1.40 to 1.73.
[29] The liquid crystal display device according to [28], wherein the polarizing diffuser film C has a total light transmittance to visible light ranging from 50% to 75%, a transmission haze to visible light ranging from 15% to 45%, and a transmission polarization degree to visible light ranging from 30% to 90%.
[30] The liquid crystal display device according to [28] or [29], wherein the transmission haze of the polarizing diffuser film C ranges from 15% to 38%.
[31] The liquid crystal display device according to any one of [28] to [30], wherein a normal-direction luminance of the liquid crystal device, expressed relative to a normal-direction luminance of a reference liquid crystal display, arbitrarily set at 100, ranges from 100 to 140, the reference liquid crystal display being identical to the liquid crystal display device except for the absence of the polarizing diffuser film C. [32] The liquid crystal display device according to any one of [28] to [31], wherein at least one of the optical devices B is placed adjacent to the polarizing diffuser film C, the optical device B placed adjacent to the polarizing diffuser film C has light condensable surface shape, the light condensable surface shape is one or more shapes selected from one-dimensional prism, two-dimensional prism and microlens, and a normal-direction luminance of the liquid crystal device, expressed relative to a normal-direction luminance of a reference liquid crystal display, arbitrarily set at 100, ranges from 100 to 110, the reference liquid crystal display being identical to the liquid crystal display device except for the absence of the polarizing diffuser film C.
[33] The liquid crystal display device according to any one of [28] to [32], wherein the polarizing diffuser film C is a uniaxially-stretched resin film, a crystallinity of the polarizing diffuser film C ranges from 8% to 40%, a transmission haze to visible light of the uniaxially-stretched resin film at 100$\mu$m film thickness ranges from 10% to 40%, a bright-dark structure is observed in a TEM image of a section of the uniaxially-stretched resin film, the section cut along a direction perpendicular to a stretching direction of the uniaxially-stretched resin film, the TEM image having an image area of 77 $\mu m^2$ and a length in film thickness direction of 0.1 $\mu$m, and bright portions and dark portions in the bright-dark structure are made of substantially the same composition.
[34] The liquid crystal display device according to any one of [28] to [33], wherein a crystallinity of the polarizing diffuser film C ranges from 8% to 40%, when a section of the polarizing diffuser film C is observed by polarization microscopy under crossed Nicol polarizers while being irradiated with polychromatic light for observation, bright portions and dark portions are observed, the bright portions and the dark portions are made of substantially the same composition, and the bright portions have longitudinal axes running substantially in parallel to one another.

[35] A liquid crystal display device including in order: a surface light source A for backlight unit; one or more optical devices B and/or air gap B; the polarizing diffuser film C according to any one of [2] to [19]; and a liquid crystal panel D formed of a liquid crystal cell sandwiched by two or more polarizing plates.
[36] The liquid crystal display device according to any one of [28] to [35], wherein the polarizing diffuser film C is placed adjacent to the liquid crystal panel D.
[37] The liquid crystal display device according to any one of [28] to [36], wherein the polarizing diffuser film C also functions as a light source-side protection film of the polarizing plates of the liquid crystal display panel D.
[38] The liquid crystal display device according to any one of [28] to [37], wherein a reflection axis of the polarizing diffuser film C and an absorption axis of one or more of the polarizing plates of the liquid crystal display panel D, the polarizing plates placed on a light-source side, are aligned substantially in the same direction.

Advantageous Effects of Invention

The present invention can provide a film having polarization selectivity and light diffusion property, and a simple method of manufacturing the same. The present invention also makes it possible to manufacture a film having polarization selectivity and light diffusion property at a high manufacturing efficiency.

Using a polarizing diffuser film having high total light reflectance and high reflection polarization degree, unwanted polarized light components can be reflected by the polarizing diffuser film and re-used as incident light.

Moreover, using a polarizing diffuser film having high transmission polarization degree and moderate transmission haze, it is possible to provide a liquid crystal display device that exhibits high luminance both at a normal viewing angle and at off-normal viewing angles..

Brief Description of Drawings

FIG.1A illustrates an example of a TEM image of a section of a polarizing diffuser film cut along the direction perpendicular to the stretching direction;
FIG.1B illustrates a binarized image of the TEM image of FIG.1A;
FIG.2 illustrates a polarization microscopy image of a section of a polarizing diffuser film of the present invention cut along the stretching direction;
FIG.3 is a schematic illustration of an example of a melt extrusion molding machine;
FIG.4 illustrates an example of a surface shape of a polarizing diffuser film;
FIG.5 illustrates another example of a surface shape of a polarizing diffuser film;
FIG.6 illustrates still another example of a surface shape of a polarizing diffuser film;
FIG.7 illustrates an example of a configuration of a liquid crystal display device;
FIG.8 illustrates another example of a configuration of a liquid crystal display device;
FIG.9 is an explanatory illustration of a display mechanism of a liquid crystal display device;
FIG.10A is an example of a TEM image of a section of a polarizing diffuser film prepared in Example cut along the direction perpendicular to the stretching direction;
FIG.10B is a binarized image of the TEM image of FIG.10A;
FIG.11A is an example of a TEM image of a section of a polarizing diffuser film prepared in Example cut along the direction perpendicular to the stretching direction;
FIG.11B is a binarized image of the TEM image of FIG.11A;
FIG.12A is an example of a TEM image of a section of a polarizing diffuser film prepared in Example cut along the direction perpendicular to the stretching direction;
FIG.12B is a binarized image of the TEM image of FIG.12A;
FIG.13A is an example of a TEM image of a section of a polarizing diffuser film prepared in Example cut along the direction perpendicular to the stretching direction;
FIG.13B is a binarized image of the TEM image of FIG.13A;
FIG.14 is an explanatory illustration of a method of measuring a the luminance of a liquid crystal display device at 30 angle;
FIG.15A is a sectional TEM image (end view) of a polarizing diffuser film in the vicinity of its heating roll-side surface;
FIG.15B is a sectional TEM image (end view) of a polarizing diffuser film in the vicinity of its air-side surface; and
FIG.16 is an optical microscopic image of a surface of a surface light diffuser layer of a polarizing diffuser film.

Description of Embodiments

1. Polarization diffuser film

A polarizing diffuser film refers to a film which exhibits both "polarization selectivity" and "light diffusion property." Polarization selectivity refers to the film’s property to allow more of a light beam with particular linear polarization to pass through than a light beam with linear polarization perpendicular to that particular polarization, and reflect more of the latter than the former. Light diffusion property refers to the film’s property to allow a light beam to diffuse through the film. Specifically, a polarizing diffuser film allows a light beam with particular linear polarization to pass through and diffuse, and can reflect a light beam with polarization perpendicular to the particular linear polarization back to the light-incident side.

(Total light transmittance)

The polarizing diffuser film has a certain degree of "total light transmittance" or "total light reflectance" to visible light. A polarizing diffuser film of the present invention preferably has total light transmittance to visible light of 50% or more, more preferably 55% or more, further preferably 65% or more. Preferably, total light transmittance is as high as possible, but it is generally 90% or less, preferably 80% or less, more preferably 75% or less, in view of the occurrence of light reflections on both sides of the film. However, total light transmittance can be enhanced by providing antireflection films or the like.

By setting total light transmittance at 50% or more, liquid crystal display devices equipped with a polarizing diffuser film of the present invention can exhibit high luminance by the effects of polarization selectivity (polarization reflectivity) and light diffuser property without sacrificing the luminance.

In the present invention, total light transmittance to visible light is luminous total light transmittance which can be calculated through the following procedure:

1) A depolarizing plate is placed in front of the sample holder at the input port of the integrating sphere of a spectrophotometer, allowing light to travel to the depolarzing plate surface in the normal direction thereof. This allows non-polarized light to be perpendicularly incident on a surface of a polarizing diffuser film set as a test sample. Light beams with wavelengths of 380-780 nm, which passed through the depolarizing plate, are incident on the film surface, for measurement of total light transmittance at every 10 nm wavelength.
2) In accordance with JIS R-3106, averaged luminous total light transmittance (Ttotal) is calculated using the total light transmittance data obtained in 1).
3) The calculated total light transmittance (Ttotal) may be converted to Ttotal@100μm, which corresponds to total light transmittance (Ttotal) measured at thickness t of 100μm. Specifically, Ttotal@100μm may be found using the following equation:

$$\mathrm{Ttotal}\ @100\mu\mathrm{m} = 100 \times \exp\left\{\frac{100}{t}\ \mathrm{Ln}\left(\frac{\mathrm{Ttotal}}{100}\right)\right\} \cdots \textbf{Equation (1)}$$

Even when the light used for spectrophotometric analysis is somewhat polarized, the depolarizing plate can convert it into randomly polarized light; thus, the film's true performance can be evaluated. Alternatively, when such a depolarizing plate is not used, total light transmittance (Ttotal) can be calculated as follows.

1) Light beams with wavelengths of 380-780nm are incident on the film surface for measurement total light transmittance at 10nm wavelength intervals.
2) The film is rotated 90° in the same plane, and total light transmittance is similarly measured as in step 1).
3) The total light transmittance values at respective wavelengths in 1) and 2) are averaged to find mean total light transmittance. Averaged luminous total light transmittance (Ttotal) is then calculated from the averaged total light transmittance.

(Total light reflectance)

The polarizing diffuser film preferably has a total light reflectance of 20% or more to visible light, more preferably 25% or more. Total light reflectance is at most 50% because when total light reflectance to visible light is too high, polarized light components that should pass through the polarized diffuser film are excessively reflected. On the other hand, when total light reflectance to visible light is less than 20%, less unwanted polarized light components are reflected by the polarized diffuser film, resulting in low re-use efficiency of the reflected light.

Total light reflectance to visible light (Rtotal) can be measured through the following procedure:

1) A depolarizing plate is placed in front of the sample holder at the input port of the integrating sphere of a spectrophotometer, allowing light to travel to the depolarizing plate surface in the normal direction thereof. This allows non-polarized light to be perpendicularly incident on a surface of a polarizing diffuser film set as a test sample.
2) A film is attached to a sample holder, and total light reflectance to non-polarized light is measured. A standard white plate (perfect reflecting diffuser plate made of alumina) is attached to the holder.

3) Light beams with wavelengths of 380-780 nm, which passed through a depolarizing plate, are then incident on the film surface for measurement of total light reflectance at every 10 nm wavelength.

2) In accordance with JIS R-3106, averaged luminous total light reflectance (Rtotal) is calculated using the obtained total light reflectance data.

(Transmission polarization degree)

One example of a measure of the polarization selectivity of the polarizing diffuser film is "transmission polarization degree" or "reflection polarization degree." Transmission polarization degree of a film is a measure which indicates the film's property to selectively allow polarized light beam V or polarized light beam P with polarization perpendicular to that of polarized light beam V to pass through. Specifically, a polarizing diffuser film of the present invention, which includes a uniaxially stretched resin film as will be described later, has a property to selectively allow more of polarized light beam V with polarization perpendicular to the stretching direction (stretch axis) to pass through than polarized light beam P with polarization parallel to the stretching direction (stretch axis). As used herein "reflection axis" or stretch axis refers to an axis where reflection of a polarized light beam with linear polarization parallel to that axis is favored over reflection of a polarized light beam with polarization perpendicular to that axis.

Transmission polarization degree is found using the equation given below. In the equation, Tv is total light transmittance (%) to polarized light beam V with polarization perpendicular to the stretch axis, and "Tp" is total light transmittance (%) to polarized light beam P with polarization parallel to the stretch axis.

$$\text{Transmission polarization degree (\%)} = \left( \frac{T_V - T_P}{T_V + T_P} \right)^{1/2} \times 100 \quad \cdots \text{Equation (2)}$$

A polarizing diffuser film of the present invention preferably has a transmission polarization degree to visible light of 20% or more, more preferably 30% or more, further preferably 40% or more, yet further preferably 50% or more. The transmission polarization degree to visible light is 90% or less in view of balancing with light diffusion property. The transmission polarization degree to visible light is 80% or less in view of balancing with transmittance.

For a polarizing diffuser film of the present invention, "transmission polarization degree per unit film thickness" is also an important parameter. If the transmission polarization degree per unit film thickness is too low, it may result in the necessity to excessively increase film thickness in order to ensure film's performance. Too high film thickness is undesirable from the viewpoint of film handleability and resin amount required. Thus, transmission polarization degree at the film thickness t of 100μm, or transmission polarization degrce@100μm, is preferably 30% or more, more preferably 35% or more, further preferably 40% or more. Transmission polarization degree @100μm is 90% or less in view of balancing with light diffusion property. Transmission polarization degree@100μm is found by calculating Tv and Tp at 100 μm film thickness (Tv@100μm and Tp@100μm) using the following Equations (3) and (4) and by substituting Tv@200μm and Tp@100μm into the following Equation (5).

$$Tv@100\mu m = 100 \times \exp\left\{ \frac{100}{t} \operatorname{Ln}\left( \frac{Tv}{100} \right) \right\} \quad \cdots \text{Equation (3)}$$

$$Tp@100\mu m = 100 \times \exp\left\{ \frac{100}{t} \operatorname{Ln}\left( \frac{Tp}{100} \right) \right\} \quad \cdots \text{Equation (4)}$$

$$\text{Transmission polarization degree@100}\mu\text{m(\%)} = \left[\frac{Tv@100\mu m - Tp@100\mu m}{Tv@100\mu m + Tp@100\mu m}\right]^{1/2} \times 100 \quad \cdots \text{Equation (5)}$$

In particular, when applying the polarizing diffuser film to liquid crystal display devices, it is preferable that total light transmittance Tv to polarized light beam V be at least 10% higher than total light transmittance Tp to polarized light beam P. This allows for better display characteristics in the liquid crystal display device.

Measurement of transmission polarization degree can be made through the following procedure:

1) A polarizing plate is placed in front of the sample holder of the integrating sphere of a spectrophotometer, allowing light from the light source to be emitted in the normal direction to the polarizing plate surface. With this configuration, a linearly polarized light beam with polarization perpendicular to the absorption axis of the polarizing plate can be incident on the set film.
2) A test film is placed in intimate contact with the polarizing plate, and total light transmittance to the incident linearly polarized light beam is measured as follows.
3) Firstly, the stretch axis of the film is made in parallel to the polarization of the incident linearly polarized light beam. Linearly polarized light beams with wavelengths of 380-780nm are incident on the film for measurement of total light transmittance at every 10nm wavelength. The measured value is divided by the value of total light transmittance of the polarizing plate, and then total light transmittance Tp to the polarized light with polarization parallel to the stretch axis is calculated in accordance with JIS-R3106. The total light transmittance Tp thus calculated may be converted into Tp@100μm.
4) The film is rotated 90° in the same plane so that the stretch axis is made perpendicular to the polarization of the linearly polarized light beam incident thereto. As in step 3), linearly polarized light beams with wavelengths of 380-780nm are incident on the film for measurement of total light transmittance at every 10nm wavelength. As in step 3), the measured value is divided by the value of total light transmittance of the polarizing plate, and then total light transmittance Tv to the polarized light with polarization perpendicular to the stretch axis is calculated in accordance with JIS-R3106. The total light transmittance Tv thus calculated may be converted into Tv@100μm.
5) Total light transmittances Tp and Tv, or Tp@100μm and Tv@100μm thus obtained are substituted into Equation (2) or (5) to find transmission polarization degree.

(Reflection polarization degree)

Reflection polarization degree of a film is a measure which indicates the film's property to selectively reflect light beam V or polarized light beam P with polarization perpendicular to that of polarized light beam V. A polarizing diffuser film of the present invention, which includes a uniaxially-stretched resin film as will be described later, has a property to selectively reflect more of polarized light beam P with polarization parallel to the stretching direction (stretch axis) than polarized light beam V with polarization perpendicular to the stretching direction (stretch axis). Namely, this is substantially equivalent to a property to selectively allow more of polarized light beam V with polarization perpendicular to the stretch axis to pass through than polarized light beam P with polarization parallel to the stretch axis. Thus, transmission polarization degree tends to increase with increasing reflection polarization degree.

Reflection polarization degree is found using the equation given below as with transmission polarization degree. In this equation, "Rv" is total light reflectance (%) to polarized light beam V with polarization perpendicular to the stretch axis, and "Rp" is total light reflectance (%) to polarized light beam P with polarization parallel to the stretch axis.

$$\text{Reflection polarization degree (\%)} = \left[\frac{R_P - R_V}{R_P + R_V}\right]^{1/2} \times 100 \quad \cdots \text{Equation (6)}$$

Measurement of Rp and Rv may be made through the following procedure:

1) A polarizing plate is placed in front of the sample holder at the input port of the integrating sphere of a spectrophotometer, allowing light from the light source to be emitted in the normal direction to the polarizing plate surface.

With this configuration, a linearly polarized light beam with polarization perpendicular to the absorption axis of the polarizing plate can then be incident on a film set as a test sample. Prior to attachment of the film, a base line is previously measured in a state where a perfect reflecting diffuser plate made of alumina is attached. This allows for direct measurement of reflectance in percentage relative to incident linearly polarized light that passed through a polarizing plate.

2) The film is attached to a sample holder to measure total light reflectance with respect to linearly polarized light as follows:

3) Firstly, the stretch axis of the film is made in parallel to the polarization of the incident linearly polarized light beam. Linearly polarized light beams with wavelengths of 380-780 nm are incident on the film surface for the measurement of total light reflectance at every 10nm wavelength. Using the measured values, total light reflectance Rp to the polarized light with polarization parallel to the stretch axis is calculated in accordance with JIS-R3106.

4) The film is then rotated 90° in the same plane so that the stretch axis is made perpendicular to the polarization of the linearly polarized light beam incident thereto. As in step 3), linearly polarized light beams with wavelengths of 380-780 nm are incident on the film for the measurement of total light reflectance at every 10nm wavelength. As in step 3), using the measured values, total light reflectance Rv to the polarized light with polarization perpendicular to the stretch axis is calculated in accordance with JIS-R3106.

A polarizing diffuser film of the present invention preferably has a reflection polarization degree to visible light of 50% to 95%, more preferably 65% to 95%. This is because a reflection polarization degree to visible light of less than 50% tends to reduce total light reflectance as well as transmission polarization degree.

(Transmission haze)

One example of a measure of the light diffusion property of the polarizing diffuser film is "transmission haze" which is a haze value of the film for transmitted light. A polarizing diffuser film of the present invention preferably has a transmission haze to visible light of 15% or more, more preferably 25% or more, in order to avoid non-uniform light distribution for uniform luminance when the film is used as a light diffuser film of a liquid crystal display device. It is also preferable that the transmission haze be 90% or less because a polarizing diffuser film with high transmission haze exhibits good light diffusion property, but too high transmission haze causes luminance reduction due to light loss or other cause.

For a polarizing diffuser film of the present invention, "transmission haze per unit film thickness" is also an important parameter. If transmission haze per unit film thickness is too low, it may result in the necessity to excessively increase film thickness in order to ensure film's performance. This is undesirable from the viewpoint of film handleability and resin amount required. On the other hand, if transmission haze per unit film thickness is too high, a polarizing diffuser film of desired thickness exhibits too high transmission haze, which may cause luminance reduction in the liquid crystal display device due to light loss or other cause. Thus, transmission haze at 100 μm film thickness, or transmission haze@100μm, is preferably 10% to 90%, more preferably 15% to 80%.

Transmission haze and transmission haze@100μm may be measured through the following procedure:

1) A depolarizing plate is placed in front of the sample holder of a spectrophotometer at the input port, allowing light from the light source to travel to the depolarizing plate surface in the normal direction thereof. This allows non-polarized light to be perpendicularly incident on a surface of a polarizing diffuser film set as a test sample. Light beams with wavelengths of 380-780 nm, which passed through the depolarizing plate, are incident on the film surface for measurement of parallel light transmittance at every 10nm wavelength.

2) In accordance with JIS R-3106, averaged luminous parallel light transmittance (Tpara) is calculated using the parallel light transmittance data obtained in step 1).

3) Transmission haze is found by substituting parallel light transmittance (Tpara) in 2) and total light transmittance (Ttotal) into the following Equation (7).

4) Parallel light transmittance (Tpara) obtained in step 2) is converted to parallel light transmittance at 100μm film thickness, Tpara@100μm. Specifically, Tpara@100μm may be found using the following Equation (8).

5) Transmission haze at 100μm film thickness (transmission haze@100μm) is then found by substituting Tpara@100μm in step 4) and Ttotal@100μm into the following Equation (9).

$$\text{Transmission haze} = 100 \times (1 - \text{Tpara} / \text{Ttotal}) \quad \cdots \text{Equation (7)}$$

$$\text{Tpara@100µm} = 100 \times \exp\left\{\frac{100}{t}\,\mathrm{Ln}\left(\frac{\text{Tpara}}{100}\right)\right\} \quad \cdots \text{Equation (8)}$$

$$\text{Transmission haze@100µm} = 100 \times (1 - \text{Tpara@100}\mu\text{m} / \text{Ttotal@100}\mu\text{m}) \quad \cdots \text{Equation (9)}$$

Alternatively, transmission haze can be simply measured with a commercially available haze meter. In this case, a depolarizing plate is placed in front of the sample holder of the haze meter at the input port, allowing light from the light source to travel to the depolarizing plate surface in the normal direction thereof. This allows non-polarized light to be perpendicularly incident on a surface of the film set as a test sample.

As will be described later, in order to ensure a good balance between normal-direction luminance and oblique-direction luminance of a liquid crystal display device, it is preferable to adjust the transmission haze of a polarizing diffuser film included therein to fall within the range specified below. More specifically, the polarizing diffuser film preferably has a transmission haze of 45% or less, more preferably 38% or less. This is because a polarizing diffuser film with excessively high transmission haze exhibits strong light diffusion property and thus causes light travelling in the normal direction to the screen surface, emitted from the backlight light source and optical devices disposed directly above the backlight, to be excessively diffused, thus reducing the normal-direction luminance of the liquid crystal display device. On the other hand, the polarizing diffuser film preferably has a transmission haze of 15% or more, more preferably 25% or more. This is because a transmission haze of less than 15% results in the liquid crystal display device having reduced oblique-direction luminance. Transmission haze at 100 μm film thickness, or transmission haze@100μm, is preferably 10% to 40%, more preferably 15% to 30%.

On the other hand, by increasing the transmission polarization degree of the polarizing diffuser film for enhanced polarization selectivity, it is possible for a liquid crystal display device to exhibit high normal-direction luminance even when the film has relatively high transmission haze. Specifically, as will be described later, it is possible to increase the oblique-direction luminance (or reduce the 30° luminance ratio (to be described in detail later)) while keeping the relative normal-direction luminance at 100 or higher. Namely, as a means of increasing the oblique-direction luminance while keeping the relative normal-direction luminance at 100 or higher, a ratio of transmission polarization degree to transmission haze (value obtained by dividing transmission polarization degree by transmission haze) is preferably 1.6 or more, more preferably 1.67 or more.

Obtaining a polarizing diffuser film having such a transmission polarization degree to transmission haze ratio may be accomplished, for example, by adjusting heating temperature (T1) and heating time in the step 2) of obtaining a crystallized sheet in the method of manufacturing a polarizing diffuser film described later, pre-heating temperature and pre-heating time prior to stretching, stretch temperature and stretch rate in the stretching step etc.

(Diffuse Reflectance)

Diffuse reflectance to visible light is a ratio of diffuse reflection light to incident visible light, and is a measure of light reflectance. Diffuse reflectance is more likely to be affected by internal film structure compared to other reflection characteristics (e.g., specular reflectance). A polarizing diffuser film of the present invention preferably has a diffuse reflectance (Rd) to visible light of 20% to 50%, more preferably 25% to 50%, further preferably 30% to 50%. When diffuse reflectance is too low, it results in less light reflection or scattering at the interface within the film, reducing the film's ability of reflecting unwanted polarized light components. On the other hand, when diffuse reflectance is too high, the polarizing diffuser film exhibits good light diffusion property, but undesirably causes excessive reflection of useful polarized light components which should pass through the film. Diffuse reflectance at 100 μm film thickness, or Rd@100μm, is preferably 11% to 50%, more preferably 18% to 50%.

Diffuse reflectance (Rd) to visible light may be measured through the following procedure.

1) A test sample is prepared by spreading colorless, transparent silicone oil (e.g., dimethylpolysiloxane) over a film (both sides) in such a way as to level out the surface. Instead of silicone oil, any other liquid may be employed as long as it is colorless and transparent and can be compatible with film surface to remove surface asperities This avoids a possible negative impact of surface morphology (asperities) on diffuse reflectance.

2) A depolarizing plate is placed in front of the input port of the integrating sphere of a spectrophotometer, allowing light to travel to the depolarizing plate surface in the normal direction thereof. This allows non-polarized light to be

perpendicularly incident on a surface of the polarizing diffuser film set as a test sample. A light trap is disposed at a position through which the light specularly reflected from the test sample passes, thereby removing specularly reflected light components. After placing the film to be measured on the sample holder (for reflectance measurement), light beams with wavelengths of 380-780 nm, which passed through the depolarizing plate, are incident on the film for measurement of diffuse reflectance at every 10nm wavelength.

3) In accordance with JIS R-3106, averaged luminous diffuse reflectance (Rd) is calculated using the diffuse reflectance data obtained in step 2).

4) The calculated diffuse reflectance (Rd) may be converted to Rd@100μm, which corresponds to diffuse reflectance (Rd) measured at film thickness t of 100μm. Specifically, Rd@100μm may be found using the following equation:

$$Rd@100\mu m = Rd \times 100/t \quad \cdots \text{Equation (10)}$$

Even when the light used for spectrophotometric analysis is somewhat polarized, the depolarizing plate can convert it into randomly polarized light, thus allowing for evaluation of the film's true performance. Alternatively, when such a depolarizing plate is not used, measurement can be made through the procedure below.

1) Light beams with wavelengths of 380-780 nm are incident on the film surface for measurement diffuse reflectance at every 10nm wavelength.

2) The film is rotated 90° in the same plane, and diffuse reflectance is measured as in step 1).

3) The values of diffuse reflectance at respective wavelengths measured in the steps 1) and 2) are averaged to find mean diffuse reflectance. An averaged luminous diffuse reflectance (Rd) is then calculated from the mean diffuse reflectance.

Total light transmittance, total light reflectance, transmission polarization degree, reflection polarization degree, transmission haze, and diffuse reflectance described above may be measured with, for example, Spectrophotometer U-4100 (Hitachi High-Technologies Corporation) optionally coupled with a 150mm-diameter integrating sphere attachment.

As described above, a polarizing diffuser film of the present invention may be characterized by three optical characteristics: "total light transmittance", "transmission polarization degree" and "transmission haze" to visible light, or by six optical characteristics: " transmission polarization degree," "reflection polarization degree," "transmission haze," "diffuse reflectance," "total light transmittance" and " total light reflectance" to visible light. In other words, in a polarizing diffuser film of the present invention, the above three or six optical characteristics are highly balanced. In particular, the polarizing diffuser film has the advantage of offering a well balance between "transmission polarization degree" and "transmission haze" or between "reflection polarization degree" and "transmission haze." These balances may be achieved by the film's crystallinity and/or mixed structure of a "relatively highly crystalline, relatively highly molecular-oriented portion" and a "relatively less crystalline, relatively less molecular-oriented portion." as will be described later.

(Crystalline resin)

A polarizing diffuser film of the present invention is a film made of substantially one kind of crystalline resin. The polarizing diffuser film is preferably a uniaxially-stretched resin film. This is because if the uniaxially-stretched resin film is a resin alloy film made of two or more different resins, the film may show an interface generated between different resin phases which are susceptible to separation. In particular, if the different resins are less compatible with each other, resin separation and therefore generation of voids become likely to occur during stretching due to weak adhesion between the resin phases. Such voids induce strong light diffusion that causes light loss; therefore, control of light diffusion property becomes difficult.

As used herein, "crystalline resin" means resin containing crystalline polymers which can have a large proportion of crystalline phase. It is preferable that crystalline resins have a certain level of intrinsic birefringence.

"Intrinsic birefringence" is a measure of polymer's molecular orientation, which can be found using the equation given below. In the equation $\Delta n°$ is intrinsic birefringence; n is average refraction index; $N_A$ is Avogadro's number; p is density; M is molecular weight; $\alpha_1$ is polarizability along the molecular chain direction; and $\alpha_2$ is polarizability along the direction perpendicular to the molecular chain direction.

$$\Delta n^\circ = (2\pi/9)\ \{(n^2+2)\ ^2/n\}\ (N_A\cdot\rho/M)(\alpha_1-\alpha_2)$$

Resins with high intrinsic birefringence undergo molecular orientation by stretching or other processing and thereby exhibit high birefringence.

Values of intrinsic birefringence of some resins are described in Japanese Patent Application Laid-Open No. 2004-35347, for example. The crystalline resins for uniaxially-stretched resin films used for the polarizing diffuser film of the present invention preferably have intrinsic birefringence of 0.1 or greater. Examples of crystalline resins having intrinsic birefringence of 0.1 or greater include polyester resins, aromatic polyetherketone resins, and liquid crystalline resins.

Specific examples of the polyester resins having intrinsic birefringence of 0.1 or greater include polyethylene terephthalate, polyethylene-2,6-naphthalate, polypropylene terephthalate and polybutylene terephthalate, with polyethylene terephthalate or polyethylene-2,6-naphthalate being preferable. Additional specific examples of the polyester resins having intrinsic birefringence of 0.1 or greater include copolymers of the foregoing polyester resins, and the foregoing polyester resins modified to contain at most 0.1mol% of a comonomer such as isophthalic acid, cyclohexandimethanol or dimethyl terephthalate.

Specific examples of aromatic polyetherketone resins having intrinsic birefringence of 0.1 or greater include polyetheretherketone. Specific examples of liquid crystalline resins having intrinsic birefringence of 0.1 or greater include polycondensate of ethylene terephthalate and p-hydroxybenzoate.

The main component of the crystalline resin having intrinsic birefringence of 0.1 or greater is preferably polyethylene terephthalate. Examples of polyethylene terephthalates include polycondensates (homopolymers) of monomer components terephthalic acid and ethylene glycol, and copolymers of terephthalic acid, ethylene glycol and other additional comonomer component(s).

Examples of comonomer components in polyethylene terephthalate copolymers include diols such as diethylene glycol, neopentyl glycol, polyalkylene glycol, 1,3-propanediol, 1,4-butanediol and 1,4-cyclohexanedimethanol; carboxylic acids such as adipic acid, sebacid acid, phthalic acid, isophthalic acid and 2,6-naphthalene dicarboxylic acid; and esters such as dimethyl terephthalate.

The comonomer content in the polyethylene terephthalate copolymer is preferably 5wt% or less. In general, comonomer components tend to inhibit crystallization; however, when the comonomer content falls within the above range, formation of "bright-dark structure" (later described) is not inhibited. Comonomer components may be relatively predominant in dark portions, which are less crystalline portions, because they tend to inhibit crystallization as noted above. It should be noted that the dark portion and bright portion may have different comonomer contents.

The polyester resins may be mixtures of homopolymers having the same monomer unit and copolymers; mixtures of homopolymers of different molecular weights; or mixtures of copolymers of different molecular weights.

The polyester resins may contain different types of resins which are compatible with the polyester resins as long as the effects of the present invention are not impaired. For example, when the polyester resin is polyethylene terephthalate, examples of such additional resins include polyethylene naphthalate and polybutylene terephthalate. It should be noted, however, that too much addition of such resins may cause resin phase separation. For this reason, the amount of such additional resin is preferably 5wt% or less based on the amount of polyethylene terephthalate. In order to fully avoid the possible phase separation between polyethylene terephthalate and different kind of resin, it is preferable to copolymerize a small amount of comonomer like naphthalene dicarboxylic acid with the polyethylene terephthalate polymer.

The polyester resins preferably have a IV value of 0.5 to 0.9, more preferably 0.6 to 0.85. The intrinsic viscosity (IV value) of resin is a measure of the contribution of one molecule of a solute (resin) to a solution's viscosity, and is found by extrapolating the solution's specific viscosity [(solution's viscosity - solvent's viscosity) / solvent's viscosity), divided by the concentration, to zero concentration. Polyester resins having small IV values have low molecular weights. Such polyester resins are soft and therefore can be stretched easily, but polyester resins having too small IV values are difficult to be extruded and thus have poor film-forming properties. For these reasons, polyester resins having IV values within the above range are easily stretched and have good film-forming properties.

The IV value of polyester resin may be found as the viscosity of a sample solution at 25°C, which is prepared by dissolving a polyester resin pellet (0.5 g) into a 50:50 weight ratio mixture of phenol and tetrachloroethane (100 ml) under heating and cooling the resultant solution.

(Nucleating agent)

As described above, a polarizing diffuser film of the present invention is made of substantially one kind of crystalline resin, but may additionally contain a trace amount of nucleating agent. A polarizing diffuser film of the present

invention is preferably obtained by uniaxially stretching a crystallized sheet made of substantially one kind of crystalline resin. The crystallized sheet may additionally contain a trace amount of a nucleating agent. Such a nucleating agent may control crystallization rate and crystal size, which mainly affects mechanical characteristics or other characteristics of the film.

The nucleating agent to be contained in a polarizing diffuser film of the present invention may be an alkali metal salt of carboxylic acid. Note that the carboxylic acid has an HLB value of 1 to 7.5 as measured by Griffin's method. When an alkali metal salt of a carboxylic acid having an HLB value falling within the above range is used as a nucleating agent, in the resultant polarizing diffuser film, sea-island structure is easily formed in which relatively highly crystalline portions (islands) are moderately dispersed in a relatively less crystalline portion (sea). A polarizing diffuser film of the present invention having such sea-island structure thus exhibits total light transmittance, transmission haze and transmission polarization degree which are remarkably well balanced. Note that the HLB value of the carboxylic acid is calculated with Griffin's method using the following equation:

$$HLB = 20 \times [(\text{sum of molecular weights of the hydrophilic portions}) / (\text{molecular mass})]$$

If the HLB value of the carboxylic acid as measured with Griffin's method is less than 1 or greater than 7.5, in the resultant polarizing diffuser film having sea-island structure in which relatively highly crystalline portions (islands) are dispersed in a relatively less crystalline portion (sea), properly dispersed islands (in terms of shape and amount) are less likely to be formed. Thus, the polarizing diffuser film tends to exhibit poor optical characteristics.

The carboxylic acid of the alkali metal salt of carboxylic acid may be either an aliphatic carboxylic acid or an aromatic carboxylic acid. Examples of the aliphatic carboxylic acid include stearic acid (octadecanoic acid, HLB value: approximately 3.2), behenic acid (docosanoic acid, HLB value: approximately 2.6), and montanic acid (octacosanoic acid, HLB value: approximately 2.0). Among them, montanic acid is preferable.

The aromatic carboxylic acid preferably has one or more aromatic rings. Examples of such an aromatic carboxylic acid include benzoic acid (HLB value: approximately 7.4), p-t-butyl benzoic acid (HLB value: approximately 5.1), and toluic acid (HLB value: approximately 6.6). Among them, benzoic acid is preferable.

Examples of the alkali metal in the alkali metal salt of carboxylic acid include lithium (Li), sodium (Na), potassium (K), rubidium (Rb), and cesium (Cs). Among them, lithium (Li) and sodium (Na) are preferable.

Suitable examples of the alkali metal salt of carboxylic acid used as the nucleating agent include sodium montanate and sodium benzoate.

The added amount of the alkali metal salt of carboxylic acid used as the nucleating agent is preferably 0.005 weight parts to 0.4 weight parts per 100 weight parts of the crystalline resin, more preferably 0.01 weight parts to 0.38 weight parts, particularly preferably 0.03 weight parts to 0.3 weight parts. A nucleating agent content of less than 0.005 weight parts may result in failure to effectively exert the agent's effect. On the other hand, a nucleating agent content of greater than 0.4 weight parts tends to reduce transmission polarization degree and transmission haze.

The nucleating agent to be contained in a polarizing diffuser film of the present invention may be, for example, a compound having barbituric acid structure, a benzoic acid hydrazide compound, an isocyanurate compound, or a metal salt of sulfonamide compound. Such a nucleating agent can effectively increase the crystallization rate of crystalline resin. Further, when such a nucleating agent is used, in the resulting polarizing diffuser film, sea-island structure is easily formed in which relatively highly crystalline portions (islands) are moderately dispersed in a relatively less crystalline portion (sea), whereby the polarizing diffuser film exhibits total light transmittance, transmission haze and transmission polarization degree which are remarkably well balanced.

The compound having barbituric acid structure preferably has the following formula (I) or (II):

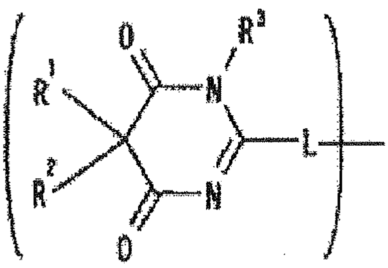

· · · (I)

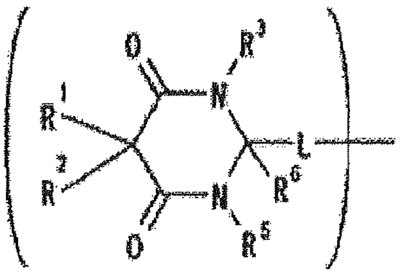

$\cdots$(II)

$R^1$-$R^3$ of formula (I) and $R^1$-$R^3$ and $R^5$-$R^6$ of formula (II) independently represent hydrogen; substituted or non-substituted $C_1$-$C_{10}$ alkyl group such as methyl group, ethyl group, propyl group, isopropyl group or butyl group; substituted or non-substituted $C_1$-$C_{10}$ alkoxy group such as methyoxy group, ethyloxy group, propyloxy group, isopropyloxy group or butyloxy group; substituted or non-substituted $C_3$-$C_{30}$ cyclic group such as phenyl group, naphthyl group, benzyl group or cyclopentylic group; or -NH-$R^4$ (where $R^4$ represents the same group as $R^1$ or a $C_2$-$C_{20}$ carboxylic acid derivative such acetate, acrylate or fumarate). $R^1$-$R^3$ preferably represent butyl group, cyclopentyl group or benzyl group. $R^5$ and $R^6$ preferably represent hydrogen atom. L represents oxygen atom or sulfur atom.

The compound having formula (I) preferably has the following formula (I-II), and the compound having formula (II) preferably has the formula (II-II) or (II-III) given below. In the formulas below, $R^1$ to $R^3$, $R^5$, $R^6$ and L are defined as above, and M represents, for example, an alkali metal atom or alkali earth metal atom, preferably sodium atom. Specific compounds having these formulas may be those disclosed in, for example, JP-A No.2008-007593.

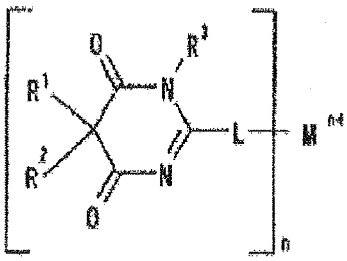

$\cdots$(I-II)

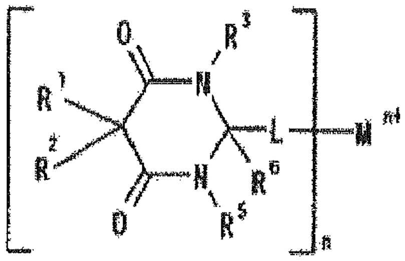

$\cdots$(II-II)

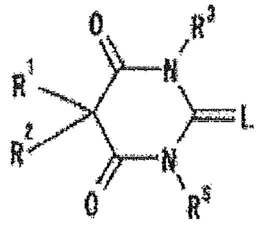

$\cdots$(II-III)

The benzoic acid hydrazide compound preferably has the following formula (III):

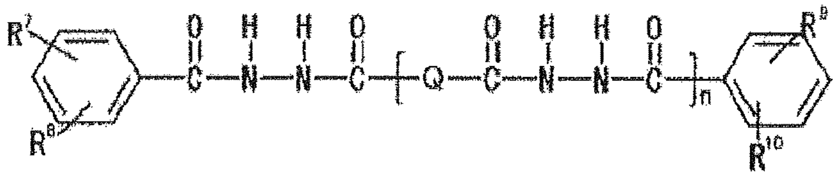

···(III)

In formula (III) Q represents $C_1$-$C_{12}$ alkylene group such as methylene group, ethylene group, propylene group, butenylene group, pentylene group, hexylene group or octylene group; $C_2$-$C_{12}$ alkenylene group such as ethenylene group or propenylene group; $C_3$-$C_8$ cycloalkylene group such as cyclohexylene group; $C_4$-$C_{20}$ alkylene group having an ether bond, such as diethylether or dipropylether; or $C_5$-$C_{20}$ alkylene group having a cycloalkylene group, such as methylcyclohexylmethyl group, and preferably represents $C_4$-$C_{10}$ alkylene group, more preferably $C_6$-$C_{10}$ alkylene group. n represents an integer of 0 or 1.

In formula (III) $R^7$-$R^{10}$ independently represent hydrogen atom; hydroxy group; halogen atom; $C_1$-$C_{12}$ alkyl group such as methyl group, ethyl group, propyl group or butyl group; $C_3$-$C_8$ cycloalkyl group such as cyclopentyl group, cyclohexyl group or cycloheptyl group; $C_6$-$C_{18}$ aryl group such as phenyl group, biphenyl group or naphthyl group; $C_2$-$C_{20}$ arylalkyl group such as benzyl group or phenylethyl group; or $C_7$-$C_{20}$ alkylaryl group such as methylphenyl group, ethylphenyl group or propylphenyl group, preferably represents hydrogen atom. $R^7$ and $R^8$, or $R^9$ and $R^{10}$ may be linked together to form a 5-membered or 8-membered ring. For example, $R^7$ and $R^8$ may form a naphthalene ring together with the benzene ring to which they are attached.

The isocyanurate compound preferably has the following formula (IV):

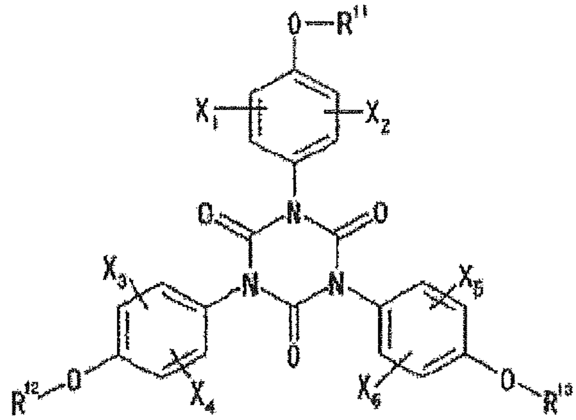

···(IV)

In formula (IV), $R^{11}$-$R^{13}$ independently represent hydrogen atom; $C_1$-$C_{10}$ alkyl group such as methyl group, ethyl group, propyl group or butyl group; $C_2$-$C_{10}$ alkenyl group such as vinyl group, propenyl group, butenyl group or pentenyl group; or $C_2$-$C_{10}$ acyl group such as acetyl group, propanoyl group or butanoyl group, and preferably represents propanoyl group.

In formula (IV), $X_1$-$X_6$ independently represent hydrogen atom; $C_1$-$C_8$ alkyl group such as methyl group, ethyl group, propyl group or butyl group; $C_3$-$C_8$ cycloalkyl group such as cyclopentyl group or cyclohexyl group; $C_6$-$C_{18}$ aryl group such as phenyl group, biphenyl group or naphthyl group; or $C_7$-$C_{12}$ arylalkyl group such as phenylmethyl group or phenylethyl group, and preferably represents hydrogen atom. Specific compounds having these formulas may be those disclosed in, for example, JP-A No.2006-249304.

The metal salt of sulfonamide compound preferably has the following formula (V):

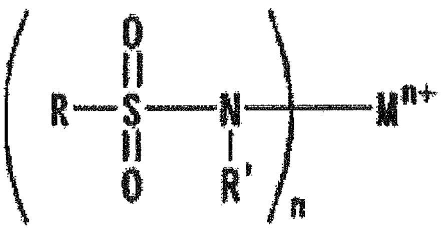

···(V)

In formula (V), R and R' independently represent hydrogen atom, halogen atom, alkali metal atom, amino group,

substituted or non-substituted $C_1$-$C_{10}$ alkyl group, substituted or non-substituted $C_1$-$C_{10}$ alkoxy group, or substituted or non-substituted $C_3$-$C_{30}$ cyclic group. R and R' may be linked together to form a ring.

Examples of the halogen atom include fluorine, chlorine, bromine, and iodine.

Examples of the substituted or non-substituted $C_1$-$C_{10}$ alkyl group include methyl group, ethyl group, propyl group, isopropyl group, butyl group, isobutyl group, s-butyl group, t-butyl group, pentyl group, isopentyl group, t-pentyl group, hexyl group, heptyl group, octyl group, isooctyl group, 2-ethylhexyl group, t-octyl group, nonyl group, and decyl group. Some of the methylene groups of the alkyl group may be substituted by, for example, ether bond, carbonyl group or carbonyloxy group. Substituents attached to the substituted alkyl groups are, for example, halogen atoms (e.g., fluorine, chlorine, bromine and iodine) and cyano group.

Examples of the substituted or non-substituted $C_1$-$C_{10}$ alkoxy group include methyloxy group, ethyloxy group, propyloxy group, isopropyloxy group, butyloxy group, s-butyloxy group, t-butyloxy group, isobutyloxy group, pentyloxy group, isopentyloxy group, t-pentyloxy group, hexyloxy group, cyclohexyloxy group, heptyloxy group, an isoheptyloxy group, t-heptyloxy group, n-octyloxy group, isooctyloxy group, t-octyloxy group, 2-ethylhexyloxy group, nonyloxy group, and decyloxy group. Some of the methylene groups of the alkoxy group may be substituted by, for example, ether bond, carbonyl group or carbonyloxy group. Substituents attached to the substituted alkoxy groups are, for example, halogen atoms (e.g., fluorine, chlorine, bromine and iodine) and cyano group

The substituted or non-substituted $C_3$-$C_{30}$ cyclic group is a moncyclic, polycyclic, condensed polycyclic or cross-linked cyclic organic group. The ring may be an aromatic ring or saturated aliphatic ring. Some of the ring carbon atoms may be substituted with oxygen, nitrogen, sulfur or other atoms. Substituents attached to the substituted cyclic ring are, for example, $C_1$-$C_5$ alkyl groups and $C_1$-$C_5$ alkoxy groups.

Examples of the substituted or non-substituted $C_3$-$C_{30}$ cyclic group include phenyl group, naphthyl group, anthracene group, biphenyl group, triphenyl group, 2-methylphenyl (o-tolyl, cresyl) group, 3-methylphenyl (m-tolyl) group, 4-methylphenyl (p-tolyl) group, 4-chlorophenyl group, 4-hydroxyphenyl group, 3-isopropylphenyl group, 4-isopropylphenyl group, 4-buthylphenyl group, 4-isobutylphenyl group, 4-t-buthylphenyl group, 4-hexylphenyl group, 4-cyclohexylphenyl group, 4-octylphenyl group, 4-(2-ethylhexyl)phenyl group, 4-stearylphenyl group, 2,3-dimethylphenyl (xylyl) group, 2, 4-dimethylphenyl group, 2,5-dimethylphenyl group, 2, 6-dimethylphenyl group, 3,4-dimethylphenyl group, 3,5-dimethylphenyl group, 2,4-di-t-buthylphenyl group, 2,5-di-t-buthylphenyl group, 2,6-di-t-buthylphenyl group, 2,4-di-t-pentylphenyl group, 2,5-di-t-pentylphenyl group, 2,5-di-t-octylphenyl group, 2, 4-dicumylphenyl group, cyclohexylphenyl group, 2,4,5-trimethylphenyl (mesityl) group, 4-aminophenyl group, 5-dimethylaminonaphthyl group, pyrrole group, furan group, thiophene group, imidazole group, pyrazole group, oxazol group, isoxazole group, thiazole group, isothiazole group, pyridine group, pyridazine group, pyrimidine group, pyrazine group, piperidine group, piperazine group, morpholine group, 6-ethoxy-benzothiazolyl group, 2,6-dimethoxy-4-pyrimidyl group, 5-methyl-1,3,4-thiadiazole-2-yl group, and 5-methyl-3-isoxazolyl group. In particular, phenyl group and naphthyl group are preferable.

In formula (V), n represents an integer of 1 or 2. When n is 1, M represents an alkali metal atom or $Al(OH)_2$. The alkali metal atom is lithium, sodium or potassium, but is preferably sodium.

When n is 2, M represents a divalent metal atom, Al(OH) or linking group. Note that when M represents a linking group, R' represents an alkali metal atom. Examples of the divalent metal atom include magnesium, calcium, strontium, barium, titanium, manganese, iron, zinc, silicon, zirconium, yttrium, barium, and hafnium.

Examples of the linking group include $C_1$-$C_{12}$ alkylene groups such as methylene group, ethylene group, propylene group, methylethylene group, butylene group, 1-methylpropylene group, 2-methylpropylene group, 1,2-dimethylpropylene group, 1,3-dimethylpropylene group, 1-methylbutylene group, 2-methylbutylene group, 3-methylbutylene group, 4-methylbutylene group, 2,4-dimethylbutylene group, 1,3-dimethylbutylene group, and pentylene group; $C_2$-$C_{12}$ alkenylene groups such as vinylene group, methylethenylene group, propenylene group, butenylene group, isobutenylene group, pentenylene group, and hexenylene group; $C_3$-$C_8$ cycloalkylene groups such as cyclopropylene, 1,3-cyclobutylene, 1,3-cyclo pentylene, 1,4-cyclohexylene, and 1,5-cyclooctylene; $C_4$-$C_{20}$ alkylene groups having an ether bond; $C_5$-$C_{20}$ alkylene groups including cycloalkylene group; and $C_6$-$C_{12}$ arylene groups. Particularly preferable examples are organic groups such as 1,4-phenylene group, 1.5-naphthalene group, 2,6-naphthalene, and biphenyl group.

More preferably, the metal salt of sulfonamide compound having formula (V) has any one of the following formulas (VI) to (VIII):

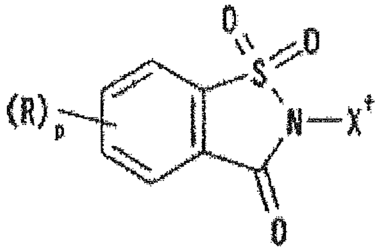

···(VI)

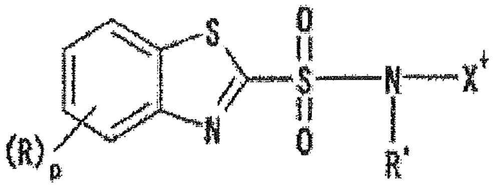

···(VII)

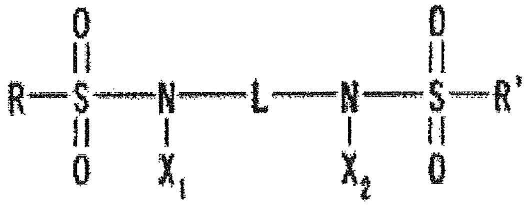

···(VIII)

In formulas (VI) to (VIII), R and R' are defined the same as those in formula (V), p represents an integer of 0 to 3, and when p is 2 or more, the Rs may be identical or different; X, $X_1$ and $X_2$ each represent an alkali metal atom; and L is defined the same as the linking group in formula (V).

Specific examples of the metal salts of sulfonamide compound having formula (VI) to (VIII) include those disclosed in, for example, JP-A Nos.2009-96833 and 2007-327028.

Among the compound having barbituric acid structure having formula (I) or (II), the benzoic acid hydrazide compound having formula (III), the isocyanurate compound having formula (IV) and the metal salt of sulfonamide compound having formula (V), it is preferable to employ the metal salt of sulfonamide compound having formula (V) as it is capable of, for example, enhancing the crystallization rate without disrupting the balance between haze and polarization degree of the resultant film.

The compound having barbituric acid structure, the benzoic acid hydrazide compound, the isocyanurate compound and the metal salt of sulfonamide compound used as a nucleating agent is added in an amount of preferably 0.005 to 10 weight parts per 100 weight parts of crystalline resin, more preferably 0.01 to 10 weight parts, further preferably 0.01 to 5 weight parts, yet further preferably 0.03 to 3 weight parts, particularly preferably 0.05 to 1 weight parts. When the nucleating agent content is less than 0.005 weight parts, it may result in failure to obtain the agent's effect sufficiently, and it is greater than 10 weight parts, the resultant film may exhibit poor optical characteristics.

Other examples of the nucleating agent to be added in the crystallized sheet include phosphoric acid, phosphorous acid and esters thereof; inorganic particles such as silica, kaolin, calcium carbonate, titanium dioxide, bariums sulfate, talc and alumina particles; and other various organic particles.

A polarizing diffuser film of the present invention may contain optional components and/or additives as long as the effects of the present invention are not impaired. The optional components may include low-molecular weight waxes, plasticizers, higher fatty acids and metal salts thereof, and the additives may include thermal stabilizers, antioxidants, antistatic agents, lubricants, light resistant agents, anti-blocking agents, thickeners, ultraviolet absorbers, fluorescent brighteners, pigments, flame retardants, and colorants for adjusting the image quality of display devices.

In particular, it is preferable in the present invention to add antioxidants because nucleating agents are added. More specifically, although addition of nucleating agents may cause hydrolysis or discoloration of polyester resin upon extrusion molding, addition of antioxidants can effectively suppress such hydrolysis or discoloration. A preferable antioxidant content ranges from 0.01wt% to 0.3wt% based on the amount of polyester resin.

The optional component and additive are added in an amount of preferably 5 wt% or less based on the weight of polyester resin. When only a trace amount (e.g., of the order of ppm) of the optional component and additive is added, they may not be necessarily compatible with the polyester resin.

The crystallinity of a uniaxially-stretched resin film made of crystalline resin in a polarizing diffuser film ranges preferably from 8% to 40% for achieving higher film size stability, more preferably from 8% to 30% for achieving higher

transmission polarization degree. The uniaxially-stretched resin film subjected to heat treatment (post-stretching heat treatment for keeping the film stretched) exhibits high crystallinity and somewhat low transmission polarization degree, but has the advantage of less optical characteristics deterioration as well as small size changes after high-temperature storage.

The crystallinity of the uniaxially-stretched resin film made of crystalline resin ranges further preferably from 11% to 29%. This is to obtain the desired levels of total light transmittance, transmission haze and polarization selectivity as noted above.

The crystallinity can be measured by, for example, the density method or X-ray diffractometry; however, it is measured by the density method in the present invention. The density method is a method of measuring crystallinity based on resin density. Reference resin density is described in, for example, R.de.P.Daubeny,C.W.Bunn,C.J.Brrown, Proc.Roy.Soc.,A226,531(1954)

Preferable examples of the method of measuring resin density includes the density gradient tube method. The density gradient tube method is defined in JIS-7112 and can be made in accordance therewith except for preparation of measurement solutions. Density measurements by the density gradient tube method can be accomplished using a water bath for specific gravity measurement with density gradient method (OMD-6, Ikeda Scientific Co., Ltd.), for example.

Films prepared by uniaxial stretching of crystallized sheets made of crystalline resin have a mixed phase of crystalline and amorphous structures inside. The presence of the mixed phase of "relatively highly crystalline portion" and "relatively highly amorphous, relatively less crystalline portion" in the polarizing diffuser film of the present invention may be observed by sectional transmission electron microscopy (TEM) of a thin slice of the film. The mixed phase may be observed as "bright-dark structure" in the sectional TEM image of the film slice.

The "bright-dark structure" observed by TEM refers to a mixed structure of "bright portion" and "dark portion" in the TEM image, more specifically to a sea-island structure consisting of "bright portion" and "dark portion." In the sectional TEM images of a polarizing diffuser film of the present invention which are illustrated in FIGs. 1A and 1B to be described later, bright portions are considered to correspond to relatively high crystalline portions and dark portions to relatively less crystalline portions. The difference in crystallinity between the bright portion and dark portion in the TEM image can be assessed by micro-Raman spectrometry (resolution: 1 μm) of a film's section covering both bright and dark portions, followed by analysis of the measured Raman spectrum.

The bright portion and dark portion are made of substantially the same resin (polymer) composition. As used herein, "bright portion and dark portion are made of substantially the same resin composition" means that the respective components of the bright and dark portions are resin components made of substantially the same composition; the resin which constitutes the bright portion is free of resin particles or fillers which are made of different composition than the resin constituting the dark portion.

FIGs.1A and 1B show an example of a TEM image of a section, cut along the direction perpendicular to the stretching direction, of a polarizing diffuser film according to an embodiment of the present invention. In FIG.1A, the image area is 77 $\mu m^2$ (7 μm length in film thickness direction, and 11 μm length in the direction perpendicular to the stretching direction). As shown in FIG.1A, in the sectional TEM image cut along the direction perpendicular to the stretching direction, "islands" of bright portions with undefined shape or bright portions somewhat elongated in the plane direction of the film surface are observed.

In the sectional TEM image shown in FIG.1A, the average particle diameter of the bright island portions is not particularly limited; it ranges preferably from 0.1 μm to 0.8 μm in view of accomplishing optical effects, more preferably from 0.1 μm to 0.6 μm, further preferably from 0.1 μm to 0.5 μm. It should be noted that there is no problem if bright island portions which are less than 0.1 μm in average particle diameter exist. The number of the bright island portions having an average particle diameter of 0.1 μm to 0.8 μm ranges preferably from 200 to 1,200, more preferably from 300 to 800, in the 77 $\mu m^2$ image area. The presence of such a dense distribution of fine bright islands achieves not only high transmission polarization degree and high transmission haze as will be described later, but high reflection polarization degree and diffuse reflectance.

In a binarized image (see FIG.1B), which is a binarized image of a sectional TEM image of a polarizing diffuser film of the present invention cut along the direction perpendicular to the stretching direction (see FIG.1A), the ratio of area occupied by bright portions in the TEM image of the polarizing diffuser film ranges preferably from 6% to 80%, more preferably from 10% to 75%, further preferably from 30% to 60%, most preferably from 35% to 55%.

The bright portions and dark portions in the TEM images are considered to have different resin density and/or crystallinity, although the reason for this is not necessarily clear. This difference may in turn lead to differences in their refractive index, molecular orientation, and birefringence.

When bright portions are observed as being dispersed in a matrix of dark portion in a sectional TEM image of the film, the difference in refraction index between the bright portion resin and dark portion resin causes light reflections or light diffusion at their interface. Thus, when bright portions are dispersed in a moderate amount in the sectional TEM image, the film may exhibit suitable values of transmission haze and diffuse reflectance.

The "bright portion" and "dark portion" in the TEM image exhibit different molecular orientation ratios due to

the differences in their resin density and crystallinity, leading to birefringence difference after stretching. As a result, the film's refractive-index difference between the "bright portion" and the "dark portion" differs between the direction parallel to the stretching direction and the direction perpendicular to the stretching direction. Thus, reflectivity difference and light diffusion property difference occur between a light beam with linear polarization parallel to the stretching direction and a light beam with linear polarization perpendicular to the stretching direction. Crystalline resins with positive birefringence like polyethylene terephthalate tend to reflect and diffuse more of a light beam with linear polarization parallel to the stretching direction, because the refractive index difference in the direction parallel to the stretching direction becomes larger than the refraction index difference in the direction perpendicular to the stretching direction.

The greater the number of the interfaces between bright and dark portions in a sectional TEM image of the film, the greater the difference in light reflection amount and light diffusion amount between a light beam with linear polarization parallel to the stretching direction and a light beam with linear polarization perpendicular to the stretching direction, leading to high transmission polarization degree and high reflection polarization degree. If the areas of bright portions are too large or if some of the bright portions are combined together to form larger bright portions, the interfaces between the bright and dark portions become small. On the other hand, if the interfaces between the bright and dark portions are too large, excess light diffusion occurs that results in greater light loss or disturbance of polarized light. Thus, when bright portions are dispersed in a moderate amount and in moderate shape in the sectional TEM image, the film may exhibit suitable values of transmission haze and diffuse reflectance.

In order for a polarizing diffuser film of the present invention to exhibit high transmission polarization degree and moderate transmission haze as well as high reflection polarization degree and high diffuse reflectance, it is important for the film to have a dense distribution of fine island portions. In other words, transmission polarization degree and reflection polarization degree can be enhanced by increasing the number of interfaces between bright portions and dark portions so that more light is reflected and diffused at the film interface to provide moderate levels of transmission haze and diffuse reflectance and that the difference in light reflection amount and light diffusion amount increases between a light beam with linear polarization parallel to the stretching direction and a light beam with linear polarization perpendicular to the stretching direction. The number of interfaces between the bright and dark portions can be controlled by, for example, the type of crystalline resin, addition of nucleating agents, intrinsic viscosity (IV value), or heating condition upon haze enhancing crystallization to be described later.

A sectional TEM image of a uniaxially-stretched resin film is prepared as follows. First, a uniaxially-stretched resin film is sliced to prepare a thin slice sample. The sample is sliced such that the cut surface is perpendicular to the stretching direction of the uniaxially-stretched film and is in parallel to the film thickness direction. The thin slice sample is prepared using general techniques. For example, a film sample embedded in resin is fixed to a sample holder of a ultramicrotome, trimmed using a shaver, planed using a glass knife or artificial sapphire knife, and cut into slices of 0.1 to 1 μm thickness using a diamond knife of the ultramicrotome.

The obtained thin slice samples are optionally stained, e.g., by placing them in a staining pod containing ruthenium tetroxide crystals followed by vapor staining for about 2 hours.

Sections of stained or non-stained thin slice samples are then imaged with a transmission electron microscope to obtain TEM images (end views). Examples of the transmission electron microscope include H-7650 manufactured by Hitachi High-Technologies Corporation. Accelerating voltage is preferably set in the range of several tens to 100 kV. Magnification is set at about 1,000x to 4,000x, for example. The surface area of the observation area is preferably set at 5 $\mu m^2$ to 10,000 $\mu m^2$, more preferably 10 $\mu m^2$ to 1,000 $\mu m^2$. TEM images are output at a magnification of about 5,000x to 50,000x.

Luminance is measured for each pixel in the output TEM image, and average luminance of the image is calculated. Herein, the ratio of the number pixels exhibiting luminance higher than the average value to the total number of pixels is defined as "ratio of area occupied by bright portions."

Image processing is accomplished using generally-available image analysis software (e.g., ImageJ 1.32S developed by Wayne Rasband). Specifically, the output TEM image is converted into a general digital image file format (e.g., JPEG) with a grayscale of, for example, 256 tones. The grayscale level is measured for each pixel, creating a histogram showing the number of pixels in the image at each different grayscale level. An average grayscale level of the image is found using the histogram. The image is binarized with the average grayscale level as a threshold grayscale value, with pixels at or above the threshold (i.e., bright) set to "1" and pixels below the threshold (i.e., dark) to "0." A ratio of the number of pixels assigned "1" to the total number of pixels is calculated to find as the ratio of area occupied by bright portions.

The average particle diameter of the bright portions can be measured through the following procedure.

1) Particle analysis is performed using the above image analysis software to count the total number of bright portions of certain size or larger and calculate the ratio of area occupied by the bright portions. More specifically, after deleting from the TEM image all of the bright portions whose area is smaller than the area of a circle having a diameter of smaller than 0.035 μm, the number of the remaining bright portions (i.e., bright portions whose area is equal to or

larger than the area of a circle having a diameter of 0.035 μm) and the ratio of area occupied by those bright portions are calculated.

2) The total area of the bright portions whose area is equal to or larger than the area of a circle having a diameter of 0.035 μm is then calculated based on the ratio of area occupied by the bright portions calculated in the step 1) and on the scale of the TEM image

3) The total area of the bright portions calculated in the step 2) is divided by the total number of the bright portions calculated in the step 1) to find an average area of the bright portions. The average area of the bright portions is then divided by pi, square rooted, and doubled. The obtained value is deemed as the diameter of one bright portion assumed as a circle, and this diameter is defined as "average particle diameter."

In this way, it is preferable to calculate the average particle diameter of bright portions whose area is equal to or larger than the area of a circle having a diameter of 0.035 μm. This allows for elimination of noise caused by insufficient contrast of the binarized image, non-circular sectional shape of the bright island portions, etc.

It should be noted that the brightness of an output TEM image becomes non-uniform depending on the TEM observation conditions or image output conditions, even when the TEM image in fact shows uniform brightness across its surface. By way of example, even when the TEM image should in fact show uniform brightness, there are cases where the left half and right half of the output TEM image show different brightness levels, where the brightness gradually increases across the output TEM image from left to right, and so forth. In such cases, creation of a histogram and binarization are preferably preceded by background correction for the calculation of the ratio of area occupied by bright portions.

FIG.2 shows a sectional polarization microscopy image of a uniaxially stretched crystalline resin film observed under crossed Nicol polarizers (observation area: about 200 $\mu m^2$), wherein a section of the film parallel to the stretching direction is irradiated with polychromatic light for observation. As shown in FIG.2, the sectional polarization microscopy image of the film includes "bright portions" which look relatively bright and "dark portions" which look relatively dark. The bright and dark portions may constitute "sea-island structure." The bright portions may be formed as islands which are mainly elongated in the stretching direction.

In polarization microscopy images as observed under crossed Nicol polarizers (including orthogonal Nicol arrangement), portions which look relatively bright (bright portions) tend to exhibit high crystallinity and high degree of orientation, whereas portions which look relatively dark (dark portions) tend to exhibit low crystallinity and low degree of orientation. Specifically, the bright portions have higher crystallinity and higher degree of orientation than the dark portions. High crystallinity facilitates molecular orientation, and high degree of orientation leads to high birefringence. Thus, "the bright portions have higher crystallinity and higher degree of orientation than the dark portions" means that "the bright portions have higher birefringence than the dark portions."

The polarization microscopy images can be observed with NIKON OPTIPHOT-2 Microscope having crossed polarizers (polarizing films) respectively at light incident side and observation light side of the object. Polarization images can be taken with CANON POWERSHOT A650 (x100 objective lens) at 1,000x magnification.

A polarization microscopy image of a uniaxially-stretched resin film can be taken by directly imaging the film surface. However, in order to obtain a polarization microscopy image with high accuracy, it is preferable to prepare a thin slice film sample by slicing the uniaxially-stretched resin film. The sample is sliced such that the cut surface is in parallel to the stretching direction and to the film thickness direction of the uniaxially-stretched film. The thin slice sample can be prepared using the same general method as described above. The thickness of the slice which has cut surfaces along the film stretching direction is preferably 0.5 μm to 2 μm for facilitating the observation of the bright-dark structure.

"Under crossed Nicol polarizers" as used herein refers to a polarizer arrangement where two polarizers which sandwich the film sample are so arranged that their polarizing axes intersect (as opposed to "under parallel Nicol polarizers"). The intersecting angle of the polarizing axes is optimized for maximum image contrast; it is preferable to observe contrast images at the found optimal intersecting angle (e.g., 90°).

2. Method for manufacturing polarizing diffuser film

A method of the present invention for manufacturing a polarizing diffuser film includes the steps of: (1) preparing an amorphous sheet made of any of the above crystalline resins; (2) preparing a crystallized sheet to be stretched from the amorphous sheet; and (3) uniaxially stretching the crystallized sheet.

(1) Step of preparing amorphous sheet

The above amorphous sheet made of crystalline resin may be a commercially available sheet or may be prepared using any of the film formation approaches known in the art, such as a melt extrusion molding machine. The term "amorphous" as used herein may encompass a state where a small number of crystalline portions exist.

The amorphous sheet may contain a small amount of any of the above nucleating agents. Such an amorphous sheet can be prepared by melt-kneading of a crystalline resin pellet and a nucleating agent in a melt extrusion molding machine followed by extrusion molding.

The dispersion state of the nucleating agent in the crystalline resin significantly influences the characteristics of the resulting film. Thus, in order for the nucleating agent to be highly dispersed in the crystalline resin, it is advantageous to prepare a masterbatch in which a high concentration of the nucleating agent is predispersed in crystalline resin pellet, which is of the same type as the crystalline resin for the amorphous sheet, by melt-kneading. Alternatively, when the nucleating agent is to be used as it is without preparing a masterbatch, the average particle diameter and water content of the nucleating agent to be added are preferably set equal to or lower than predetermined levels. More specifically, the average particle diameter of the nucleating agent to be added is preferably 30 $\mu$m or less, more preferably 5 $\mu$m or less. When the average particle diameter exceeds 30 $\mu$m, the nucleating agent particles become less dispersed in the solution; therefore, the agent cannot sufficiently exert its performance when added.

The melt extrusion molding machine to be employed may be any of those known in the art. The machine mainly consists of an extruder for melt-kneading pelletized resin and of a mold unit through which the melt-kneaded resin is discharged.

Examples of the extruder include a single-screw extruder and a twin-screw extruder, with a single-screw extruder being preferable. There are no particular limitations on the cylinder diameter and cylinder length in the extruder; however, the cylinder diameter D ranges preferably from 20 mm to 150 mm, and the L/D ratio (ratio of cylinder length L to cylinder diameter D) ranges preferably from 10 to 40. There are no particular limitations on the screw type; for example, in addition to full flight type and barrier flight type, dulmadge type, pin type, pineapple type and unimelt type may be employed.

Examples of the mold unit include T-die and circular die, with T-die being preferable as uniform film thickness can be achieved. A gear pump may be disposed between the extruder and mold unit for easy measurement of resin amount.

FIG.3 is a schematic illustration of an example of melt extrusion molding machine 1. Melt extrusion molding machine 1 includes melt-extruder 2 and T-die 4 attached to the head of melt-extruder 2. Melt-extruder 2 includes cylinder 2A, screw 2B mounted inside the cylinder 2A, and hopper 6 to be charged with resin pellet. With this configuration, the resin pellet charged through hopper 6 into melt-extruder 2 is melt-kneaded at a temperature equal to or higher than the resin's melting point, and ejected from T-die. The molten resin thus ejected is then deposited onto casting roll 8 for cooling and solidification, to prepare amorphous sheet 9.

(2) Step of preparing crystallized sheet to be stretched

It is important for a crystallized sheet to be stretched to have predetermined levels of crystallinity and transmission haze. This is to confer the resultant stretched film with moderate levels of both transmission haze and transmission polarization degree, or both diffuse reflectance and reflection polarization degree.

The crystallinity of the crystallized sheet to be stretched is preferably 3% or larger, more preferably 3% to 30%, further preferably 3% to 20%. When the crystallized sheet has a crystallinity that falls within these ranges, the resultant stretched resin film can have a crystallinity of, for example, 8% to 40%, more preferably 8% to 30%.

When the crystallinity is too high, the crystallized sheet becomes so hard that a large stretching tension is required. Thus, when the crystallized sheet is stretched, relatively less crystalline portions are also highly oriented in addition to relatively highly crystalline portions. Moreover, when the crystallinity is too high, the crystallized sheet to be stretched may contain large crystal particles. This may result in failure to confer the resultant uniaxially-stretched film with desired optical characteristics as a polarizing diffuser film, or may make the stretching process itself difficult due to excessively high crystallinity. On the other hand, when the crystallinity of the crystallized sheet to be stretched is too low, less crystals are oriented and thus less orienting stress is placed. Thus, relatively highly crystalline portions are also less oriented.

The crystallinity of the crystallized sheet to be stretched can be measured by the density method in the same manner as described above. The crystal particle size can be measured by polarization microscopy.

The crystallized sheet to be stretched preferably exhibits a transmission haze to visible light of 7% to 70%, more preferably 15% to 60%. This is to allow the resultant stretched film to have a proper transmission haze to have a practical polarization degree. The transmission haze of the crystallized sheet to be stretched may measured in the same manner as that of the above polarizing diffuser film. It should be noted however that there is no need to find a mean value of transmission haze for two different film directions, because non-stretched crystallized resin sheets exhibits little optical anisotropy.

As described above, it is important to adjust the crystallinity and transmission haze of the crystallized sheet to be stretched to fall within the predetermined range, with crystallinity ranging preferably from 3% to 20%, and transmission haze to visible light ranging preferably from 7% to 70%. This is to confer the resultant stretched film with both superior polarization selectivity and light diffusion property.

Moreover, in order to prepare a polarizing diffuser film with high transmission polarization degree and moderate transmission haze, it is preferable that the crystallized sheet to be stretched have a value of a predetermined range in terms of b* value in the CIE L*a*b* color space. As described above, transmission polarization degree and transmission haze of a polarizing diffuser film greatly vary depending on the microstructure of the film. Namely, it is important to form microstructure in which fine crystalline portions are densely distributed. To achieve this it is necessary to previously form many fine crystalline portions (bright island portions after stretched) in the crystallized sheet to be stretched. Since the crystallized sheet to be stretched has such a dense distribution of fine crystalline portions, diffuse light from the sheet is bluish.

Diffuse light from the crystallized sheet to be stretched preferably has a value of -25 to -10, more preferably from -20 to -14, in terms of b* value in the CIE L*a*b* space as measured in accordance with JIS Z8722 and JIS Z8729. When the CIE b* value is less than -25, the crystallized sheet to be stretched becomes more bluish, and when it is greater than -10, the sheet becomes more colorless. Since an excessively blue crystallized sheet has many small crystal particles, it becomes so hard that stretching becomes difficult. On the other hand, it is suggested that a colorless crystallized sheet has relatively large crystalline portions. Thus, neither of the crystallized sheets is considered to exhibit practical levels of transmission polarization degree and transmission haze after stretched.

The b* value@1,000μm of diffuse light from the crystallized sheet to be stretched - b* value in the CIE L*a*b* color space as measured when the sheet thickness t' is set at 1,000 μm - ranges preferably from -21 to -10.

b values of visible diffuse light from the crystallized sheet to be stretched, and b* value@1,000)μm of visible diffuse light from the 1,000 μm thick-crystallized sheet to be stretched may be measured in the procedure given below.

1) A light trap is positioned on an integrating sphere of a spectrophotometer at a point where specular reflection light from a specimen strikes, to eliminate specular reflection light components. The thickness of the film as the specimen may be set to, for example, 600 μm. The film is set on the sample holder (for reflection light measurement). Light beams with wavelengths of 380-780 nm are incident on the film surface for the measurement of diffuse reflectance at every 5 nm wavelength.
2) Using CIE standard light source C, a CIE b* value of diffuse light is calculated in accordance with JIS Z8722 and JIS Z8729 based on the diffuse reflectance data obtained in the step 1).
3) The CIE b* value@1,000μm of the diffuse light may be calculated in the manner described below. More specifically, the value of diffuse reflectance Rd (λ) for each wavelength obtained in the step 1) is substituted into the following Equation to find diffuse reflectance Rd (λ)@1,000μm. In the same manner as in the step 2), the CIE b* value@1,000μm of the diffuse light is then calculated based on the Rd@1,000μm data.

$$Rd(\lambda)@1{,}000\mu m = Rd\ (\lambda)\ x\ 1{,}000/t'$$

Further, in order to prepare a polarizing diffuser film with high transmission polarization degree and moderate transmission haze, it is preferable that the crystallized sheet to be stretched have a D2/D1 ratio (ratio of wavelength-dependent light scattering ratio D2 to less wavelength-dependent light scattering ratio D1) that falls within a predetermined range. Since the crystallized sheet to be stretched has many fine crystal particles as described above, when light beams with wavelengths of 380-780 nm are incident, wavelength-dependent light scattering (also referred to as "small particle scattering" or "Rayleigh scattering") is more dominant than less wavelength-dependent light scattering ("large particle scattering" such as geometric scattering).

The D2/D1 ratio (ratio of wavelength-dependent light scattering ratio D2 to less wavelength-dependent light scattering ratio D1) of the crystallized sheet to be stretched is preferably 1.5 or more, more preferably 2.5 or more. When the D2/D1 ratio of the crystallized sheet to be stretched is less than 1.5, the crystallized sheet has a smaller number of fine crystalline particles. This may make it difficult to form a polarizing diffuser film with high transmission polarization degree or transmission haze.

Light scattering ratio D1 is derived from Equations (1A), (1B) and (2), and light scatter ratio D2 is derived from Equations (1A), (1B) and (3). In Equations (1A) and (1B), λ is wavelength (nm), Ttotal is total light transmittance, Tpara is parallel light transmittance, and Rd is diffuse reflectance. In Equation (2), C is scattering coefficient for less wavelength-dependent light scattering, and t' is thickness (μm) of crystallized sheet. In Equation (3), $k/\lambda^4$ is value of Equation (1A), k is scattering coefficient, and t' is thickness (μm) of crystallized sheet.

$$-\frac{1}{t}\mathrm{Ln}\ (T^*/100) = \frac{k}{\lambda^4} + C \quad \cdots (1A)$$

$$T^* = \frac{Tpara}{T_{total}/100 + R_d/100} \quad \cdots (1B)$$

$$D1 = \{1 - \exp(-C \cdot t')\} \times 100 \quad \cdots (2)$$

$$D2 = \{1 - \exp(-\frac{k}{\lambda^4} \cdot t')\} \times 100 \quad \cdots (3)$$

Calculation of light scattering ratios D1 and D2 may be conducted in the procedure described below.

1) Light beams with wavelengths of 380-780 nm are incident on the crystallized sheet to be stretched for the measurement of Ttotal, Tpara and Rd at every 10 nm wavelength. Diffuse reflectance Rd may be measured in accordance with the step 1) in which to measure a CIE b* value of diffuse light.
2) The values of Ttotal, Tpara and Rd for each wavelength obtained in the step 1) are then substituted into Equation (1B) to find non-scattering ratio T*.
3) A scatterplot is then obtained by plotting the value obtained by substituting T* into the left-hand member of Equation (1A) (on the vertical axis) against $1/\lambda^4$ (on the horizontal axis). A regression line is then determined by least squares regression, and y-intercept C and slope k (both scattering coefficient) of the line are found.
4) By substituting y-intercept C obtained in the step 3) and thickness t' (μm) of the crystallized sheet into Equation (2), light scattering ratio D1 is found. In the same manner, by substituting slope k obtained in the step 3), wavelength λ (e.g., 550 nm) and thickness t'

(μm) of the crystallized sheet into Equation (3), light scattering ratio D2 at, for example, 550 nm wavelength is found. A D2/D1 ratio is then calculated.

Non-scattering ratio T* is a measure of the degree of the transmission of parallel light, among incident light from which diffuse components (diffuse transmission component and diffuse reflection component) as well as a specular reflection component and light loss (absorption) are removed. Alternatively, non-scattering ratio T* can be found by substituting Tpara, Rs (specular light reflectance) and L (light loss) into the following equation.

$$T^* = Tpara/\{1-(Rs/100)-(L/100)\}$$

The CIE b* value of diffuse light from the crystallized sheet to be stretched, Ttotal, Tpara and Rd can be measured using Spectrophotometer U-4100 (Hitachi High-Technologies Corporation) and a 150 mm-diameter integrating sphere attachment.

The thickness of the crystallized sheet to be stretched is mainly determined by the intended thickness of a stretched film to be prepared in the stretching step and by the stretch ratio; it ranges preferably from 50 μm to 2,000 μm, more preferably 80 μm to 1,500 μm.

The method of preparing the crystallized sheet to be stretched is not particularly limited; it can be prepared by a) haze enhancing crystallization of the amorphous sheet made of crystalline resin, optionally followed by b) pre-heating before stretching for further crystallization for enhanced haze. Alternatively, haze enhancing crystallization may be conducted in the (1) step of preparing an amorphous sheet, rather than in the (2) step of preparing a crystallized sheet to be stretched.

Haze enhancing crystallization in the (1) step of preparing a amorphous sheet involves, for example, reducing the cooling rate of the molten resin ejected from a die so that it is melt-crystallized (crystallization from molten state). The cooling rate of the molten resin can be adjusted by, for example, the casting roll temperature or cast sheet thickness. For example, when the temperature of the cast sheet upon cooling on the casting roll is around 1,000 μm, the cooling rate lowers and the cast sheet is readily melt-crystallized.

The crystalline resin sheet may have either single-layered or multi-layered structure.

Haze enhancing crystallization of the crystalline resin in amorphous state is effected by heating an amorphous

polyester resin sheet at a predetermined temperature for a predetermined time. The crystalline resin sheet in amorphous state may be heated in a state where it is loaded in a stretching machine (e.g., pre-heating zone of a tenter stretching machine) while stretched under a certain level of tension, or may be heated by heating means other than stretching machines (e.g., gear oven, heating roll, infrared heater or combination thereof).

Heating temperature (T1) used for haze enhancing crystallization of the amorphous sheet made of crystalline resin is set around crystallization temperature (Tc) of the crystalline resin. Crystallization temperature is generally of two types: cooling crystallization temperature (Tcc) and heating crystallization temperature (Thc). In the present invention, crystallization temperature (Tc) refers to cooling crystallization temperature (Tcc). Crystallization temperature (Tc) of the crystalline resin falls between glass transition temperature (Tg) and melting temperature (Tm) of the crystalline resin ($Tg < Tc < Tm$).

In order to facilitate haze enhancing crystallization of the amorphous sheet made of crystalline resin, heating temperature (T1) preferably satisfies the relationship Tc-40°C<T1<Tm-10°C", more preferably the relationship "Tc-30°C<Tm<Tm-10°C." In the case of polyethylene terephthalate, T1 is about 105°C to about 180°C. Here, Tc is the crystallization temperature of crystalline resin, and Tm is the melting temperature of crystalline resin. For example, crystallization temperature (Tc) of polyethylene terephthalate ranges from about 115°C to about 170°C.

Crystallization temperature (Tc) of crystalline resin is preferably measured by differential scanning calorimetry (DSC) of a crystalline resin sheet or non-crystallized (super-cooled) crystalline resin. Differential scanning calorimetry (DSC) may be carried out in accordance with JIS K7122. Melting temperature (Tm) is also preferably measured by differential scanning calorimetry in accordance with JIS K7122. It should be noted, however, that the crystallization temperature measured in this manner is subjected to change depending on the state of a specimen (i.e., whether it is pellet or sheet).

Heating time for haze enhancing crystallization of the amorphous sheet made of crystalline resin may be adjusted such that the crystallized sheet exhibits certain levels of crystallinity (e.g., 3% to 20%) and transmission haze (e.g., 7% to 70%). Longer heating time leads to higher crystallinity, and vice versa. The heating time varies depending on heating temperature (T1), sheet thickness, molecular weight of the resin of the sheet, types and amounts of additives and copolymers, and heating method. It ranges from 5 seconds to 20 minutes, preferably from 10 seconds to 10 minutes.

For example, when heating an amorphous polyethylene terephthalate sheet in a 120°C gear oven, heating time ranges preferably from about 1.5 minutes to 10 about minutes, more preferably from about 1.5 minutes to about 7 minutes. When heating using a 120°C heating roll, heating time ranges preferably from 10 seconds to 100 seconds, more preferably from 15 seconds to 60 seconds.

However, when pre-heating is further performed before stretching, the crystallized sheet may be crystallized by the pre-heating. In such a case, heating time for haze enhancing crystallization may be appropriately set short in view of the pre-heating before stretching.

In any case, heating temperature and heating time for haze enhancing crystallization may be appropriately adjusted while considering the heating method employed, sheet feed rate, hot air flow, etc.

As described above, the sheet subjected to haze enhancing crystallization may be pre-heated before stretching. Pre-heating before stretching means that the sheet loaded in a stretching machine is heated immediately before stretched, so that it is soft enough to be suitable for stretching.

Pre-heating before stretching may also proceed crystallization. In such a case, it is preferable to previously adjust the conditions (heating temperature and heating time) used for haze enhancing crystallization.

Pre-heating temperature (T2) is set around the glass transition temperature (Tg) or higher in order for the crystallized sheet to be suitable for stretching. Pre-heating temperature (T2) may be equal to stretch temperature (T3) later described. For example, in the case of a crystallized sheet made of polyethylene terephthalate, pre-heating temperature (T2) is generally set to 95°C to 180°C, although it varies depending on the resin viscosity, crystallinity of the crystallized sheet, sheet feed rate, and air flow.

Pre-heating time may be appropriately adjusted such that the crystallized sheet upon start of stretching reaches predetermined pre-heating temperature. Too long pre-heating time may result in the crystallized sheet having excessively high crystallinity (e.g., over 30%), making the stretching process itself difficult. On the other hand, too short pre-heating time results in the crystallized sheet having insufficient temperature upon start of stretching, making the stretching process difficult due to too high stretching tension. For example, in the case of a crystallized sheet made of polyethylene terephthalate, pre-heating time ranges preferably from 0.1 minutes to 10 minutes.

In any case, pre-heating temperature (T2) and pre-heating time may be appropriately adjusted while considering the sheet feed rate, hot air flow, etc.

(3) Stretching step

The stretching step refers to a step of stretching the "crystallized sheet to be stretched." By stretching the sheet, a film is produced that exhibits controlled transmission haze and transmission polarization degree.

The "crystallized sheet to be stretched" may be a sheet prepared by haze enhancing crystallization or a sheet prepared by haze enhancing crystallization followed by pre-heating.

The means of uniaxially stretching the crystallized resin sheet to be stretched is not particularly limited. As used herein, "uniaxial stretching" means stretching in a single axis direction. However, the sheet may also be stretched in different directions than the intended single axis direction so long as the effects of the present invention are not impaired. Certain types of stretchers stretch the sheet in a single axis direction as well as in substantially different directions than the single axis direction, even when stretching only in the single axis direction is intended. Thus "unixial stretching" encompasses stretching which also involves stretching in such unintended directions.

For example, the sheet may be stretched in directions perpendicular to the intended stretching direction. In general, "uniaxial stretching" in its pure sense means a stretching method which includes clamping opposing sides of the raw sheet and stretching it while the other opposing sides (transverse sides) are left unclamped (this scheme is also referred to as "transverse sides-unclamped uniaxial stretching"). In this method, the width between the opposing transverse sides narrows during stretching due to Poisson contraction. In other words, the sheet is not stretched in directions perpendicular to the stretching direction.

On the other hand, when the raw sheet is clamped at each side, the sheet is unable to shrink in directions perpendicular to the stretching direction because the opposing stretch sides are clamped (this scheme is also referred to as "transverse sides-clamped uniaxial stretching"). This means that the sheet is substantially slightly stretched in the directions perpendicular to the stretching direction.

The term "uniaxial stretching" encompasses "transverse sides-unclamped uniaxial stretching" and "transverse sides-clamped uniaxial stretching." Examples of methods of transverse sides-unclamped uniaxial stretching includes roll stretching. Transverse sides-clamped uniaxial stretching encompasses transverse direction stretching by the tenter method, in addition to the method described above.

Uniaxial stretching rate is not particularly limited, but is preferably set at 5%/sec to 500%/sec, more preferably 9%/sec to 500%/sec, further preferably 9%/sec to 300%/sec. Stretching rate is found using the equation below. In the equation, Lo is the raw sheet length, and L is the stretched sheet length after time t. If the stretching rate is too high, the orienting stress increases to an extent that imposes large loads on the equipment, which may prevent uniform stretching in some cases. On the other hand, if the stretching rate is too low, the productivity may be reduced due to extremely low production rates.

$$\text{Stretching rate (\%/sec)} = (L\text{-}Lo)/Lo/t \times 100$$

The stretching rate can vary depending on the crystallinity of a crystallized sheet before stretched. The higher the crystallinity, the harder the sheet becomes and the greater the orienting stress. For this reason, an optimal stretching rate tends to decrease.

For example, when a crystallized resin sheet made of polyethylene terephthalate is stretched at around 120°C, the stretching rate is preferably set at 5 %/sec to 220%/sec. Note that the stretching rate is not required to be constant from the initial stage to final stage in stretching process; for example, the initial stretching rate may be set at 25%/sec, with an average stretching rate being 10%/sec.

If the stretching temperature (T3) is high, lesser stress is placed on the crystallized sheet during stretching and thereby many relatively less crystalline portions are elongated without being highly orientated, rather than relatively highly crystalline portions. On the other hand, if the stretching temperature (T3) is low, greater stress is placed on the crystallized resin sheet during stretching, which causes orientation of relatively highly crystalline portions as well as relatively less crystalline portions. For example, when stretching a crystallized resin sheet made of polyethylene terephthalate, the stretching temperature (T3) is preferably set at 95°C to 135°C.

Stretching temperature (T3) may be equal or unequal to pre-heating temperature (T2) before stretching.

Stretch ratio is not particularly limited and is appropriately selected depending on the kind of resin to be employed. In the case of polyester resins, the resin sheet is preferably stretched 2 to 10 times its length (stretch ratio of 2 to 10). When the stretch ratio is too high, chances of tearing during stretching may increase. On the other hand, when the stretching ratio is too small, it may result in failure to obtain sufficiently orientated molecular structure.

The stretched film from the stretching step is 20 μm to 500 μm in thickness, preferably 30 μm to 300 μm in thickness. If the film thickness is too small, the film fails to offer sufficient rigidity and therefore becomes hard to keep flatness. This may impair film handleability during manufacture of a liquid crystal display device or even may make difficult its installation to the liquid crystal display device being manufactured On the other hand, if the film thickness is too large, the film may be difficult to be wound in a roll, or the yield may decrease due to increased required resin amount.

When a crystalline resin raw sheet or a crystallized resin sheet is uniaxially stretched under the conventional film manufacturing conditions, it is often the case that most of the microcrystals (generally, spherical crystals formed of

lamellar crystals) in the crystalline resin raw sheet and most of the spherical crystals in the crystallized resin sheet are disintegrated, with the result that their molecular chains are uniformly stretched. Thus, the resultant stretched film has a molecular structure in which molecules are substantially uniformly oriented and thus exhibit high transparency. By contrast, a uniaxially-stretched resin film of the present invention is prepared by uniaxial stretching of a crystallized sheet, which is prepared by crystallizing a polyester resin sheet under a certain condition, and thus exhibits a particular bright-dark structure such as that described above. In this way a stretched film with desired optical characteristics can be obtained.

In particular, a polarizing diffuser film of the present invention has a dense distribution of fine bright island portions and therefore can exhibit high transmission polarization degree and moderate transmission haze, or high reflection polarization degree and high diffuse reflectance.

3. Applications of polarizing diffuser film

Preferably, a polarizing diffuser film of the present invention is used as a component of a liquid crystal display device. The polarizing diffuser film preferably has a surface shape having a light condensation function on either or both sides of the film so that the liquid crystal display device provided with the film exhibits high luminance, especially high normal-direction luminance. In general, such a light condensable surface shape is preferably provided only on one side of the polarizing diffuser film. For example, when the polarizing diffuser film is used in a liquid crystal display device, such a light condensable surface shape is preferably provided on the side of the film which contacts a polarizing plate.

By employing a light condensable surface shape as the surface shape of the polarizing diffuser film, it is possible to cause incident light beams with specific linear polarizations - which selectively pass through the film by polarization selectivity and travel in various directions by light diffusion property - to emit in the normal direction to the display screen, whereby normal-direction luminance can be enhanced. In this way the polarizing diffuser film having both light condensation function and selected polarized light reflection characteristics can enhance normal-direction luminance at lower costs than the combined use of a conventional prism film or microlens film and the polarizing diffuser film.

On the other hand, when light condensation performance is excessively enhanced by, for example, providing the surface of the polarizing diffuser film with prism shape and adjusting the prism apex angle, luminance at off-normal viewing angles tend to decrease, i.e., a 30° luminance ratio of a liquid crystal display device tends to decrease. It is thus preferable to adjust the surface shape of the polarizing diffuser film to an extent that the 30° luminance ratio is kept at 1.73 or less.

General films which have been conventionally used as prism films or microlens films are surface-modified biaxially-stretched polyethylene terephthalate (PET) films. Even when any of these PET films is combined with a polarizing diffuser film, due to the large retardation in phase of the biaxially-stretched PET film, it causes disturbance of the selected polarized light when it passes through the PET film. This reduces effects of reflections of selected polarized light beams. It is also difficult in the manufacturing process to make the orientation axis (slow axis) of such films parallel to or perpendicular to the stretching direction of the polarizing diffuser film. The polarizing diffuser film of the present invention can thus realize cost reductions as well as thin liquid crystal display devices compared to the combined use of the prism film or microlens film and polarizing diffuser film.

Examples of the light condensable surface shape include, but not particularly limited to, one-dimensional prism shape (see FIG.4), two-dimensional prism shape (see FIG.5), microlens shape (see FIG.6), and wave shape. Additional examples of the light condensable surface shape include combinations of one-dimensional prism shape and microlens shape, and discontinuous one-dimensional prism or wave shape.

One-dimensional prism shape refers to a surface shape formed of multiple linear triangular prisms arranged side-by-side (see FIG.4). FIG.4 is a perspective illustration of a polarizing diffuser film having a surface of one-dimensional prism shape, including an illustration of a film section cut vertically to the ridge lines of the prisms. Prism pitch P1 may be either regular pitch or variable pitch, and in each case ranges preferably from about 1 μm to about 200 μm. Prism apex angle θ1 ranges preferably from about 60° to about 140°, more preferably from about 85° to about 95° for particularly high light condensation ability. Prism height h1 ranges preferably from about 0.4 μm to about 110 μm. The ridge lines of the prisms preferably run either in parallel or perpendicularly to the stretching direction of a uniaxially-stretched resin film from which the polarizing diffuser film is made, more preferably run perpendicularly to the stretching direction. This is because not only **a number of sheets taken from the stretched film for manufacturing the polarizing diffuser film can be increased,** but luminance can be enhanced.

Two-dimensional prism shape refers to a surface shape formed of multiple quadrangular pyramids arranged in a matrix (see FIG.5). FIG.5 is a perspective illustration of a polarizing diffuser film having a surface of two-dimensional prism shape, including its sections. Distances P2 between the apexes of quadrangular pyramids may be regular or irregular, but distance P2 between every two of the apexes ranges preferably from about 1 μm to 200 μm. Height h2 of the quadrangular pyramid as measured from the bottom ranges preferably from about 0.4 μm to 110 μm. Prism apex angle θ2 may range from about 60° to about 140°, preferably from about 85° to about 95° for particularly high light

condensation ability.

Microlens shape refers to a surface shape formed of multiple convex lens arranged over the film surface (see FIG.6). The convex lens may be arranged either regularly or randomly. The term "regularly arranged" means for example a closed-packed arrangement. The lens shape is not specifically limited to spherical shape or non-spherical shape; the lens shape and lens size are appropriately selected depending on the desired levels of light condensation property and light diffusion property. FIG.6A is a top view of a polarizing diffuser film having a surface of microlens shape, and FIG. 6B is a sectional illustration of the film. Each microlens preferably has a diameter D of about 4 μm to about 200 μm and height h' of about 2 μm to about 100 μm.

A polarizing diffuser film of the present invention, which has a light condensable surface shape, is preferably 20 μm to 650 μm in thickness, including the thickness of the light condensable surface.

As described above, a polarizing diffuser film of the present invention may include a light condensable surface shape. The surface shape may be a surface shape of the uniaxially stretched-resin film itself or a surface shape of a separate layer formed on the uniaxially-stretched resin film. In the latter case, the separate layer preferably directly contacts the uniaxially-stretched resin film, i.e., directly disposed on the uniaxially-stretched film without any intervening adhesive or other layers.

The method of forming the light condensable surface shape is not particularly limited; any of the commonly-used methods can be employed. For example, changing the surface shape of a uniaxially-stretched resin film to a light condensable surface shape may be achieved by heat-pressing a mold with a specific pattern onto the surface of the resin film at a temperature from resin's glass transition temperature Tg to crystallization temperature Tc; cooling the mold for resin solidification; and separating the mold from the resin film. Heat-pressing may be accomplished by roll-press using forming rolls, double belt press, etc., in addition to plate/lamination press.

Moreover, the light condensable surface shape of a layer separately arranged on the surface of a uniaxially-stretched film may be achieved by bringing a mold, on which active energy ray-curable resin is injected in its cavity, into intimate contact with the surface of the uniaxially-stretched resin film; irradiating an active energy ray for resin curing; and separating the mold from the resin film. Examples of active energy ray-curable resins include UV curable resins and electron beam curable resins.

A polarizing diffuser film of the present invention may be subjected to corona treatment, active energy ray irradiation, any of the known adhesion improving treatment such as primer treatment, and/or any of the smoothing treatments. Furthermore, the polarizing diffuser film may be subjected to known antireflection treatment, anti-Newton ring treatment, antistatic treatment, and/or hardcoat treatment. Antistatic property and hardcoat property may be conferred by the above-mentioned active energy curable resin or the later-described surface light diffuser layer to be disposed on the surface of the polarizing diffuser film.

On the other hand, a polarizing diffuser film of the present invention may include on its surface a surface light diffuser layer having a light diffusion function. The surface light diffuser layer preferably has microscopic asperities which are of the order of 0.1 μm to 50 μm in depth (or height). A polarizing diffuser film having such a surface light diffuser layer can cancel or reduce the glare of light on a lightguide or prism sheet, moire patterns thereon, and rapid luminance changes due to viewing angle.

Examples of the surface light diffuser layer include 1) coating resin layer having micsroscopic asperities on its surface, and 2) coating resin layer containing beads or filler (hereinafter collectively referred to as "beads"). Examples of the bead-containing coating resin layer include back coating layers for preventing adhesion to the adjacent sheet or film or preventing the generation of a Newton ring.

1)The coating resin that constitutes the coating resin layer having micsroscopic asperities on its surface (coating resin layer free from beads) may be transparent resin. Examples the transparent resin include thermosetting resins such as acrylic resins, silicone resins, melamine resins, urethane resins, alkyd resins and fluororesins, and active radiation curable resins such as UV curable resins.

The coating resin layer having microscopic asperities on its surface is formed by, for example, curing coating resin placed between a mold surface having microscopic asperities and a polarizing diffuser film. In this case, a coating resin solution may be poured into a gap between the mold surface and polarizing diffuser film, and after allowing the resin to adhere the polarizing diffuser film, the resin may be cured. Alternatively, the resin may be cured after applying and drying the coating resin solution over the polarizing diffuser film and pressing the mold against the film on the mold surface. There are no particular limitations on the method of applying the resin coating solution; any of the coating methods known in the art may be employed, such as bar coating, reverse coating, gravure coating, die coating, or roll coating.

2)The bead-containing coating resin layer contains coating resin (as a binder) and beads. For the coating resin as a binder, any of resins similar to those described above can be employed. The beads are composed of organic or inorganic compound, which is preferably transparent.

Examples of the transparent inorganic compound include silica. Examples of the transparent organic compound include acrylic resins such as polybutyl methacrylate (PBMA) and polymethylmethacrylate (PMMA); polyolefin resins

such as polyethylene; polyester resins; and polystyrene resins.

The beads may be chemically modified on their surface so as to be readily dispersed into the coating resin. The bead diameter ranges generally from 1 μm to 80 μm, preferably from 3 μm to 50 μm. There are no particular limitations on the particle size distribution of the beads; they may be monodispersed or polydispersed particles. The type, diameter and particle size distribution of the beads can be appropriately selected such that desired diffusion performance can be obtained.

The bead content in the bead-containing coating resin layer can be appropriately determined depending on the bead diameter, bead surface shape and required transmission haze; the beads can be added in an amount of 0.1wt% to 80wt% based on the total amount of the bead-containing coating resin layer.

The bead-containing coating resin layer can be formed by, for example, a method in which a bead dispersion, which is prepared by dispersing beads in a coating resin liquid, is applied, dried and cured over a polarizing diffuser film. The method of applying the bead dispersion may be effected in the same manner as described above.

The transmission haze of these surface light diffuser layers may range from about 2% to about 95%. However, when the transmission haze is too high, the surface light diffuser layer exhibits reduced total light transmittance. On the other hand, when the transmission haze is too low, the surface light diffuser layer exhibits insufficient light diffusion performance. When there is a need to reduce the glare of light on a lightguide or prism sheet, moire patterns thereon and rapid luminance changes due to viewing-angle change, the transmission haze of the surface light diffuser layer ranges preferably from about 50% to about 85%. On the other hand, when there is a need to prevent adhesion to the adjacent sheet or film or generation of a Newton ring, the transmission haze of the surface light diffuser layer ranges preferably from about 2% to about 20%. Moreover, as described later, when there is a need to collimate light beams, which emitted from the optical guide at shallow angles, to travel in the direction normal to the screen, the transmission haze of the surface light diffuser layer ranges preferably from about 40% to about 95%.

The transmission haze of the surface light diffuser layer can be found by measuring the transmission haze of a sample of the surface light diffuser layer, formed on a transparent PET film, in the same manner as described above.

When the coating resin layer free from beads is employed as the surface light diffuser layer, the thickness ranges preferably from about 1 μm to about 10 μm, and when the bead-containing resin layer is employed, the thickness (including the beads' thickness) ranges preferably from about 1 μm to 90 μm, more preferably from about 3 μm to 50 μm.

The surface light diffuser layer may be provided on either or both sides of the polarizing diffuser film. When the surface light diffuser layer is provided on both sides of the polarizing diffuser film, these surface light diffuse layers may be different in surface shape, transmission haze or material. When the surface light diffuser layer is provided on both sides of the polarizing diffuser film in this way, "warpage of the polarizing diffuser film" can be prevent, which may occur where the surface light diffuser layer is provided only on one side.

Another approach to cancel or reduce the glare of light on the lightguide or prism sheet, moire patterns thereon and rapid luminance changes due to viewing-angle change may involve increasing the internal haze of the polarizing diffuser film for increased light diffusion function. However, increasing the internal haze of the polarizing diffuser film may result in greater light loss or disturbance of polarized light. To avoid this, by providing such a surface light diffuser layer on the polarizing diffuser film, it is possible to increase the external haze exclusively without causing significant reduction in transmission polarization degree. Thus, a polarizing diffuser film having the surface light diffuser layer exhibits high transmission polarization degree and high transmission haze.

Furthermore, when a polarizing diffuser film having such a surface diffuser layer is applied on the lightguide, light beams, emitted from the lightguide at shallow angles, can be collimated to travel in the direction normal to the screen. By additionally applying on a diffuser sheet the "polarizing diffuser film having the surface light diffuser layer", light beams can be collimated to travel in the normal direction, which light beams cannot otherwise be sufficiently collimated where only the diffuser sheet is applied on the lightguide. The polarizing diffuser film having the surface light diffuser layer may thus enhance the normal-direction luminance of a liquid crystal display device.

## 4. Liquid crystal display device

A polarizing diffuser film of the present invention is preferably used as one component of a liquid crystal display device. More specifically, a liquid crystal display device of the present invention includes at least, in order, (A) a surface light source for a liquid crystal display backlight unit, (B) one or more optical devices and/or air gap, (C) a polarizing diffuser film of the present invention, and (D) a liquid crystal panel formed of a liquid crystal cell sandwiched between two or more polarizing plates.

### (A) Surface light source for liquid crystal display backlight unit

The surface light source for liquid crystal display backlight unit may be a side-lit (edge-lit) type surface light source, which is known light source(s) positioned at the side of the lightguide, or a direct-lit type surface light source,

which is known light source(s) positioned directly under a diffusion board. Examples of the known light sources include cold cathode fluorescent lamps (CCFLs), hot cathode fluorescent lamps (HCFLs), external electrode fluorescent lamps (EEFLs), flat fluorescent lamps (FFLs), light emitting diodes (LEDs), and organic electroluminescent devices (OLEDs).

(B) Optical device and/or air gap

The optical device refers to a device by which light from the surface light source of the backlight unit is diffused. Examples of the optical device include light diffuser films coated with a binder which contains fillers or beads, prism sheets, and microlens sheets. The air gap refers to an air layer formed between the surface light source of the backlight unit and the polarizing diffuser film of the present invention. The air layer serves as light reflection interfaces between the air layer and the surface light source and between the air layer and polarizing diffuser film, and can diffuse light emitted from the surface light source. Examples of the air gap include air layers formed at concaves of a prism sheet.

(D) Liquid crystal panel formed of liquid crystal cell sandwiched between two or more polarizing plates

The liquid crystal cell refers to a device which contains therein liquid crystal sealed between a pair of substrates. The substrates may be made of any known material; examples thereof include glass substrates and plastic films. Similarly, the polarizing plates may be made of any known material; examples thereof include dichroic polarizers containing dichroic dye. The lower polarizing plate is arranged on the surface of the liquid crystal cell at the surface light source A side, and the upper polarizing plate is arranged on the surface of the liquid crystal cell at the display screen side. The lower and upper polarizing plates are arranged so that their absorption axes are mutually perpendicular.

In large-size (e.g., 20 inch or larger) liquid crystal display devices, an upper polarizing plate is often placed with their absorption axes being oriented in the horizontal direction of the display screen. On the other hand, in medium-size or small-size (e.g., less than 20 inch) liquid crystal display devices, polarizing plates are often placed with their absorption axes being oriented at 45° to the vertical and horizontal directions of the display screen.

The above components A, B, C and D are preferably arranged in this order. FIG.7 is an exploded illustration showing an example of a liquid crystal display device of the present invention. In FIG.7, side-lit type surface light source A for liquid crystal display backlight unit consists of lightguide 50, reflection sheet 60, and light source 70. FIG.7 shows polarizing diffuser film 30 (component C) and optical device 40 (component B) such as a beads-coated diffuser film. In FIG.7, in some embodiments, a plurality of optical devices 40 may be provided, or not at all. Liquid crystal panel D consists of liquid crystal cell 10, upper polarizing plate 20, and lower polarizing plate 21.

FIG.8 is an exploded view of another example of a liquid crystal display device of the present invention, which is identical to the liquid crystal display device shown in FIG.7 except that it includes direct-lit type surface light source A in place of the side-lit type surface light source, and a diffuser plate. Direct-lit type surface light source A consists of an array of light sources 70 and reflection sheet 60. Diffuser plate 80 is arranged between direct-lit type surface light source A and optical device 40 such as a light diffuser film, prism sheet or microlens sheet. In FIG.8, in some embodiments, a plurality of optical devices 40 may be provided, or not at all.

FIG.9 is a schematic diagram for explaining the display mechanism of a liquid crystal display device of the present invention. In FIG.9, polarizing diffuser film 30 is shown to be placed with its stretch axis being horizontally oriented on the paper. Polarizing diffuser film 30 allows a light beam with linear polarization perpendicular to the stretch axis to pass through, but reflects a light beam with linear polarization parallel to the stretch axis. Lower polarizing plate 21 is shown to be placed with its absorption axis being horizontally oriented on the paper.

Non-polarized light 100 emitted from the light source includes polarized light beam P with linear polarization parallel to the stretch axis of polarizing diffuser film 30, and polarized light beam V with linear polarization perpendicular to the stretch axis of polarizing diffuser film 30. Many of the polarized light beams V of non-polarized light 100 pass through polarizing diffuser film 30 and emit as polarized light beams V101. Polarized light beams V101 then pass though lower polarizing plate 21 without being absorbed, and emit as display light beams. Many of the polarized light beams V101 diffuse in different directions while maintaining their polarization states, and emit as display light beams over a wide range of viewing angles.

Some of the polarized light beams P in non-polarized light 100 diffuse through polarizing diffuser film 30 and emit as polarized light beams P102, which are then absorbed by lower polarizing plate 21. Many of the other polarized light beams P in non-polarized light 100 are reflected back, and many of them become polarized light beams P103.

Polarized light beams 103 are further reflected by an optical device or reflective sheet (not shown) and at the same time are depolarized, becoming reflected light beams 104. Reflected light beams 104 are reused as non-polarized light 100. With this configuration described above, the liquid crystal display device of the present invention enables recycle of light and thus can provide high luminance as well as a wider viewing angle.

In the device shown in FIG.9, polarizing diffuser film 30 is preferably placed such that its reflection axis (or stretch axis in the case where the film is prepared by uniaxial stretching) is substantially in parallel to the absorption axis

of the lower polarizing plate 21. This is for increasing the display light amount and light use efficiency.

In a liquid crystal display device of the present invention, polarizing diffuser film C is preferably arranged adjacent to liquid crystal panel D. This arrangement may obviate the need to provide "upper diffuser film" or other components, which are provided between components B and D in conventional liquid crystal display devices. Specifically, since the liquid crystal display device of the present invention includes polarizing diffuser film C having excellent polarization selectivity and light diffusion property, it exhibits less luminance non-uniformity and high luminance regardless of the absence of a upper diffuser film or the like.

It is, of course, possible to provide additional film(s) between polarizing diffuser film C and liquid crystal panel D. In that case, it is preferable to provide film(s) which hardly disturb, reflect, or absorb polarized light beams V passing through polarizing diffuser film C. When the additional film is an optical film having a biaxially-stretched PET film as a base film, the additional film needs to be disposed such that the orientation axis (slow axis) of the biaxially-stretched PET film is parallel to or perpendicular to the stretching direction of polarizing diffuser film C.

Polarizing diffuser film C has two opposing surfaces that may have different crystalline states, more specifically different types of sea-island structure near their surface. In this case, depending on the configuration of the backlight unit, the polarizing diffuser film is preferably arranged such that the surface having a dense distribution of island portions faces surface light source A for liquid crystal display backlight unit, or is preferably arranged such that the surface having a dense distribution of island portions faces away from surface light source A for liquid crystal display backlight unit. By appropriately selecting the arrangement of polarizing diffuser film C in this way, it is possible to increase the relative normal-direction luminance and relative integral luminance of the liquid crystal display device, which are described later.

Of the two opposing surfaces of the polarizing diffuser film, the "surface having a dense distribution of island portions" is often identified as being the surface that has been in contact with a heating roll during the manufacturing process. This may be because the surface that contacts a heating roll (heating roll side-surface) tends to have higher surface temperature than the surface that does not come in contact with the heating roll (air-side surface), and therefore crystallization is more likely to proceed.

The "surface having a dense distribution of island portions" of the polarizing diffuser film can be identified by the same TEM observation method as used for sections of the polarizing diffuser film. More specifically, a sample piece is first prepared by cutting the polarizing diffuser film along the direction perpendicular to the stretching direction. A section of the sample piece is then observed by TEM at a position near one of the opposing film surfaces. In the same manner, the section is observed by TEM at a position near the other film surface. Of the two opposing film surfaces, the surface having a denser distribution of island portions observed is identified as the "surface having a dense distribution of island portions."

The "surface having a dense distribution of island portions" can also be identified, of the two opposing surfaces of the polarizing diffuser film, as the surface that has a higher measured value of transmission polarization degree or reflection polarization degree than the other surface, when transmission polarization degree or reflection polarization degree is measured with the respective surfaces as the light incident surface.

More specifically, the "surface that has a high measured value of transmission polarization degree or reflection polarization degree" can be identified in the manner described below. The polarizing diffuser film is placed on a sample holder of a spectrophotometer such that one surface faces the measurement light incident side, and optical characteristics are measured. Similarly, the polarizing diffuser film is placed on the sample holder such that the other surface faces the measurement light incident side, and optical characteristics are measured. The film surface that is determined to have a higher value of transmission polarization degree or reflection polarization degree is then identified as the "surface that has a high measured value of transmission polarization degree or reflection polarization degree."

A liquid crystal display device of the present invention preferably has a moderately high level of "relative normal-direction luminance." More specifically, it is preferable that a liquid crystal display device that includes the polarizing diffuser film exhibit a normal-direction luminance of 100 to 140, expressed relative to the normal-direction luminance of a reference liquid crystal display device (arbitrarily set at 100), which is identical to the liquid crystal display device of the present invention except for the absence of the polarizing diffuser film. The normal-direction luminance of a liquid crystal display device including the polarizing diffuser film of the present invention, expressed relative to the normal-direction luminance of a reference liquid crystal display (arbitrarily set at 100), is termed as "relative normal-direction luminance."

The relative normal-direction luminance of the liquid crystal display device can also be found in the manner described below.

1) In the case of a liquid crystal display device with light condensable sheet B

1-1) A liquid crystal display device is fabricated that includes, in order, surface light source A for backlight unit, light condensable sheet B, polarized light reflection sheet C or upper diffuser film C, and liquid crystal panel D formed of a liquid crystal cell sandwiched by two or more polarizing plates. Light condensable sheet B is, for

example, a prism sheet or microlens sheet.

1-2) A reference liquid crystal display device is fabricated by removing polarized light reflection sheet C or upper diffuser film C from the liquid crystal display device of 1-1). The normal-direction luminance of the reference liquid crystal display device is then measured.

1-3) On the other hand, a test liquid crystal display device is fabricated by arranging polarizing diffuser film C of the present invention instead of polarized light reflection sheet C or upper diffuser film C. The normal-direction luminance of the test liquid crystal display device is then measured.

1-4) The normal-direction luminance of the test liquid crystal display device of 1-3), expressed relative to the normal-direction luminance of the reference liquid crystal display of 1-2) (arbitrarily set at 100), is defined as "relative normal-direction luminance."

2) In the case of a liquid crystal display device without light condensable sheet B

2-1) A liquid crystal display device is fabricated that includes, in order, surface light source A for backlight unit, one or more light diffuser sheets B', and liquid crystal panel D obtained by sandwiching a liquid crystal cell by two or more polarizing plates (note that the liquid crystal display device is free from light condensable sheet B).

2-2) The liquid crystal display device in 2-1) is employed as a reference liquid crystal display device without modification. Alternatively, only one of light diffuser sheets B', which is arranged closest to liquid crystal panel D, is removed from the liquid crystal display device in 2-1) to prepare a reference liquid crystal display device. The normal-direction luminance of the reference liquid crystal display device is then measured.

2-3) On the other hand, polarizing diffuser film C of the present invention is arranged between light diffuser sheet (s) B' and liquid crystal panel D of the liquid crystal display device of 2-1) to fabricate a test liquid crystal display device. The normal-direction luminance of the test liquid crystal display device is then measured.

2-4) The normal-direction luminance of the test liquid crystal display device of 2-3), expressed relative to the normal-direction luminance of the reference liquid crystal display of 2-2) (arbitrarily set at 100), is defined as "relative normal-direction luminance."

Namely, "relative normal-direction luminance" is a measure of how much the normal-direction luminance of a liquid crystal display device increases by providing "polarizing diffuser film C of the present invention,"

A method of increasing the "relative normal-direction luminance" of a liquid crystal display device generally involves providing a light condensable sheet. As described above, the light condensable sheet may be, for example, a prism sheet (e.g., "BEF" manufactured by Sumitomo 3M Limited), or a microlens sheet. In order to effectively increase the relative normal-direction luminance of a liquid crystal display device, it is preferable to make the surface shape of at least one optical device B light condensable. The light condensable surface shape may be one or more shapes selected from one-dimensional prism, two-dimensional prism and microlens. Hereinafter, optical device B that has such a surface shape will be referred to as a "light condensable optical device B."

On the other hand, when the relative normal-direction luminance is high, the oblique-direction luminance tends to decrease because light beams emitting in oblique directions become more likely to travel in the direction normal to the screen. Reduction in the oblique-direction luminance results in narrower viewing angles. Thus, the 30° luminance ratio for the liquid crystal display device of the present invention ranges preferably from 1.40 to 1.73. It may range from 1.45 to 1.73 depending on the configuration of the liquid crystal display device.

The "30° luminance ratio" is correlated with the viewing angle of a liquid crystal display device; the smaller the value, the larger the luminance at off-normal viewing angles and thus the liquid crystal display device provides wider viewing angles. The "30° luminance ratio" can be measured in accordance with TCO'03 Displays (Flat Panel Displays ver.3.0 pages 63-66).

TCO Displays 5.0 (TCO standards for displays) requires that the 30° luminance ratio be 1.73 or less. TCO'03 Displays requires that the 30° luminance ratio be 1.70 or less.

Increasing the "30° luminance ratio" in a liquid crystal display device may involve providing a light diffuser sheet. However, liquid crystal display devices that include such a light diffuser sheet generally exhibit low relative normal-direction luminance. Namely, even when the light condensable sheet and light diffuser sheet are used in combination, it is difficult to ensure a good balance between "30° luminance ratio" and "relative normal-direction luminance." Although it is possible to increase the relative normal-direction luminance while reducing the 30° luminance ratio by employing a particular polarized light reflective sheet (e.g., "DEEF" manufactured by Sumitomo 3M Limited), it results in high costs.

Thus, in order to ensure a good balance between "30° luminance ratio" and "relative normal-direction luminance, it is preferable to employ polarizing diffuser film C of the present invention that exhibits high transmission polarization degree and moderate transmission haze. Preferably, polarizing diffuser film C of the present invention that exhibits high transmission polarization degree and moderate transmission haze is a polarizing diffuser film of the present invention in which the ratio of transmission polarization degree to transmission haze is adjusted to 1.6 or more. In other words,

polarizing diffuser film C of the present invention can increase the oblique-direction luminance (i.e., reduce the 30° luminance ratio) owing to its moderate transmission haze, without causing reduction in the normal-direction luminance owing to its high transmission polarization degree. As a result, it is possible to ensure a good balance between "30° luminance ratio" and "relative normal-direction luminance."

Moreover, it is more preferable to use polarizing diffuser film C of the present invention and light condensable optical device B in combination. Specifically, whereas light condensable optical device B increases the normal-direction luminance by light condensation, it reduces the oblique-direction luminance. Reduction in the oblique-direction luminance results in increased 30° luminance ratio (i.e., narrow viewing angle). Thus, by additionally using polarizing diffuser film C of the present invention that exhibits high transmission polarization degree and moderate transmission haze, owing to its high transmission polarization degree, it is possible to increase the oblique-direction luminance (i.e., reduce the 30° luminance ratio) without causing reduction in the normal-direction luminance which has been increased by light condensable optical device B.

Preferably, the liquid crystal display device of the present invention, which includes light condensable optical device B and polarizing diffuser film C of the present invention, has a relative normal-direction luminance of 1.00 to 110 and a 30° luminance ratio of 1.40 to 1.73.

In the liquid crystal display device of the present invention, light condensable optical device B is preferably arranged adjacent to polarizing diffuser film C. This is because if a highly light diffusive optical device is arranged between light condensable optical device B and polarizing diffuser film C, light beams condensed by means of light condensable optical device B diffuse, and therefore condensable optical device B becomes meaningless.

As described above, a liquid crystal display device that includes light condensable optical device B and polarizing diffuser film C of the present invention having controlled optical characteristics exhibits high relative normal-direction luminance and small 30° luminance ratio. It is thus made possible to provide a liquid crystal display device that can provide vivid images at wider viewing angles.

As described above, when polarizing diffuser film C includes one-dimensional prism shape on its surface, the ridge lines of the prisms preferably run in parallel or perpendicularly to the stretching direction of the uniaxially-stretched resin film. In general, the absorption axis of the lower polarizing plate, which is oriented along the stretching direction of the uniaxially-stretched resin film, is preferably oriented in the vertical direction of the display in the case of a large-size (e.g., 20 inch or larger) liquid crystal display device (e.g., LCD TV).

When the one-dimensional prisms are arranged so that their ridge lines are perpendicular to the stretching direction of the stretched resin film, it is often the case that the ridge lines are in parallel to the horizontal direction of the display screen. When the ridge lines of the one-dimensional prism run in parallel to the horizontal axis of the screen, reduction in luminance for horizontal turn angles becomes small.

When the polarizing plates are oriented at 45° to the vertical and horizontal directions of the display screen, the polarizing diffuser film according to present invention preferably has microlens shape rather than one-dimensional prism shape.

General polarizing plates have a surface protective film. In a liquid crystal display device of the present invention, however, polarizing diffuser film C may funciton as a surface protective film of the polarizing plate placed at the light source side (lower polarizing plate). Specifically, polarizing diffuser film C according to the present invention may be integrated with a polarizing plate to form a "polarizing plate with polarization selectivity and light diffusion praperty." In general, polarizers for polarizing plates are manufactured by uniaxial stretching, with their absorption axis oriented in the stretching direction. Thus, a "polarizing plate with polarization selectivity and light diffusion property" can be readily manufactured by bonding together a polarizing diffuser film C, which has been manufactured by longitudinal uniaxial roll stretching, and a polarizing plate by roll-to-roll process.

The use of polarizing diffuser film C of the present invention thus can eliminate the need to provide components of conventional liquid crystal display devices. Liquid crystal display devices with a reduced number of components have the advantage of being cost effective and thin.

Conventional liquid crystal display devices include the following components between components A and D in order to achieve any or all of luminance increase, luminance non-uniformity reduction and wider view angles: One or more diffuser films; One or more diffuser films and one or more prism sheets; or One or more diffuser films, one or more prism sheets, and one upper diffuser film. In some cases, conventional liquid crystal display devices include, in place of diffuser films, microlens films or polarized light reflective films (e.g., "DBEF" from Sumitomo 3M Limited) disposed adjacent to component D.

On the other hand, a liquid crystal display device of the present invention includes a film with excellent polarization selectivity and light diffusion property and thus exhibits high luminance, less luminance non-uniformity and wider view angle as well as high cost effectiveness, regardless of the absence of prism sheets, upper diffuser films and DBEF.

Examples

Hereinafter, the present invention will be described in more detail with reference to Examples, which however shall not be construed as limiting the scope of the invention thereto.

1. Study of microstructure

(Example 1)

A pellet of polyethylene terephthalate resin (homopolymer, DEG content: within standard range of 1.65±0.02 mol%) was melt-kneaded in a single-screw extruder (screw diameter: 40 mm, L/D = 32) equipped with a full-flight screw, and extruded from a T-die to be deposited as a cast sheet. T-die extrusion temperature was set to 265°C. The cast sheet was 600 μm in thickness.

The cast sheet was heated at 120°C in a gear oven for 3.7 minutes (for haze enhancing crystallization) to prepare a crystallized sheet to be stretched .

The raw sheet was cut into a 90 mm x 90 mm size sheet and attached to a polymer film biaxial stretcher (Iwamoto BIX-703) with each side clamped. Clamp interval was set to 70 mm for each side. The sheet was uniaxially stretched in the MD direction of the raw sheet. The loaded sheet was pre-heated. Pre-heating temperature (T2) was set to 117°C, and heating time was set to 1.5 minute. It was then uniaxially stretched 5 times its length at a stretching rate of 24 mm/sec to prepare a polarizing diffuser film. So-called "transverse sides-clamped stretching" was employed in which the sheet was stretched while the stretch sides were clamped. The polarizing diffuser film was 133 μm in thickness.

(Examples 2 to 6)

Uniaxial stretching was performed in the same manner as in Example 1 except that heating times for haze enhancing crystallization and pre-heating temperatures (T2) were changed as shown in Table 1, to prepare polarizing diffuser films.

(Examples 7 and 8)

Cast sheets were prepared in the same manner as in Example 1 except that the above polyethylene terephthalate resin pellet was changed to a pellet of different polyethylene terephthalate resin (homopolymer, DEG content: within standard range of 1.30±0.10 mold%) and that the T-die extrusion temperature was changed to 273°C. The cast sheets were then uniaxially stretched in the same manner as in Example 1 except that heating times and pre-heating temperatures (T2) were changed as shown in Table 2, to prepare polarizing diffuser films.

(Example 9)

Uniaxial stretching was performed in the same manner as in Example 7 except that heating temperature for haze enhancing crystallization and pre-heating temperature (T2) was changed as shown in Table 2, to prepare a polarizing diffuser film.

(Example 10)

Uniaxial stretching was performed in the same manner as in Example 1 except that heating temperature for haze enhancing crystallization and pre-heating temperature (T2) was changed as shown in Table 2, to prepare a polarizing diffuser film.

(Example 11)

A cast sheet was prepared in the same manner as in Example 1 except that the polyethylene terephthalate resin pellet used in Example 1 was changed to a pellet of different polyethylene terephthalate resin (homopolymer, ethylene/unsatuarted carboxylic acid copolymer content: <0.1 wt%, DEG content: 1.30±0.1 mol%) and that the T-die extrusion temperature was changed to 278°C. Uniaxial stretching was performed in the same manner as in Example 1 except that the resultant cast sheet was heated under the condition shown in Table 2, to prepare a polarizing diffuser film.

(Example 12)

A polarizing diffuser film was prepared in the same manner as in Example 1 except that the polyethylene terephthalate resin used in Example 1 was changed to different polyethylene terephthalate resin (comonomer composition: 0.5mol% isophthalic acid, 0.4mol% cyclohexanedimethanol, and 1.2mol% diethylene glycol).

The polarizing diffuser films prepared in Examples 1 to 12 were then measured for their total light transmittance (Ttotal); transmission polarization degree; transmission polarization degree at 100 μm film thickness; transmisson haze; total light reflectance (Rtotal); reflection polarization degree; diffuse reflectance; and diffuse reflectance at 100 μm film thickness. The crystallized sheets to be stretched, prepared in Examples, were also measured for their transmission haze at a point between haze enhancing crystallization and pre-heating. These measurements were made using Spectrophotometer U-4100 (Hitachi High-Technologies Corporation) and a 150 mm-diameter integrating sphere attachment.

Moreover, in Examples 2, 8 and 10 to 12, a section cut along the direction perpendicular to the stretching direction was observed by TEM. Specifically, using a glass knife of a ultramicrotome, the uniaxially stretched resin film was cut along the direction perpendicular to its stretching direction and in parallel to its thickness to prepare a thin section sample of 0.1 μm thickness. A sectional surface of the thin section sample was then imaged with a transmission electron microscope to obtain a TEM image (end view). Transmission electron microscope H-7650 (Hitachi High-Technologies Corporation) was used. Magnification was set at 20,000x, and observation area was set at 77 $\mu m^2$ (7 μm x 11 μm).

The obtained TEM image was binarized using image analysis software (ImageJ 1.32S developed by Wayne Rasband). From the binarized image, the number of bright portions in the observed area (77 $\mu m^2$), the average particle diameter of the bright portions, and the ratio of area occupied by the bright portions were measured.

Evaluation results in Examples 1 to 6 were summarized in Table 1, and evaluation results in Examples 7 to 12 were summarized in Table 2. The TEM image in Example 2 and its binarized image were shown in FIGs.1A and 1B, respectively; the TEM image in Example 8 and its binarized image in FIGs.10A and 10B, respectively; the TEM image in Example 10 and its binarized image in FIGs.11A and 11B, respectively; the TEM image in Example 11 and its binarized image in FIGs.12A and 12B, respectively; and the TEM image in Example 12 and its binarized image in FIGs.13A and 13B, respectively.

Table 1

| | | Ex.1 | Ex.2 | Ex.3 | Ex.4 | Ex.5 | Ex.6 |
|---|---|---|---|---|---|---|---|
| (1)Crystallized sheet | Heating temp.T1(°C) | 120 | 120 | 120 | 120 | 120 | 120 |
| | Heating time (min) | 3.7 | 3.7 | 3.3 | 4.3 | 4.3 | 4.3 |
| | Transmission haze (%) | 23.0 | 22.8 | 20.0 | 19.6 | 23.2 | 20.6 |
| (2)Stretched sheet | Pre-heating temp.T2 (°C) | 117 | 114 | 114 | 115 | 115 | 115 |
| | Pre-heating time (min) | 1.5 | 1.5 | 1.5 | 1.5 | 1.5 | 1.5 |
| | Stretching temp.T3(°C) | 117 | 114 | 114 | 115 | 115 | 115 |
| | Stretch ratio (fold) | 5.0 | 5.0 | 5.0 | 5.0 | 5.0 | 5.0 |
| | Stretching rate (mm/sec) | 24 | 24 | 24 | 24 | 24 | 24 |
| Thickness (μm) | | 133 | 135 | 122 | 132 | 129 | 120 |
| Transmission characteristics | Total light transmittance (%) | 58.7 | 59.9 | 62.3 | 61.3 | 58.6 | 61.4 |
| | Transmission polarization degree (%) | 59.3 | 58.3 | 56.3 | 56.9 | 57.4 | 56.5 |
| | Transmission polarization degree@100μm (%) | 51.9 | 50.7 | 51.2 | 49.9 | 50.9 | 51.9 |
| | Transmission haze (%) | 43.3 | 41.2 | 37.9 | 40.1 | 44.9 | 41.2 |

(continued)

| | | Ex.1 | Ex.2 | Ex.3 | Ex.4 | Ex.5 | Ex.6 |
|---|---|---|---|---|---|---|---|
| Reflection characteristics | Total light reflectance (%) | 31.6 | 30.6 | 29.1 | 29.5 | 31.4 | 29.7 |
| | Reflection polarization degree (%) | 72.5 | 73.0 | 73.2 | 73.4 | 72.0 | 73.2 |
| | Diffuse reflectance (%) | 28.4 | 27.8 | 25.4 | 26.2 | 29.0 | 26.9 |
| | Diffuse reflectance@100μm (%) | 21.3 | 20.6 | 20.8 | 19.9 | 22.4 | 22.4 |
| TEM observation | Count of bright portions (count /77 $\mu m^2$) | - | 442 | - | - | - | - |
| | Average particle diameter of bright portions (μm) | - | 0.34 | - | - | - | - |
| | Ratio of area occupied by bright portions (%) | - | 41 | - | - | - | - |

Table 2

| | | Ex.7 | Ex.8 | Ex.9 | Ex.10 | Ex.11 | Ex.12 |
|---|---|---|---|---|---|---|---|
| (1)Crystallized sheet | Heating temp.T1(°C) | 120 | 120 | 120 | 120 | 120 | 120 |
| | Heating time (min) | 4.7 | 4.7 | 4.8 | 4.0 | 5.7 | 4.8 |
| | Transmission haze (%) | 20.5 | 19.4 | 19.4 | 9.4 | 42.5 | 19.4 |
| (2)Stretched sheet | Pre-heating temp.T2 (°C) | 115 | 115 | 116 | 115 | 116 | 116 |
| | Pre-heating time (min) | 1.5 | 1.5 | 1.5 | 1.5 | 1.5 | 2.0 |
| | Stretching temp.T3 (°C) | 115 | 115 | 116 | 115 | 116 | 116 |
| | Stretch ratio (fold) | 5.0 | 5.0 | 5.0 | 5.0 | 5.0 | 5.0 |
| | Stretching rate (mm/sec) | 24 | 24 | 24 | 24 | 24 | 24 |
| Thickness (μm) | | 142 | 136 | 140 | 147 | 141 | 72 |
| Transmission characteristics | Total light transmittance (%) | 64.8 | 64.8 | 63.5 | 68.7 | 70.9 | 73.9 |
| | Transmission polarization degree (%) | 49.4 | 50.0 | 50.8 | 48.7 | 40.0 | 37.5 |
| | Transmission polarization degree@100μm (%) | 41.7 | 43.1 | 43.1 | 40.4 | 33.7 | 44.1 |
| | Transmission haze (%) | 36.4 | 34.7 | 34.5 | 31.3 | 42.5 | 60.4 |
| Reflection characteristics | Total light reflectance (%) | 27.2 | 26.8 | 27.3 | 24.5 | 21.1 | 18.7 |
| | Reflection polarization degree (%) | 66.9 | 68.2 | 68.0 | 69.7 | 63.4 | 62.4 |
| | Diffuse reflectance (%) | 20.2 | 22.7 | 20.3 | 16.8 | 13.9 | 17.4 |
| | Diffuse reflectance@100μm (%) | 14.3 | 16-7 | 14.5 | 11.5 | 9.8 | 24.2 |

(continued)

| | | Ex.7 | Ex.8 | Ex.9 | Ex.10 | Ex.11 | Ex.12 |
|---|---|---|---|---|---|---|---|
| TEM observation | Count of bright portions (count/77 $\mu m^2$) | - | 127 | - | 427 | 80 | 181 |
| | Average particle diameter of bright portions ($\mu$m) | - | 0.75 | - | 0.26 | 0.90 | 0.48 |
| | Ratio of area occupied by bright portions (%) | - | 58 | - | 32 | 54 | 37 |

It could be seen that the polarizing diffuser films prepared in Examples 1 to 11 exhibited higher transmission polarization degree, reflection polarization degree and total light reflectance compared to the polarizing diffuser film prepared in Example 12.

By comparing the TEM images shown in FIGs.1A and 10A to 13A, it could also be seen that fine island portions were more densely distributed in the polarizing diffuser films prepared in Examples 2, 8, 10 and 11 than in the polarizing diffuser film prepared in Example 12. The superior transmission polarization degree or reflection polarization degree and total light reflectance may be attributed to the presence of a larger number of interfaces between bright island portions and dark portion in the polarizing diffuser films prepared in Examples 1 to 11 compared to previous ones.

Among the polarizing diffuser films prepared, it was demonstrated that the polarizing diffuser films prepared in Examples 8 and 11 have bright portions having an average particle diameter which was apparently small in the TEM image, but was somewhat large when found by particle analysis. This may be due to the fact that a large number of fine bright island portions were connected to one another in a thread-like manner; therefore, diameter per one bright portion increases and a small number of bright portions was counted (see FIGs.10A and 12A).

(Example 13)

A pellet of polyethylene terephthalate resin ("J005" manufactured by Mitsui Chemicals Inc., homopolymer, DEG content: within standard range of 1.65$\pm$0.02 mol%) was prepared. The polyethylene terephthalate resin pellet was heated at 150°C for 4 hours in a dehumidification dryer (ADH750CL manufactured by Nissui Kako Co., LTd.).

As shown in FIG.3, the pellet was melt-kneaded in a single-screw extruder (screw diameter: 40 mm, L/D = 32) equipped with a full-flight screw under the condition shown in Table 3, and extruded from a T-die to be deposited as a cast sheet. The cast sheet was 591 $\mu$m in thickness.

The cast sheet was then heated at 120°C on a heating roll for 22 seconds to prepare a crystallized sheet to be stretched.

The raw sheet was cut into a 90 mm x 90 mm size sheet and attached to a polymer film biaxial stretcher (Iwamoto BIX-703) with each side clamped. Clamp interval was set to 70 mm for each side. The sheet was uniaxially stretched in the MD direction of the raw sheet. The loaded sheet was pre-heated. Pre-heating temperature (T2) was set to 115°C, and heating time was set to 1.5 minute. It was then uniaxially stretched 5 times its length at a stretching rate of 24 mm/sec to prepare a polarizing diffuser film. So-called "transverse sides-clamped stretching" was employed in which the sheet was stretched while the stretch sides were clamped. The polarizing diffuser film was 111 $\mu$m in thickness.

(Example 14)

In place of the pellet of polyethylene terephthalate resin ("J005" manufactured by Mitsui Chemicals Inc.) above, a pellet of different polyethylene terephthalate resin ("J125" manufactured by Mitsui Chemicals Inc. homopolymer, DEG content: within standard range of 1.30$\pm$0.10 mol%) was prepared. The polyethylene terephthalate resin pellet was heated at 150°C for 4 hours in a dehumidification dryer (ADH750CL manufactured by Nissui Kako Co., Ltd.).

A crystallized sheet to be stretched was then prepared in the same manner as in Example 13 except that the extrusion condition and crystallization condition were changed as shown in Table 3.

The crystallized sheet was then uniaxially stretched in the same manner as in Example 13 except that pre-heating temperature (T2) was changed as shown in Table 3, to prepare a polarizing diffuser film.

(Comparative Example 1)

A crystallized sheet to be stretched was prepared in the same manner as in Example 13 except that the extrusion condition and crystallization condition were changed as shown in Table 3.

The crystallized sheet was then uniaxially stretched in the same manner as in Example 13 except that stretching temperature was finely adjusted, to prepare a polarizing diffuser film.

(Comparative Example 2)

A crystallized sheet to be stretched was prepared in the same manner as in Example 14 except that the extrusion condition and crystallization condition were changed as shown in Table 3.

The crystallized sheet was then uniaxially stretched in the same manner as in Example 14 except that stretching temperature was finely changed, to prepare a polarizing diffuser film.

The polarizing diffuser films prepared in Examples 13 and 14 and Comparative Examples 1 and 2 were then measured for their total light transmittance (Ttotal); transmission polarization degree; transmission polarization degree at 100μm film thickness; and transmission haze. The crystallized sheets to be stretched, prepared in Examples and Comparative Examples, were also measured for their transmission haze, CIE b* value of diffuse light, CIE b* value at 1,000 μm film thickness, and light scattering ratios D2/D1, at a point between haze enhancing crystallization and pre-heating. The CIE b* value of diffuse light was found based on total light transmittance Ttotal, parallel light transmittance Tpara, and diffuse reflectance Rd. These measurements were made with Spectrophotometer U-4100 (Hitachi High-Technologies Corporation) and a 150mm-diameter integrating sphere attachment.

Measurement results in Examples 13 and 14 and Comparative Examples 1 and 2 were summarized in Table 3.

Table 3

| | | | Ex.13 | Ex.14 | Comp.Ex.1 | Comp.Ex.2 |
|---|---|---|---|---|---|---|
| Resin type | | | J005 | J125 | J005 | J125 |
| (1)Melt-extrusion | Discharge rate (kg/hr) | | 21 | 17.5 | 21 | 17.5 |
| | Extrusion temp. (°C) | C1-C2 | 275 | 275 | 275 | 275 |
| | | C3-C4 | 265 | 280 | 275 | 285 |
| | Adapter/Die temp.(°C) | AD-D | 250 | 270 | 270 | 270 |
| | Casting roll temp. (°C) | CR | 20 | 20 | 20 | 20 |
| | Haul-off speed (m/hr) | | 1.4 | 0.9 | 1.4 | 0.9 |
| (2)Crystallization | Heating temp.T1 (°C) | | 120 | 120 | 120 | 120 |
| | Heating time (sec) | | 22 | 52 | 52 | 70 |
| Evaluation (Crystallized sheet) | Thickness (μm) | | 591 | 638 | 626 | 618 |
| | CIE b* value | | -15.7 | -10.3 | -7.5 | -7.0 |
| | CIE b* value@1,000μm | | -18.7 | -11.9 | -8.8 | -8.3 |
| | Scattering ratio D2/D1 | | 4.05 | 1.88 | 1.34 | 1.31 |
| | Transmission haze (%) | | 14.6 | 25.6 | 20.8 | 22.0 |
| (3)Stretching | Pre-heating temp.T2 (stretch ing temp.T3) (°C) | | 115 | 116 | 115 | 118 |
| | Pre-heating time (min) | | 1.5 | 1.5 | 1.5 | 1.5 |
| | Stretch ratio (fold) | | 5.0 | 5.0 | 5.0 | 5.0 |
| | Stretching rate (mm/sec) | | 24 | 24 | 24 | 24 |
| Evaluation (polarizing diffuses film) | Thickness (μm) Total light transmittance (%) | | 111 | 125 | 146 | 118 |
| | | | 58.6 | 70.6 | 86.2 | 84.3 |
| | Transmission polarization degree (%) | | 55.1 | 41.7 | 13.8 | 19.8 |
| | Transmission polarization degree@100μm (%) | | 52.4 | 37.4 | 11.4 | 18.3 |
| | Transmission haze (%) | | 48.8 | 48.1 | 18.0 | 44.7 |

It could be seen that the crystallized sheets prepared in Examples 13 and 14 have small CIE b* values and thus were bluish. It could also be seen that the crystallized sheets prepared in Examples 13 and 14 exhibited a large D2/D1 ratio value of not less than 1.5, indicating that small particle scattering, which was less wavelength dependent, was dominant. These results suggest that the crystallized sheets prepared in Examples 13 and 14 have a dense distribution of fine crystalline portions. It could then be seen that the polarizing diffuser films prepared in Examples 13 and 14 exhibited high transmission polarization degree @100μm of not less than 35%.

By contrast, it could be seen that the crystallized sheets prepared in Comparative Examples 1 and 2 have high CIE b* values and thus were not bluish. It could also be seen that the crystallized sheets prepared in Comparative Examples 1 and 2 exhibited a small D2/D1 value of not greater than 1.5, indicating that small particle scattering, which was less wavelength dependent, was not dominant. From these results, it could be seen that the crystallized sheets prepared in Comparative Examples 1 and 2 do not have a dense distribution of fine crystalline portions and therefore the resultant polarizing diffuser film exhibited low transmission polarization degree.

2. Study of nucleating agent

(Example 15)

A pellet of polyethylene terephthalate resin A (homopolymer, DEG content: within standard range of 1.65±0.02 mol%) was melt-kneaded with 0.175wt% (based on polyethylene terephthalate resin A) nucleating agent (sodium salt of sulfonamide compound, melting point: 360°C to 370°C) in a single-screw extruder (screw diameter: 40 mm, L/D = 32) equipped with a full-flight screw, and extruded from a T-die to be deposited as a cast sheet. T-die extrusion temperature was set to 285°C. The cast sheet was 670 μm in thickness.

The cast sheet was heated at 120°C on a heating roll for 25 seconds (for haze enhancing crystallization) to prepare a crystallized sheet to be stretched.

The raw sheet was cut into a 90 mm x 90 mm size sheet and attached to a polymer film biaxial stretcher (Iwamoto BIX-703) with each side clamped. Clamp interval was set to 70 mm for each side. The sheet was uniaxially stretched in the MD direction of the raw sheet. The loaded sheet was pre-heated. Pre-heating temperature (T2) was set to 115°C, and heating time was set to 1.5 min. It was then uniaxially stretched 5 times its length at a stretching rate of 24 mm/sec to prepare a polarizing diffuser film. So-called "transverse sides-clamped stretching" was employed in which the sheet was stretched while the stretch sides were clamped. The polarizing diffuser film was 141 μm in thickness.

(Examples 16 to 17)

Polarizing diffuser films were prepared in almost the same manner as in Example 15 except that the added amount of the nucleating agent was changed as shown in Table 4.

(Examples 18 and 19)

Polarizing diffuser films were prepared in almost the same manner as in Example 15 except that the pellet of polyethylene terephthalate resin A was changed to a pellet of polyethylene terephthalate resin B (homopolymer, DEG content: within standard range of 1.30±0.10 mol%) and that the added amount of the nucleating agent was changed as shown in Table 4.

(Example 20)

A polarizing diffuser film was prepared in the same manner as in Example 18 except that the single-screw extruder (screw diameter: 40 mm, L/D = 32) equipped with a full-flight screw was changed to another single-screw extruder (screw diameter: 50 mm, L/D = 28.5) equipped with a full-flight screw.

(Comparative Example 3)

A polarizing diffuser film was prepared in the same manner as in Example 15 except that no nucleating agent was added and that heating time was changed as shown in Table 4.

(Comparative Example 4)

A polarizing diffuser film was prepared in the same manner as in Example 18 except that no nucleating agent was added and that heating time was changed as shown in Table 4.

(Example 21)

A polarizing diffuser film was prepared in the same manner as in Example 20 except that no nucleating agent was added and that heating time was changed as shown in Table 5.

(Example 22)

A polarizing diffuser film was prepared in the same manner as in Example 20 except that as a nucleating agent 0.2wt% sodium-2,2'-methylenebis(4,6-di-t-butylphenyl)phosphate ("NA11" manufactured by ADEKA Corp.) was employed instead of the sodium salt of sulfonamide compound (melting point: 360°C to 370°C) and that heating time was finely adjusted.

(Example 23)

100 weight parts of a pellet of polyethylene terephthalate (homopolymer, DEG content: within standard range of 1.65±0.02 mol%) were melt-kneaded with 0.1 weight parts of sodium montanate (manufactured by Clariant (Japan) K.K.), a nucleating agent, in a single-screw extruder (screw diameter: 40 mm, L/D = 32) equipped with a full-flight screw, and extruded from a T-die to be deposited as a cast sheet. T-die extrusion temperature was set to 285°C. The cast sheet was 617 μm in thickness.

The cast sheet was then heated at 120°C on a heating roll for 54 seconds (for haze enhancing crystallization) to prepare a crystallized sheet to be stretched (raw sheet).

The raw sheet was cut into a 90mm x 90mm size sheet and attached to a polymer film biaxial stretcher (Iwamoto BIX-703) with each side clamped. Clamp interval was set to 70 mm for each side. The sheet was uniaxially stretched in the MD direction of the raw sheet. The loaded sheet was pre-heated. Pre-heating temperature (T2) was set to 115°C, and heating time was set to 1.5 minute. It was then uniaxially stretched 5 times its length at a stretching rate of 24mm/sec to prepare a polarizing diffuser film. So-called "transverse sides-clamped stretching" was employed in which the sheet was stretched while the stretch sides were clamped. The polarizing diffuser film was 124 μm in thickness.

(Examples 24 to 28)

Polarizing diffuser films were prepared in the same manner as in Example 23 except that the raw material compositions, (1) crystallization conditions and (2) stretching conditions shown in Table 6 were used.

(Comparative Examples 5 and 6)

Polarizing diffuser films were prepared in the same manner as in Example 23 except that the raw material compositions, (1) crystallization conditions and (2) stretching conditions shown in Table 6 were used.

The polarizing diffuser films prepared in Examples and Comparative Examples were then measured for their total light transmittance (Ttotal); transmission polarization degree; transmission polarization degree at 100μm film thickness; and transmission haze. The crystallized sheets to be stretched, prepared in Examples, were also measured for transmission haze at a point between haze enhancing crystallization and pre-heating. These measurements were made using Spectrophotometer U-4100 (Hitachi High-Technologies Corporation) and a 150 mm-diameter integrating sphere attachment.

Evaluation results in Examples 15 to 19 and Comparative Examples 3 and 4 were summarized in Table 4, evaluation results in Examples 20 to 22 were summarized in Table 5, and evaluation results in Examples 23 to 28 and Comparative Examples 5 and 6 were summarized in Table 6.

Table 4

| | | Ex.15 | Ex.16 | Ex.17 | Ex.18 | Ex.19 | Comp. Ex.3 | Comp. Ex.4 |
|---|---|---|---|---|---|---|---|---|
| Composition | Polyethylene terephthalate resin | A | A | A | B | B | A | B |
| | Nucleating agent | Na-salt of sulfonamide compound | Na-salt of sulfonamide compound | Na-salt of sulfonamide compound | Na-salt of sulfonamide compound | Na-salt of sulfonamide compound | - | - |
| | Nucleating agent content (wt%) | 0.175 | 0.25 | 0.3 | 0.05 | 0.1 | 0 | 0 |
| (1)Crystallization | Thickness (μm) | 670 | 718 | 730 | 531 | 545 | 608 | 618 |
| | Heating temp.T1 (°C) | 120 | 120 | 120 | 120 | 120 | 120 | 120 |
| | Heating time (sec) | 25 | 25 | 20 | 60 | 36 | 140 | 76 |
| | Transmission haze (%) | 19.4 | 17.7 | 25.7 | 24.5 | 22.0 | 24.8 | 22.0 |
| (2)Stretching | Pre-heating temp.T2 (stretching temp.T3) (°C) | 115 | 115 | 115 | 115 | 115 | 115 | 115 |
| | Pre-heating time (min) | 1.5 | 1.5 | 1.5 | 1.5 | 1.5 | | 1.5 |
| | Stretch ratio (fold) | 5.0 | 5.0 | 5.0 | 5.0 | 5.0 | 5.0 | 5.0 |
| | Stretching rate (mm/sec) | 24 | 24 | 24 | 24 | 24 | | 24 |
| Thickness (μm) | | 141 | 158 | 140 | 98 | 112 | 138 | 118 |

(continued)

| | | Ex.15 | Ex.16 | Ex.17 | Ex.18 | Ex.19 | Comp. Ex.3 | Comp. Ex.4 |
|---|---|---|---|---|---|---|---|---|
| Optical characteristics | Total light transmittance (%) | 66.7 | 62.3 | 62.7 | | 65.6 | 88.6 | 84.3 |
| | Transmission polarization degree (%) | 48.8 | 55.2 | 53.2 | 32.3 | 49.0 | 11.6 | 19.8 |
| | Transmission polarization degree@100μm (%) | 41.3 | 44.3 | 45.2 | 32.6 | 46.3 | 9.9 | 18.3 |
| | Transmission haze (%) | 41.1 | 38.9 | 39.1 | 51.3 | 45.5 | 8.2 | 44.7 |

Table 5

| | | Ex.20 | Ex.21 | Ex.22 |
|---|---|---|---|---|
| Composition | Polyethylene terephthalate resin | B | B | B |
| | Nucleating agent | Na-salt of sulfonamide compound | - | NA11 |
| | Nucleating agent content (wt%) | 0.1 | 0 | 0.2 |
| | Thickness (μm) | 619 | 634 | 625 |
| | Heating temp.T1 (°C) | 120 | 120 | 120 |
| | Heating time (sec) | 55 | 71 | 59 |
| | Transmission haze (%) | 29.2 | 31.1 | 19.4 |
| (2)Stretching | Pre-heating temp.T2 (stretching temp.T3) (°C) | 115 | 115 | 115 |
| | Pre-heating time (min) | 1.5 | 1.5 | 1.5 |
| | Stretch ratio (fold) | | 5.0 | 5.0 |
| | Stretching rate (mm/sec) | 24 | 24 | 24 |
| Thickness (μm) | | 125 | 135 | 127 |
| Optical characteristics | Total light transmittance (%) | 64.4 | 80.9 | 73.9 |
| | Transmission polarization degree (%) | 52.8 | 23.8 | 30.1 |
| | Transmission polarization degree@100μm (%) | 47.5 | 20.5 | 26.7 |
| | Transmission haze (%) | 36.3 | 53.2 | 52.6 |

Table 6

| | | Ex.23 | Ex.24 | Ex.25 | Ex.26 | Ex.27 | Ex.28 | Comp. Ex.5 | Comp. Ex.6 |
|---|---|---|---|---|---|---|---|---|---|
| Composition | PET (weight parts) | 100 | 100 | 100 | 100 | 100 | 100 | 100 | 100 |
| | Sodium montanate (weight parts) | 0.1 | 0.15 | 0.2 | 0.4 | — | — | — | — |
| | Sodium benzoate (weight parts) | — | — | — | — | 0.05 | 0.1 | — | — |
| | Calcium montanate (weight parts) | — | — | — | — | — | — | — | 0.2 |
| (1) Crystallization | Thickness (μm) | 617 | 621 | 621 | 630 | 627 | 578 | 608 | 642 |
| | Heating temp.T1 (°C) | 120 | 120 | 120 | 120 | 120 | 120 | 120 | 120 |
| | Heating time (sec) | 54 | 43 | 35 | 28 | 50 | 29 | 140 | 90 |
| | Transmission haze (%) | 18.6 | 17 | 11.3 | 12.5 | 16.6 | 15.4 | 24.8 | 33.8 |

(continued)

| | | Ex.23 | Ex.24 | Ex.25 | Ex.26 | Ex.27 | Ex.28 | Comp. Ex.5 | Comp. Ex.6 |
|---|---|---|---|---|---|---|---|---|---|
| (2) Stretching | Pre-heating temp.T2 (stretching temp.T3) (°C) | 115 | 115 | 115 | 115 | 115 | 115 | 115 | 115 |
| | Pre-heating time (min) | 1.5 | 1.5 | 1.5 | 1.5 | 1.5 | 1.5 | 1.5 | 1.5 |
| | Stretch ratio (fold) | 5 | 5 | 5 | 5 | 5 | 5 | 5 | 5 |
| | Stretching rate (mm/sec) | 24 | 24 | 24 | 24 | 24 | 24 | 24 | 24 |
| Polarizing diffuser film | | | | | | | | | |
| Thickness (μm) | | 124 | 132 | 129 | 180 | 133 | 127 | 138 | 156 |
| Optical characteristics | Total light transmittance (%) | 65.4 | 62.6 | 65.4 | 72 | 70.8 | 66.4 | 88.6 | 86.9 |
| | Transmission polarization degree (%) | 52.1 | 53.1 | 45.5 | 32 | 45.7 | 45.7 | 11.6 | 17.4 |
| | Transmission polarization degree@100μm (%) | 47 | 46.5 | 40.3 | 23.8 | 39.8 | 40.5 | 9.9 | 13.9 |
| | Transmission haze (%) | 40.8 | 34 | 34.3 | 21.8 | 39.6 | 31.5 | 8.2 | 17.1 |

As shown in Tables 4 and 5, the films prepared in Examples 15 and 20 where a metal salt of sulfonamide compound was added as a nucleating agent exhibited certain levels of haze more rapidly than the films prepared in Comparative Examples 3 and 4 and Example 21 where no nucleating agent was added and the film prepared in Example 22 where another type of nucleating agent was used, without deteriorating optical characteristics of the resultant polarizing diffuser films (especially transmission polarization degree), and therefore were manufactured with high efficiency.

The results in Examples 15 to 17 reveal that crystallization rate increases with increasing amount of the nucleating agent, thus enhancing the manufacturing efficiency.

As evident from Table 6, the polarizing diffuser films prepared in Examples 23 to 28 where sodium montanate or sodium benzoate was added as a nucleating agent exhibited superior optical characteristics compared to the polarizing diffuser films prepared in Comparative Examples 5 and 6 where no nucleating agent was added. It could also be seen that the films prepared in Examples 23 to 28 exhibited certain levels of haze rapidly without deteriorating optical characteristics of the resultant 1 films (especially transmission polarization degree), and therefore were manufactured with high efficiency.

The results in Examples 23 to 26 also reveal that crystallization rate increases with increasing amount of the nucleating agent, thus enhancing the manufacturing efficiency.

3. Study of relative normal-direction luminance, relative integrate luminance and 30° luminance of a liquid crystal display device

(Example 29)

A pellet of polyethylene terephthalate resin ("J125JZD" manufactured by Mitsui Chemicals Inc.) was melt-kneaded in a single-screw extruder (screw diameter: 50 mm, L/D = 28.5) equipped with a full-flight screw, and extruded from a T-die to be deposited as a cast sheet. T-die extrusion temperature was set to 270°C. The cast sheet was 800 μm in thickness. The cast sheet was then heated at 120°C on a heating roll for 40 seconds (for haze enhancing crystallization) to prepare a crystallized sheet to be stretched.

The obtained crystallized sheet was coated with silicone oil (dimethylsilicone oil "KF-96" manufactured by Shin-Etsu Chemical Co., Ltd.) to cancel external haze, followed by measured of transmission haze using turbidimeter NDH2000 (Nippon Denshoku Industries Co., Ltd.).

The crystallized sheet was guided to a tenter stretching machine and stretched 5 times its length in TD direction thereof to prepare a polarizing diffuser film of about 206 μm thickness.

(Example 30)

A pellet of polyethylene terephthalate ("J005" manufactured by Mitsui Chemicals Inc.) was melt-kneaded in a single-screw extruder (screw diameter: 40 mm, L/D = 32) equipped with a full-flight screw, and extruded from a T-die to be deposited as a cast sheet. T-die extrusion temperature was set to 270°C. The cast sheet was 800 μm in thickness. The cast sheet was then heated at 120°C on a heating roll for 40 seconds (for haze enhancing crystallization) to prepare a crystallized sheet to be stretched.

The obtained crystallized sheet was coated with silicone oil (dimethylsilicone oil "KF-96" manufactured by Shin-Etsu Chemical Co., Ltd.) to cancel external haze, followed by measured of transmission haze using turbidimeter NDH2000 (Nippon Denshoku Industries Co., Ltd.).

The crystallized sheet was guided to a tenter stretching machine and stretched 5 times its length in TD direction thereof to prepare a polarizing diffuser film of about 178 μm thickness.

(Example 31)

A pellet of polyethylene terephthalate ("J005" manufactured by Mitsui Chemicals Inc.) was melt-kneaded in a single-screw extruder (screw diameter: 90 mm, L/D = 28) equipped with a full-flight screw, and extruded from a T-die to be deposited as a cast sheet. T-die extrusion temperature was set to 270°C. The cast sheet was 800 μm in thickness. The cast sheet was then heated at 120°C on a heating roll for 50 seconds (for haze enhancing crystallization) to prepare a crystallized sheet to be stretched.

The obtained crystallized sheet was coated with silicone oil (dimethylsilicone oil "KF-96" manufactured by Shin-Etsu Chemical Co., Ltd.) to cancel external haze, followed by measured of transmission haze using turbidimeter NDH2000 (Nippon Denshoku Industries Co., Ltd.).

The crystallized sheet was guided to a tenter stretching machine and stretched 5 times its length in TD direction thereof to prepare a polarizing diffuser film of about 186 μm thickness.

(Example 32)

A pellet of polyethylene terephthalate ("J005" manufactured by Mitsui Chemicals Inc.) was melt-kneaded in a single-screw extruder (screw diameter: 90 mm, L/D = 28) equipped with a full-flight screw, and extruded from a T-die to be deposited as a cast sheet. T-die extrusion temperature was set to 270°C. The cast sheet was 800 μm in thickness. The cast sheet was then heated at 120°C on a heating roll for 50 seconds (for haze enhancing crystallization) to prepare a crystallized sheet to be stretched.

The obtained crystallized sheet was coated with silicone oil (dimethylsilicone oil "KF-96" manufactured by Shin-Etsu Chemical Co., Ltd.) to cancel external haze, followed by measured of transmission haze using turbidimeter NDH2000 (Nippon Denshoku Industries Co., Ltd.).

The crystallized sheet was guided to a tenter stretching machine and stretched 5 times its length in TD direction thereof to prepare a polarizing diffuser film of about 213 μm thickness.

(Comparative Example 7)

Instead of the polarizing diffuser film, a upper diffuser film ("D117VGZ" manufactured by Tsuijiden Co., LTd., transmission haze: 48%, thickness: 214 μm) was employed.

(Comparative Example 8)

Neither the polarizing diffuser film nor polarized light reflective sheet was employed.

The polarizing diffuser films prepared in Examples 29 to 32 and the upper diffuser film used in Comparative Example 7 were measured for total light transmittance, transmission haze and transmission polarization degree in the same manner as described above. Moreover, liquid crystal display devices that include the polarizing diffuser films prepared in Examples 29 to 32 or the upper diffuser film used in Comparative Example 7, and the reference liquid crystal display device prepared in Comparative Example 8 were measured for their relative normal-direction luminance, relative integral luminance and 30° luminance in the manner described in <Method of evaluating luminance> given below.

Measurement results were shown in Table 7.

<Method of evaluating luminance>

First, 18.5-inch wide liquid crystal display devices (manufactured by LG Display Co., Ltd. model: LM185WH1-TLA1, TN mode TFT-LCD) were provided. Between the lightguide of the backlight unit (dual CCFL, side-lit type) and liquid crystal panel of each liquid crystal display device, a bead-coated diffuser sheet (transmission haze: 85%), a prism sheet (ridge lines run in parallel to the horizontal axis of the screen, pitch: 50 μm), and a polarized light reflective sheet ("DBEF-D" manufactured by Sumitomo 3M Limited) were sequentially arranged from the lightguide. These liquid crystal display devices were remodeled as follows.

Preparation of reference liquid crystal display device

A polarized light reflective sheet was removed from the 18.5-inch wide liquid crystal display to prepare a liquid crystal display device for reference (Comparative Example 8).

Preparation of test liquid crystal display device

The above 18.5-inch wide liquid crystal display devices were remodeled to prepare test liquid crystal display devices, by replacing their polarized light reflective sheet with the polarizing diffuser films prepared in Examples 29 to 32 or the upper diffuser film prepared in Comparative Example 7. The polarizing diffuser films and upper diffuser film were of the same size as the polarized light reflective sheets replaced. The polarizing diffuser film was arranged such that its stretch axis (reflection axis) was substantially parallel to the absorption axis of the lower polarizing plate of the liquid crystal panel.

1) Measurement of relative normal-direction luminance

1-1) The reference liquid crystal display device was placed on a θ stage of a luminance meter with the screen front aligned vertically. The measurement axis of the luminance meter was aligned with the normal of the screen surface at a measurement point (0° screen rotation). The normal-direction luminance (luminance at 0° screen rotation) at the center of the screen was then measured with the luminance meter ("BM-7" manufactured by Topcon Technohouse Corporation).
1-2) In the same manner as in 1-1), the normal-direction luminance was measured for the test liquid crystal display device.
1-3) The normal-direction luminance of the test liquid crystal display device measured in 1-2), expressed relative to the normal-direction luminance of the reference liquid crystal display measured in 1-1) (arbitrarily set at 100), was calculated to find "relative normal-direction luminance."

2) Measurement of relative integral luminance

2-1) The luminance at the center-point of the screen of the reference liquid crystal display device was then measured at every 5° from -85° to +85° screen rotation around a vertical axis through the screen center-point. The viewing angle upon luminance measurement (measurement field at each measurement angle) was 0.1°. The luminance values measured in 5° increments from -85° to +85° rotation were then summed to find "integral luminance."
2-2) In the same manner as in 2-1), the integrate luminance was measured for the test liquid crystal display device.
2-3) The integral luminance of the test liquid crystal display device measured in 2-2), expressed relative to the integrate luminance of the reference liquid crystal display measured in 2-1) (arbitrarily set at 100), was calculated to find "relative oblique-direction luminance (relative integral luminance)."

3) Measurement of the 30° luminance ratio (evaluation of horizontal angular dependence specified by TCO'03 Displays)

In accordance with TCO'03 Displays (Flat Panel Displays ver.3.0 P.63-66), the screen of the liquid crystal display device (reference or test) was rotated such that angle between the normal of the screen surface and the measurement axis of the luminance meter becomes 30°, and then luminances at two particular measurement positions

(particular left and right side positions) on the screen were recorded. Horizontal angular dependence was evaluated based on these measurements recorded.

FIGs.14A and 15 were illustrations for explaining the method of measuring the 30° luminance ratio as specified in TCO'03 Displays Flat Panel Displays Ver.3.0 2005-10-9. Specifically, as illustrated in FIG.14A, luminance meter 112 ("BM-7" manufactured by Topcon Technohouse Corporation) was directed towards the screen of liquid crystal display device 110. The screen was then rotated around the vertical axis through the screen center-point such that the angle between the normal of screen surface of liquid crystal display device 110 and the measurement axis of luminance meter 112 becomes 30°. At this point, the distance between the center-point of the screen and the luminance meter was set at 1.5 x the screen diagonal (note that this distance should be larger than 500 mm). In the case of the 18.5-inch wide liquid crystal display device (18.5-inch diagonal screen), the distance between the screen and the luminance meter was 705 mm.

As illustrated in FIG.14B, where the horizontal and vertical lengths of the screen of liquid crystal display device 110 were defined as "W and "H", respectively, the "particular left side position" was located at a position one-tenths the length W from the left screen edge and half the length H from either the top or bottom screen edge. Similarly, the "particular right side position" was located at a position one-tenths the length W from the right screen edge and half the length H from either the top or bottom screen edge. The luminance of 40 mm x 40 mm squares that respectively have at their center the "particular left position" and "particular right side position" (collectively referred to as "particular left and right side positions") was set to maximum (RGB 255, 255, 255 in the case of 256 gray scale), whereas the screen background was set to RGB 204, 204, 204 (equal to 80% image loading).

Where the luminance at the particular left side position was defined as PL and the luminance at the particular right side position as PR, the 30° luminance ratio was found as the ratio of maximum value (PL, PR) to minimum value (PL, PR). Maximum value (PL, PR) was the higher of the two values of PL and PR, and minimum value (PL, PR) was the lower of the two values of PL and PR. Subsequently, as illustrated in FIG.14A, the screen of liquid crystal display device 110 was rotated 30° clockwise around a vertical axis through the screen center-point (the +rotation was defined clockwise), and a +30° luminance ratio was measured. The screen of liquid crystal display device 110 was rotated 30° counterclockwise around a vertical axis through the same screen center-point, and a -30° luminance ratio was measured. The mean value of the +30° luminance ratio and -30° luminance ratio was defined as "30° luminance ratio."

Table 7

| | | Ex.29 | Ex.30 | Ex.31 | Ex.32 | Comp. Ex.7 | Comp. Ex.8 |
|---|---|---|---|---|---|---|---|
| Polarizing diffuser film C | Transmission haze (%) of crystallized sheet | 30 | 30 | 23 | 22 | — | — |
| | Total light transmittance (%) | 59 | 57 | 61 | 54 | 87 | — |
| | Transmission haze (%) | 35 | 35 | 30 | 37 | 48 | — |
| | Transmission polarization degree (%) | 61 | 64 | 60 | 66 | — | — |
| | Thickness (μm) | 206 | 178 | 186 | 213 | 214 | — |
| | Ratio of transmission polarization degree to transmission haze | 1.74 | 1.83 | 2 | 1.78 | — | — |
| Luminance (relative to luminance without film C arbitrarily set at 100) | Relative normal-direction luminance | 101 | 102 | 105 | 103 | 97 | 100 |
| | Relative integrate luminance | 107 | 108 | 110 | 110 | 95 | 100 |
| | 30° luminance ratio | 1.53 | 1.54 | 1.62 | 1.58 | 1.81 | 1.71 |

As shown in Table 7, the liquid crystal display devices that include the polarizing diffuser films prepared in Examples 29 to 32, which exhibit a transmission polarization degree/transmission haze ratio of not less than 1.6, exhibited relative normal-direction luminance and relative integral luminance of not less than 100, which were higher than the

normal-direction luminance and relative integrate luminance of the liquid crystal display devices that include the polarizing diffuser films prepared in Comparative Examples 7 and 8. It could also be seen that the 30° luminance ratios of the liquid crystal display devices that include the polarizing diffuser films prepared in Examples 29 to 32 were lower than the 30° luminance ratio of the liquid crystal display device that include the upper diffuser film prepared in Example 7, thus exhibiting a good balance between the 30° luminance ratio and relative normal-direction luminance.

4. Study of the mounting direction of polarizing diffuser film (Example 33)

A pellet of polyethylene terephthalate resin ("J005" manufactured by Mitsui Chemicals Inc., homopolymer, DEG content: within standard range of 1.65±0.02 mol%)) was prepared. The polyethylene terephthalate resin pellet was heated at 150°C for 4 hours in a dehumidification dryer (ADH750CL manufactured by Nissui Kako Co., LTd.). It was then melt-kneaded at 272°C in a single-screw extruder (screw diameter: 90 mm, L/D = 28) equipped with a full-flight screw, and extruded from a T-die to be deposited as a cast sheet.

The cast sheet was then heated at 119°C on a heating roll for 49 seconds to prepare a crystallized sheet to be stretched.

The crystallized sheet was guided to a tenter stretching machine and stretched 5 times its length in TD direction thereof to prepare a polarizing diffuser film of about 176 μm thickness.

The polarizing diffuser films thus prepared were measured for their total light transmittance (Ttotal); transmission polarization degree; transmission polarization degree at 100 μm film thickness; transmission haze; total light reflectance (Rtotal); and reflection polarization degree. These measurements were made using Spectrophotometer U-4100 (Hitachi High-Technologies Corporation) and a 150 mm-diameter integrating sphere attachment.

These measurements were made while changing the surface of the polarizing diffuser film directed towards the spectrophotometer. More specifically, the polarizing diffuser film has two different surfaces: one surface that has been in contact with a heating roll during the manufacturing process (heating roll-side surface), and the other surface that has not been in contact with the heating roll during the manufacturing process (air side-surface); therefore, the measurements were made for 1) the heating roll-side surface and 2) air side-surface of the polarizing diffuser film. Measurement results were shown in Table 8.

A polarizing diffuser film prepared under the same condition as in Example 33 was cut along the direction perpendicular to the stretching direction, and a section (end view) of the film was observed by TEM. A sectional TEM image (end view) of the film in the vicinity of a heating roll-side surface was shown in FIG.15A, and a sectional TEM image (end view) of the film in the vicinity of air side surface was shown in FIG.15B.

The relative normal-direction luminance and relative integral luminance of liquid crystal display devices that include the resultant polarizing diffuser film were measured in the same manner as described in <Method of evaluating luminance> above. Specifically, 18.5-inch wide liquid crystal display devices (manufactured by LG Display Co., Ltd. model: LM185WH1-TLA1, TN mode TFT-LCD) were provided. The liquid crystal display devices were remodeled as follows.

1) In the case where a prism sheet was provided

Preparation of reference liquid crystal display device

The 18.5-inch wide liquid crystal display device was remodeled by removing a polarized light reflective sheet to prepare a liquid crystal display device for reference.

Preparation of test liquid crystal display device

The 18.5-inch wide liquid crystal display device was remodeled to prepare a test liquid crystal display device by replacing the polarized light reflective sheet with the polarizing diffuser film prepared in Examples 33. The polarizing diffuser film was of the same size as the polarized light reflective sheet replaced. The polarizing diffuser film was arranged such that its stretch axis (reflection axis) was substantially parallel to the absorption axis of the lower polarizing plate of the liquid crystal panel.

2) In the case where no prism sheet was provided

Preparation of reference liquid crystal display device

The 18.5-inch wide liquid crystal display device was remodeled by removing a polarized light reflective sheet and a prism sheet to prepare a liquid crystal display device for reference.

Preparation of test liquid crystal display device

The 18.5-inch wide liquid crystal display device was remodeled to prepare a test liquid crystal display device by removing a prism sheet and by replacing the polarized light reflective sheet with the polarizing diffuser film prepared in Examples 33. The polarizing diffuser film was of the same size as the polarized light reflective sheet replaced. The polarizing diffuser film was arranged such that its stretch axis (reflection axis) was substantially parallel to the absorption axis of the lower polarizing plate of the liquid crystal panel.

The relative normal-direction luminance and relative integral luminance of the test liquid crystal display devices with and without the prism sheet were measured in the same manner as described in <Method of evaluating luminance> above. Measurement results were shown in Table 8.

Table 8

| | | Ex.33 | |
|---|---|---|---|
| Light incident surface (light source side-surface) | | Heating roll side | Air side |
| Crystallized sheet | Heating temp.T1 (°C) | 119 | |
| | Heating time (sec) | 49 | |
| | Transmission haze (%) | 21 | |
| Thickness (μm) | | 176 | |
| Transmission characteristics | Total light transmittance (%) | 56.6 | 57.3 |
| | Transmission polarization degree (%) | 64.4 | 63.3 |
| | Transmission polarization degree @100μm (%) | 49.6 | 48.6 |
| | Transmission haze (%) | 37.7 | 39.7 |
| Reflection characteristics | Total light reflectance (%) | 35.4 | 34.8 |
| | Reflection polarization degree (%) | 73.8 | 72.8 |
| Display characteristics | Relative normal-direction luminance (with prism sheet) | 103.4 | 103.8 |
| | Relative integrate luminance (with prism sheet) | 113.1 | 114.1 |
| | Relative normal-direction luminance (without prism sheet) | 128.3 | 127.5 |
| | Relative integrate luminance (without prism sheet) | 128.8 | 127.3 |

From the results presented in Table 8, it could be seen that transmission polarization degree and reflection polarization degree vary depending on whether which surface of the polarizing diffuser film was directed towards the light source side (light incident side). More specifically, it could be seen that transmission polarization degree and reflection polarization degree were somewhat high when the heating roll-side surface of the polarizing diffuser film was directed towards the light incident side (light source side) compared to when the air-side surface was directed towards the light incident side (light source side).

Moreover, as shown in FIGs.15A and 15B, bright portions (islands) were more densely formed in the vicinity of the heating roll-side surface (FIG.15A) of the polarizing diffuser film than in the vicinity of the air-side surface (FIG. 15B). These results suggest that the polarizing diffuser film exhibited a higher polarization degree on the heating roll-side surface than on the air-side surface.

As to display characteristics of the prism sheet-free liquid crystal display devices, it could be seen that relative normal-direction luminance and relative integral luminance were high when the heating roll-side surface of the polarizing diffuser film was directed towards the light incident side (light source side) compared to when the air-side surface was directed towards the light incident side (light source side). These results suggest that in a prism sheet-free liquid crystal display device, the polarizing diffuser film was preferably arranged such that its heating roll-side surface was directed towards the light source side.

5. Study of surface light diffuser layer

(Example 34)

A pellet of polyethylene terephthalate resin (homopolymer, DEG content: within standard range of 1.65±0.02 mol%) was melt-kneaded in a single-screw extruder (screw diameter: 90 mm, L/D = 28) equipped with a full-flight screw, and extruded from a T-die to be deposited as a cast sheet. T-die extrusion temperature was set to 272°C. The cast sheet was 800 μm in thickness.

The cast sheet was then heated at 130°C on a heating roll for 23 seconds to prepare a crystallized sheet to be stretched. The transmission haze of the crystallized sheet was 21%.

The crystallized sheet was guided to a tenter stretching machine and stretched 5 times its length in TD direction thereof to prepare a polarizing diffuser film of about 173 μm thickness.

Formation of surface light diffuser layer

Acrylic resin beads (material: polybutylmethacrylate, average particle diameter: 5 μm, haze as measured when applied over transparent PET film: 9.89%) were mixed with 3 wt% acrylic photocurable resin to prepare a coating solution for surface light diffuser layer.

The coating solution thus prepared was then applied on one side of the above-described stretched film with a barcoater. In this way a polarizing diffuser film was prepared that includes a 5 μm-thick surface light diffuser layer (thickness at bead-free area was 3.5 μm) formed on the surface.

(Example 35)

A polarizing diffuser film was prepared in the same manner as in Example 34 except that no surface light diffuser layer was formed.

(Comparative Example 9)

A diffuser film was prepared in the same manner as in Example 14 except that a 188 μm-thick biaxially-stretched polyethylene terephthalate (PET) film was employed instead of the stretched film.

The polarizing diffuser films prepared in Examples 34 and 35 and the film prepared in Comparative Example 9 were measured for their transmission haze, transmission polarization degree, and reflection polarization degree. These measurements were made using Spectrophotometer U-4100 (Hitachi High-Technologies Corporation) and a 150mm-diameter integrating sphere attachment. The transmission haze of the polarizing diffuser films was also measured using a haze meter (turbidimeter NDH2000 from Nippon Denshoku Industries Co., Ltd). Measurement results were shown in Table 9.

The surface of the surface light diffuser layer of the polarizing diffuser film prepared in Example 34 was observed with an optical microscope at 450x magnification. The optical microscopic image thus taken was shown in FIG.16.

The relative normal-direction luminance and relative integral luminance of the liquid crystal display devices that include the films prepared in Examples 34 and 35 or Comparative Example 9 were measured in the same manner as the method of evaluating luminance described in <4. Study of the mounting surface of polarizing diffuser film> above. Measurement results were shown in Table 9.

Table 9

| | | Ex.34 | Ex.35 | Comp.Ex.9 |
|---|---|---|---|---|
| Polarizing diffuser film | Base layer | Stretched film | Stretched film | PET film (commercial product) |
| | Presence of surface light diffuser layer | YES | NO | YES |

(continued)

| | | | | Ex.34 | Ex.35 | Comp.Ex.9 |
|---|---|---|---|---|---|---|
| Optical characteristics | Transmission haze (%) | Haze meter | | 50.5 | 41.5 | 12.4 |
| | | Spectrophotometer | | 35.0 | 34.5 | 6.8 |
| | Transmission polarization degree (%) | | | 57.5 | 60.7 | Measurement failed |
| | Reflection polarization degree (%) | | | 74.1 | 72.8 | Measurement failed |
| | Total light transmittance (%) | | | 63.0 | 60.1 | 89.3 |
| | Relative normal-direction luminance (%) | With prism sheet | Surface lightdiffuser layer faces away from light source | 100 | 100 | 97 |
| | Relative integrate luminance (%) | | | 107 | 107 | 100 |
| | Relative normal-direction luminance (%) | Without prism sheet | Surface lightdiffuser layer faces away from light source | 122 | 119 | 103 |
| | Relative integrate luminance (%) | | | 121 | 118 | 105 |

As shown in Table 9, it could be seen that the polarizing diffuser film prepared in Example 34, which includes the surface light diffuser layer, exhibited higher transmission haze than the polarizing diffuser film prepared in Example 35, which is free from the surface light diffuser layer, while keeping high transmission polarization degree and high reflection polarization degree. Owing to high transmission haze, the polarizing diffuser film having the surface light diffuser layer reduce the glare of light on prism sheet or moire patterns thereon.

As to the display characteristics of the prism sheet-containing liquid crystal display devices, it could be seen the liquid crystal display devices prepared in Examples 34 and 35 exhibited similar display characteristics. However, as to the display characteristics of the prism sheet-free liquid crystal display devices, it could be seen that the liquid crystal display device prepared in Example 34, which includes the polarizing diffuser film having the surface light diffuser layer, exhibited somewhat higher relative normal-direction luminance and relative integrate luminance than the liquid crystal display device prepared in Example 35, which includes the polarizing diffuser layer without the surface light diffuser layer.

This application is entitled and claims the priority of Japanese Patent Application No.2009-295817 filed on December 25, 2009, Japanese Patent Application No.2009-297761 filed on December 28, 2009, Japanese Patent Application No.2009-297762 filed on December 28, 2009, Japanese Patent Application No.2010-073650 filed on March 26, 2010, and Japanese Patent Application No.2010-129944 filed on June 7, 2010, the entire content of each of which including the specification and drawings is herein incorporated by reference.

Industrial Applicability

The present invention provides a film that effectively allows polarized light of particular polarization to pass though and diffuse, and reflects polarized light with polarization perpendicular to that of the light passed through. A liquid crystal display device that includes this film provides uniform luminance while exhibiting high luminance and wide viewing angles.

Reference Signs List

1 Melt extrusion molding machine

2 Melt-extruder
2A Cylinder
2B Screw
4 T-die
6 Hopper
8 Casting roll
9 Amorphous sheet
10 Liquid crystal cell
20 Upper polarizing plate
21 Lower polarizing plate
30 Polarizing diffuser film
40 Optical device
50 Lightguide
60 Reflective sheet
70 Light source
08 Diffuser plate
100 Non-polarized light from light source
101 Polarized light V
102 Polarized light P
103 Polarized light P
104 Reflected light
110 Liquid crystal display device
112 Luminance meter

**Claims**

1. A polarizing diffuser film made of substantially one kind of crystalline resin having an intrinsic birefringence of 0.1 or more, wherein
a total light transmittance to visible light ranges from 50% to 90%,
a transmission haze to visible light ranges from 15% to 90%, and
a transmission polarization degree to visible light ranges from 20% to 90%.

2. The polarizing diffuser film according to claim 1, wherein
the total light transmittance to visible light ranges from 50% to 80%,
a total light reflectance to visible light ranges from 20% to 50%, and
a reflection polarization degree to visible light ranges from 50% to 95%.

3. The polarizing diffuser film according to claim 2, wherein
a diffuse reflectance at 100 μm film thickness ranges from 11% to 50%.

4. The polarizing diffuser film according to claim 2, wherein
the polarizing diffuser film is a uniaxially-stretched resin film,
a crystallinity of the uniaxially-stretched resin film ranges from 8% to 40%,
a sea-island structure is observed in a TEM image of a section of the uniaxially-stretched resin film, the section cut along a direction perpendicular to a stretching direction of the uniaxially-stretched resin film, the TEM image having an image area of 77 $\mu m^2$ and a length in film thickness direction of 0.1 μm,
a sea portion and island portions of the sea-island structure are made of substantially the same composition,
an average particle diameter of the island portions in a binarized image of the sea-island structure ranges from 0.1 μm to 0.8 μm, and
the number of the island portions is 200 to 1,200 in the TEM image having an image area of 77 $\mu m^2$.

5. The polarizing diffuser film according to claim 1, wherein
the polarizing diffuser film further contains an alkali metal salt of a carboxylic acid having an HLB value of 1 to 7.5 as measured by Griffin's method, and
the alkali metal salt is added in an amount of 0.005 weight parts to 0.4 weight parts per 100 weight parts of the crystalline resin.

6. The polarizing diffuser film according to claim 5, wherein the carboxylic acid is an aliphatic carboxylic acid.

7. The polarizing diffuser film according to claim 5, wherein the carboxylic acid has one or more aromatic rings.

8. The polarizing diffuser film according to claim 5, wherein the alkali metal salt of the carboxylic acid is sodium montanate or sodium benzoate.

9. The polarizing diffuser film according to claim 1, wherein the polarizing diffuser film further contains a compound having barbituric acid structure having formula (I) or (II) below, and the compound having formula (I) or (II) is added in an amount of 0.005 weight parts to 10 weight parts per 100 weight parts of the crystalline resin,

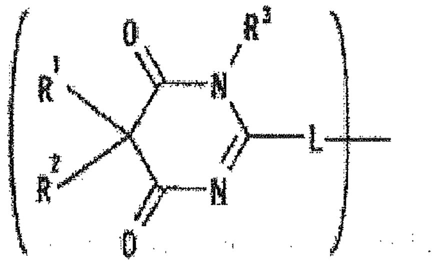

··· (I)

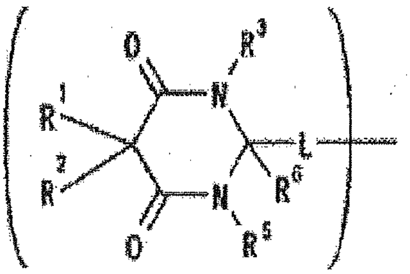

··· (II)

where $R^1$-$R^3$ of formula (I) and $R^1$-$R^3$ and $R^5$-$R^6$ of formula (II) independently represent hydrogen, substituted or non-substituted $C_1$-$C_{10}$ alkyl group, substituted or non-substituted $C_1$-$C_{10}$ alkoxy group, substituted or non-substituted $C_3$-$C_{30}$ cyclic group, or -NH-$R^4$ (where $R^4$ represents the same group as $R^1$ or a $C_2$-$C_{20}$ carboxylic acid derivative); and L represents oxygen atom or sulfur atom.

10. The polarizing diffuser film according to claim 1, wherein the polarizing diffuser film further contains a benzoic acid hydrazide compound having formula (III) below or an isocyanurate compound having formula (IV) below, and the compound having formula (III) or (IV) is added in an amount of 0.005 weight parts to 10 weight parts per 100 weight parts of the crystalline resin,

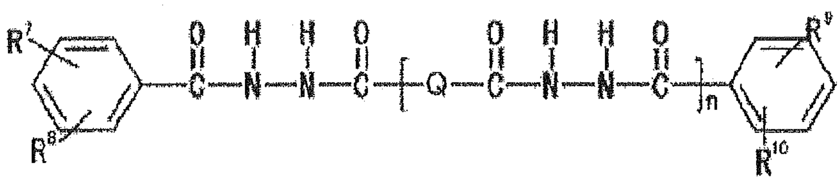

··· (III)

where Q represents $C_1$-$C_{12}$ alkylene group, $C_2$-$C_{12}$ alkenylene group, $C_3$-$C_8$ cycloalkylene group, $C_4$-$C_{20}$ alkylene group having an ether bond, or $C_5$-$C_{20}$ alkylene group having a cycloalkylene group; n represents an integer of 0 or 1; $R^7$-$R^{10}$ independently represent hydrogen atom, hydroxy group, halogen atom, $C_1$-$C_{12}$ alkyl group, $C_3$-$C_8$

cycloalkyl group, $C_6$-$C_{18}$ aryl group, $C_7$-$C_{20}$ arylalkyl group, or $C_7$-$C_{20}$ alkylaryl; and $R^7$ and $R^8$, or $R^9$ and $R^{10}$ may be linked together to form a 5-membered or 8-membered ring,

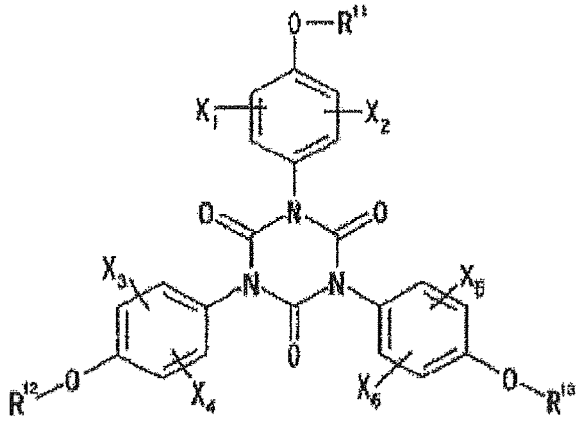

··· (IV)

where $R^{11}$-$R^{13}$ independently represent hydrogen atom, $C_1$-$C_{10}$ alkyl group, $C_2$-$C_{10}$ alkenyl group, or $C_2$-$C_{10}$ acyl group; and $X_1$-$X_6$ independently represent hydrogen atom, $C_1$-$C_8$ alkyl group, $C_3$-$C_8$ cycloalkyl group, $C_6$-$C_{18}$ aryl group, or $C_7$-$C_{12}$ arylalkyl group.

**11.** The polarizing diffuser film according to claim 1, wherein the polarizing diffuser film further contains a metal salt of sulfonamide compound having formula (V) below, and the compound having formula (V) is added in an amount of 0.005 weight parts to 10 weight parts per 100 weight parts of the crystalline resin,

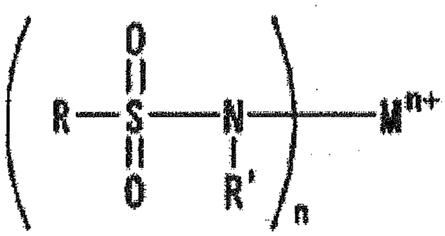

··· (V)

where R and R' independently represent hydrogen atom, halogen atom, alkali metal atom, amino group, substituted or non-substituted $C_1$-$C_{10}$ alkyl group, substituted or non-substituted $C_1$-$C_{10}$ alkoxy group, or substituted or non-substituted $C_3$-$C_{30}$ cyclic group; R and R' may be linked together to form a ring; n represents an integer of 1 or 2; when n is 1, M represents an alkali metal atom or $Al(OH)_2$; when n is 2, M represents a divalent metal atom, Al(OH) or linking group selected from $C_1$-$C_{12}$ alkylene group, $C_2$-$C_{12}$ alkenylene group, $C_3$-$C_8$ cycloalkylene group, $C_4$-$C_{20}$ alkylene group having an ether bond, $C_5$-$C_{20}$ alkylene group including cycloalkylene group, and/or $C_6$-$C_{12}$ arylene group; and when M represents the linking group, R' represents the alkali metal atom.

**12.** The polarizing diffuser film according to claim 11, wherein M in formula (V) represents the alkali metal atom.

**13.** The polarizing diffuser film according to any one of claims 2, 5 and 9 to 11, wherein the transmission polarization degree at 100 μm film thickness ranges from 30% to 90%.

**14.** The polarizing diffuser film according to any one of claims 2, 5 and 9 to 11, wherein a crystallinity ranges from 8% to 40%.

**15.** The polarizing diffuser film according to any one of claims 2, 5 and 9 to 11, wherein the crystalline resin is polyester resin, aromatic polyether ketone r.esin, or liquid crystalline resin.

**16.** The polarizing diffuser film according to any one of claims 2, 5 and 9 to 11, wherein the crystalline resin is polyethylene terephthalate.

**17.** The polarizing diffuser film according to any one of claims 2, 5 and 9 to 11, wherein at least one side of the polarizing diffuser film has light condensable surface shape.

**18.** The polarizing diffuser film according to claim 17, wherein the light condensable surface shape is a surface shape of the light polarizing diffuser film or a surface shape of a resin layer attached to a surface of the light polarizing diffuser film.

**19.** The polarizing diffuser film according to claim 17, wherein the light condensable surface shape is one-dimensional prism, two-dimensional prism or microlens.

**20.** A method of manufacturing the polarizing diffuser film according to claim 1, comprising:

preparing an amorphous sheet made of substantially one kind of crystalline resin having an intrinsic birefringence of 0.1 or more;
preparing, from the amorphous sheet, a crystallized sheet, diffuse light from the crystallized sheet having a value of -25 to -10 in terms of b* value in the CIE **L*a*b*** space as measured in accordance with JIS Z8722 and JIS Z8729; and
stretching the crystallized sheet mainly uniaxially.

**21.** A method of manufacturing the polarizing diffuser film according to claim 1, comprising:

preparing an amorphous sheet made of substantially one kind of crystalline resin having an intrinsic birefringence of 0.1 or more;
preparing, from the amorphous sheet, a crystallized sheet having a D2/D1 ratio of 1.5 or more, where D1 is a less wavelength-dependent light scattering ratio and is derived from Equations (1A), (1B) and (2), and D2 is a wavelength-dependent light scattering ratio and is derived from Equations (1A), (1B) and (3); and
stretching the crystallized sheet mainly uniaxially,

$$-\frac{1}{t}\mathrm{Ln}\,(T^*/100)=\frac{k}{\lambda^4}+C \quad \cdots (1A)$$

$$T^* = \frac{T_{para}}{T_{total}/100 + R_d/100} \quad \cdots (1B)$$

where T* is non-scattering ratio, λ is wavelength (nm), Ttotal is total light transmittance, Tpara is parallel light transmittance, and Rd is diffuse reflectance,

$$D1 = \{1 - \exp(-C \cdot t')\} \times 100 \quad \cdots (2)$$

where D1 is less wavelength-dependent light scattering ratio, C is scattering coefficient for less wavelength-dependent light scattering, and t' is thickness (μm) of crystallized sheet,

$$D2 = [1 - \exp(-\frac{k}{\lambda^4} \cdot t')] \times 100 \quad \cdots (3)$$

where D2 is wavelength-dependent light scattering ratio, k is scattering coefficient, and t' is thickness (μm) of crystallized sheet.

**22.** A method of manufacturing the polarizing diffuser film according to claim 2, comprising:

preparing a crystallized sheet by heating an amorphous sheet made of substantially one kind of crystalline resin having an intrinsic birefringence of 0.1 or more; and
stretching the crystallized sheet mainly uniaxially.

**23.** A method of manufacturing the polarizing diffuser film according to claim 5, comprising:

preparing a crystallized sheet by heating an amorphous sheet made of substantially one kind of crystalline resin having an intrinsic birefringence of 0.1 or more, the amorphous sheet further containing the alkali metal salt of the carboxylic acid having an HLB value of 1 to 7.5 as measured by Griffin's method; and
stretching the crystallized sheet mainly uniaxially.

**24.** A method of manufacturing the polarizing diffuser film according to claim 9, comprising:

preparing a crystallized sheet by heating an amorphous sheet made of substantially one kind of crystalline resin having an intrinsic birefringence of 0.1 or more, the amorphous sheet further containing the compound having formula (I) or (II); and
stretching the crystallized sheet mainly uniaxially.

**25.** A method of manufacturing the polarizing diffuser film according to claim 10, comprising:

preparing a crystallized sheet by heating an amorphous sheet made of substantially one kind of crystalline resin having an intrinsic birefringence of 0.1 or more, the amorphous sheet further containing the compound having formula (III) or (IV); and
stretching the crystallized sheet mainly uniaxially.

**26.** A method of manufacturing the polarizing diffuser film according to claim 11, comprising:

preparing a crystallized sheet by heating an amorphous sheet made of substantially one kind of crystalline resin having an intrinsic birefringence of 0.1 or more, the amorphous sheet further containing the compound having formula (V); and
stretching the crystallized sheet mainly uniaxially.

**27.** The method according to any one of claims 20 to 26, wherein
the amorphous sheet is heated to a crystallinity of 3% or higher at temperature T1 satisfying Equation (4),
$Tc-40°C \leq T1 < Tm-10°C$ ... Equation (4)
where Tc is crystallization temperature of the crystalline resin, and Tm is melting point of the crystalline resin.

**28.** The method according to any one of claims 20 to 26, wherein
the crystallized sheet has a transmission haze to visible light ranging from 7% to 70% and a crystallinity ranging from 3% to 20%.

**29.** The method according to any one of claims 20 to 26, wherein
heating time of the amorphous sheet ranges from 5 seconds to 20 minutes.

**30.** A liquid crystal display device comprising in order:

a surface light source A for backlight unit;
one or more optical devices B and/or air gap B;
the polarizing diffuser film C according to claim 1; and
a liquid crystal panel D formed of a liquid crystal cell sandwiched by two or more polarizing plates,
wherein a ratio of transmission polarization degree to transmission haze of the polarizing diffuser film C is 1.6 or more, and
a 30° luminance ratio measured in accordance with TCO'03 Displays ranges from 1.40 to 1.73.

**31.** The liquid crystal display device according to claim 30, wherein
the polarizing diffuser film C has a total light transmittance to visible light ranging from 50% to 75%, a transmission haze to visible light ranging from 15% to 45%, and a transmission polarization degree to visible light ranging from 30% to 90%.

**32.** The liquid crystal display device according to claim 30, wherein the transmission haze of the polarizing diffuser film C ranges from 15% to 38%.

**33.** The liquid crystal display device according to claim 30, wherein a normal-direction luminance of the liquid crystal device, expressed relative to a normal-direction luminance of a reference liquid crystal display, arbitrarily set at 100, ranges from 100 to 140, the reference liquid crystal display being identical to the liquid crystal display device except for the absence of the polarizing diffuser film C.

**34.** The liquid crystal display device according to claim 30, wherein
at least one of the optical devices B is placed adjacent to the polarizing diffuser film C,
the optical device B placed adjacent to the polarizing diffuser film C has light condensable surface shape,
the light condensable surface shape is one or more shapes selected from one-dimensional prism, two-dimensional prism and microlens, and
a normal-direction luminance of the liquid crystal device, expressed relative to a normal-direction luminance of a reference liquid crystal display, arbitrarily set at 100, ranges from 100 to 110, the reference liquid crystal display being identical to the liquid crystal display device except for the absence of the polarizing diffuser film C.

**35.** The liquid crystal display device according to claim 30, wherein
the polarizing diffuser film C is a uniaxially-stretched resin film,
a crystallinity of the polarizing diffuser film C ranges from 8% to 40%,
a transmission haze to visible light of the uniaxially-stretched resin film at 100μm film thickness ranges from 10% to 40%,
a bright-dark structure is observed in a TEM image of a section of the uniaxially-stretched resin film, the section cut along a direction perpendicular to a stretching direction of the uniaxially-stretched resin film, the TEM image having an image area of 77 $\mu m^2$ and a length in film thickness direction of 0.1 μm, and
bright portions and dark portions in the bright-dark structure are made of substantially the same composition.

**36.** The liquid crystal display device according to claim 30, wherein
a crystallinity of the polarizing diffuser film C ranges from 8% to 40%,
when a section of the polarizing diffuser film C is observed by polarization microscopy under crossed Nicol polarizers while being irradiated with polychromatic light for observation, bright portions and dark portions are observed,
the bright portions and the dark portions are made of substantially the same composition, and
the bright portions have longitudinal axes running substantially in parallel to one another.

**37.** A liquid crystal display device comprising in order:

a surface light source A for backlight unit;
one or more optical devices B and/or air gap B;
the polarizing diffuser film C according to claim 2; and
a liquid crystal panel D formed of a liquid crystal cell sandwiched by two or more polarizing plates.

**38.** A liquid crystal display device comprising in order:

a surface light source A for backlight unit;
one or more optical devices B and/or air gap B;
the polarizing diffuser film C according to claim 5; and
a liquid crystal panel D formed of a liquid crystal cell sandwiched by two or more polarizing plates.

**39.** A liquid crystal display device comprising in order:

a surface light source A for backlight unit;
one or more optical devices B and/or air gap B;
the polarizing diffuser film C according to claim 9; and
a liquid crystal panel D formed of a liquid crystal cell sandwiched by two or more polarizing plates.

**40.** A liquid crystal display device comprising in order:

a surface light source A for backlight unit;

one or more optical devices B and/or air gap B;
the polarizing diffuser film C according to claim 10; and
a liquid crystal panel D formed of a liquid crystal cell sandwiched by two or more polarizing plates.

**41.** A liquid crystal display device comprising in order:

a surface light source A for backlight unit;
one or more optical devices B and/or air gap B;
the polarizing diffuser film C according to claim 11; and
a liquid crystal panel D formed of a liquid crystal cell sandwiched by two or more polarizing plates.

**42.** The liquid crystal display device according to any one of claims 30 and 37 to 41, wherein the polarizing diffuser film C is placed adjacent to the liquid crystal panel D.

**43.** The liquid crystal display device according to any one of claims 30 and 37 to 41, wherein the polarizing diffuser film C also functions as a light source-side protection film for the polarizing plates of the liquid crystal display panel D.

**44.** The liquid crystal display device according to any one of claims 30 and 37 to 41, wherein a reflection axis of the polarizing diffuser film C and an absorption axis of one or more of the polarizing plates of the liquid crystal display panel D, the polarizing plates placed on a light-source side, are aligned substantially in the same direction.

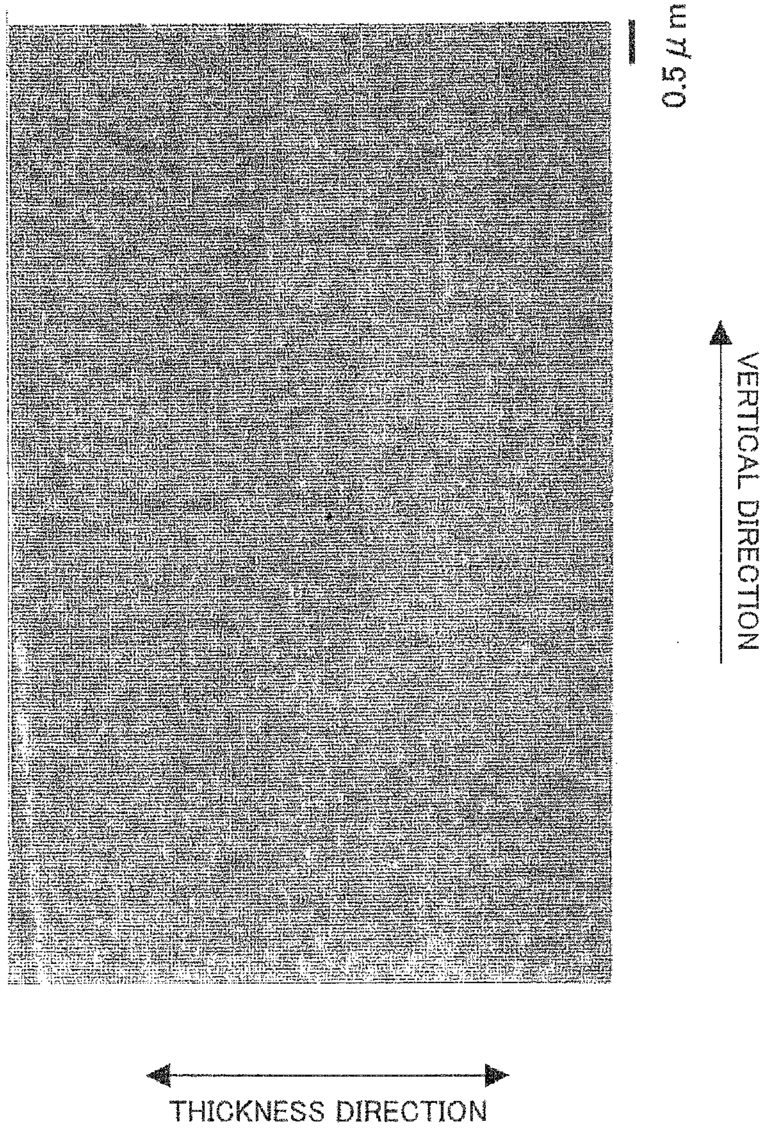


FIG.1A

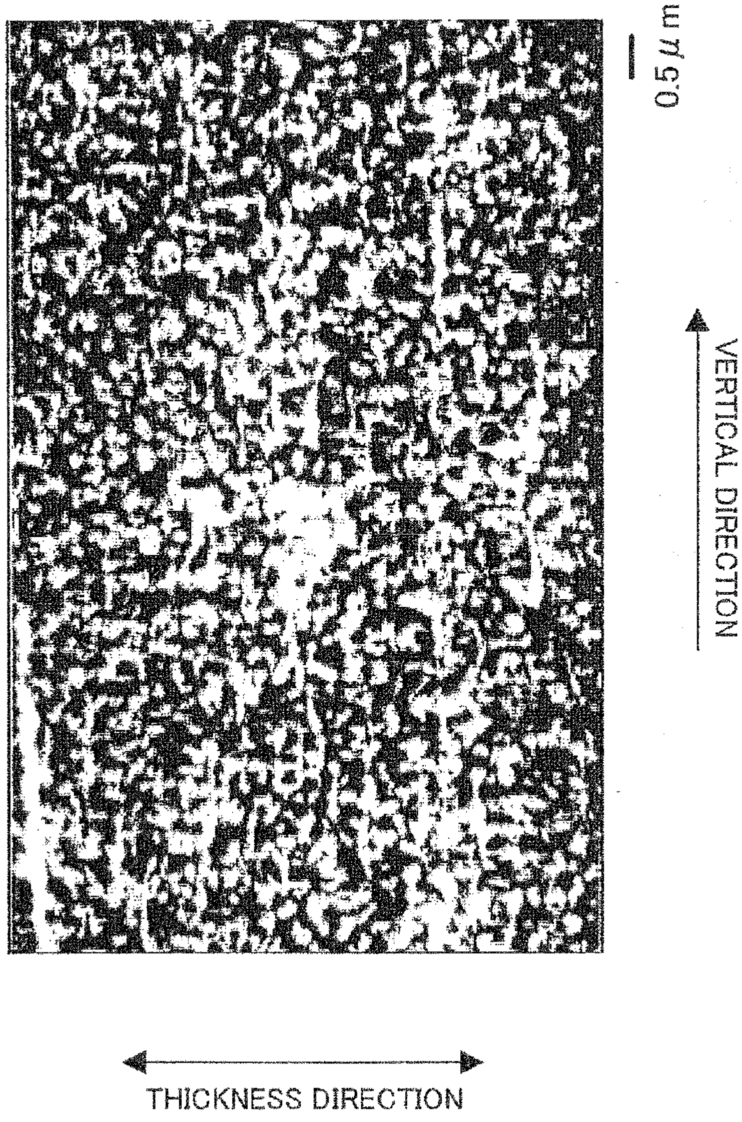


FIG.1B

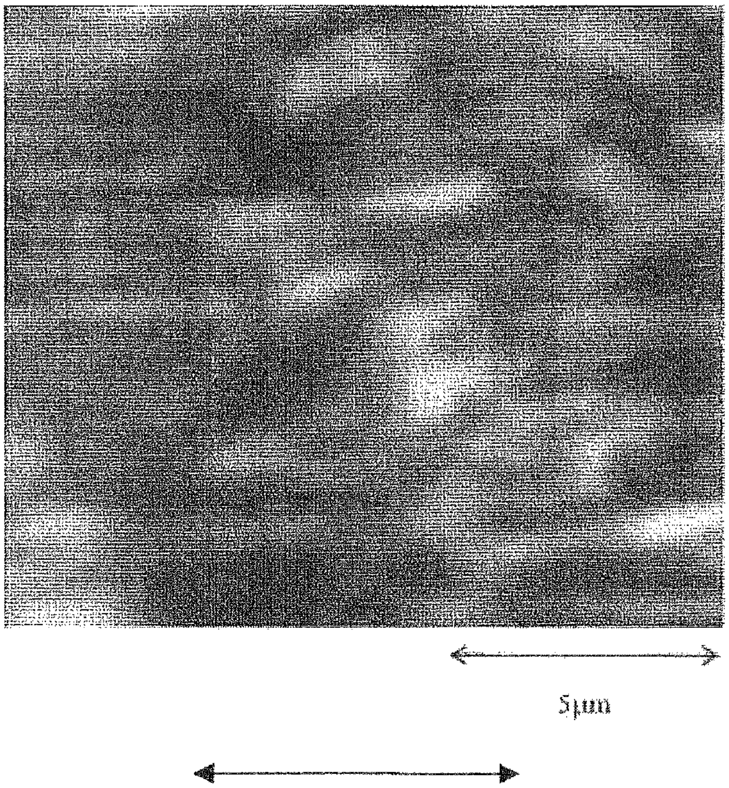


FIG.2

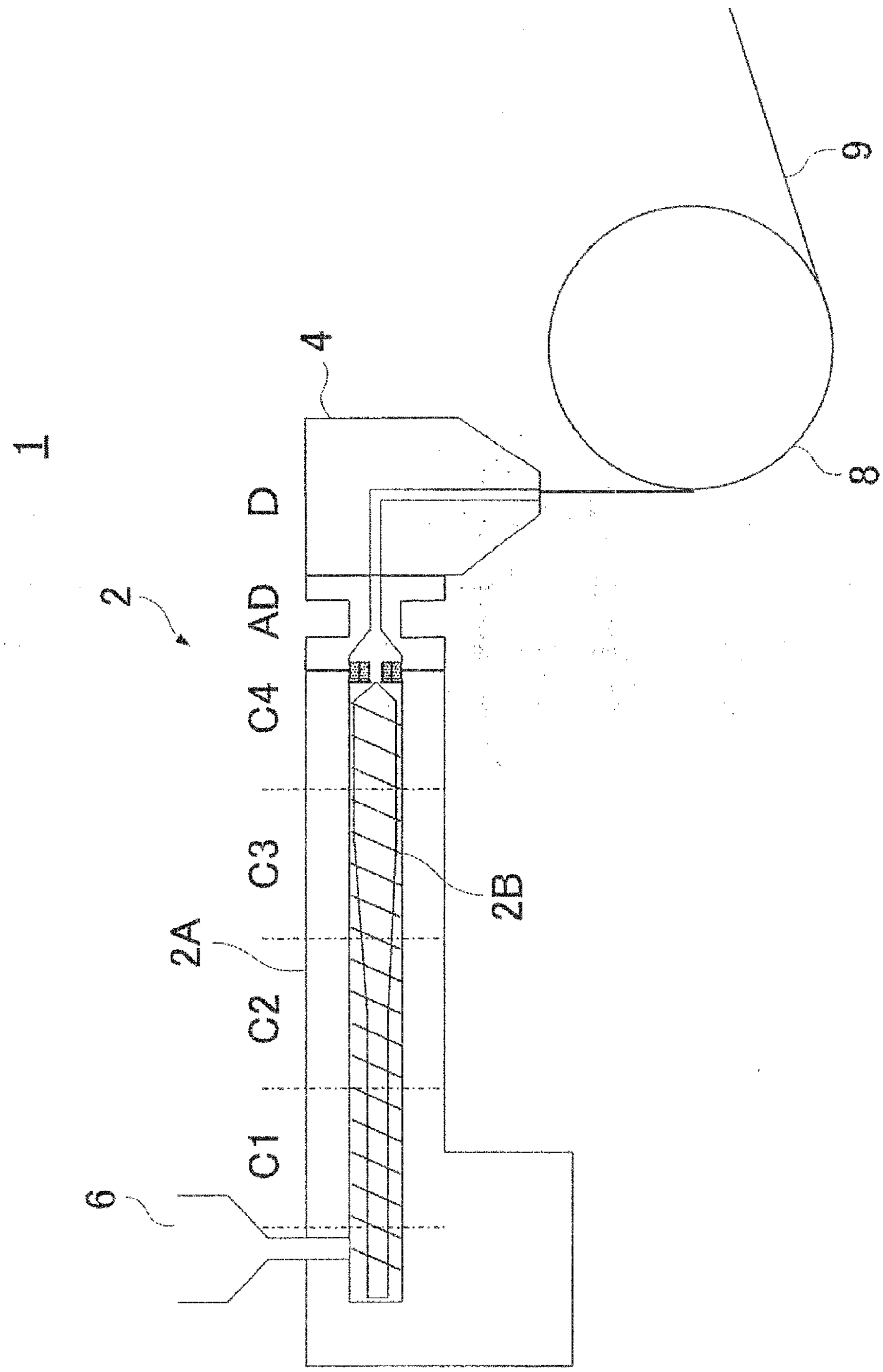


FIG.3

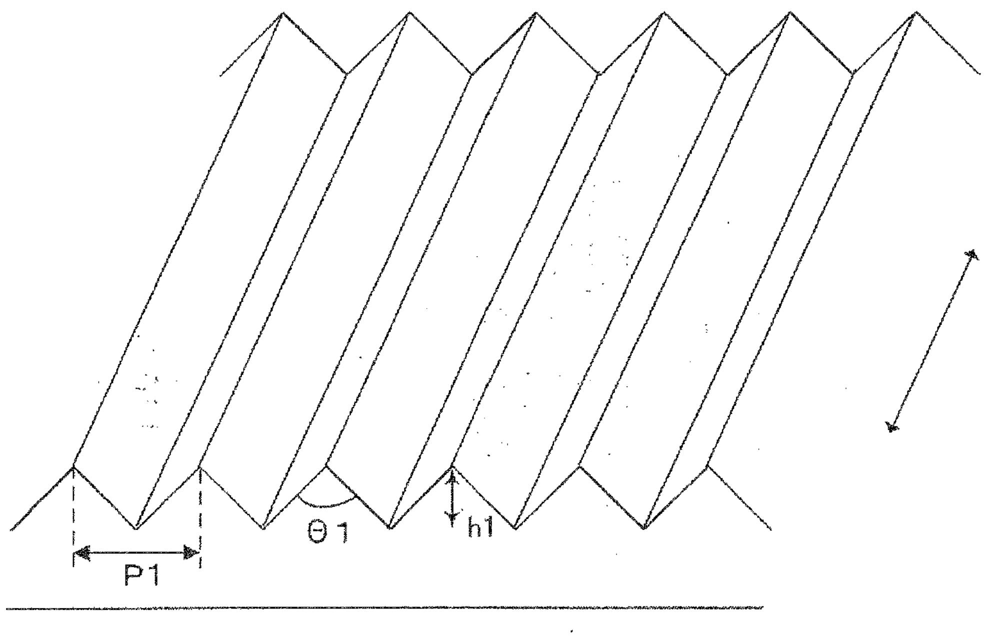


FIG.4

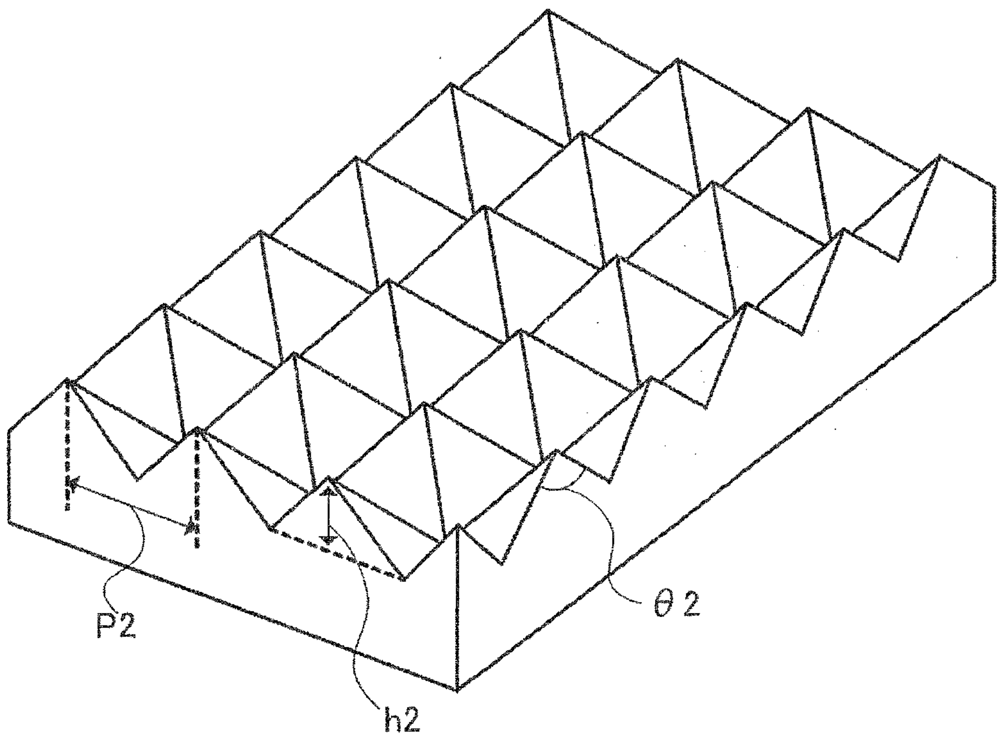


FIG.5

FIG.6 (A)

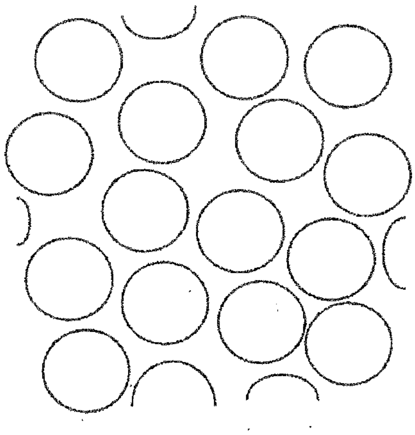

FIG.6 (B)

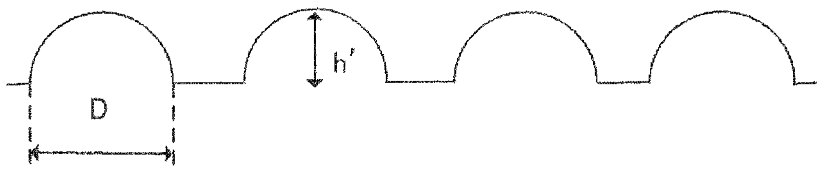

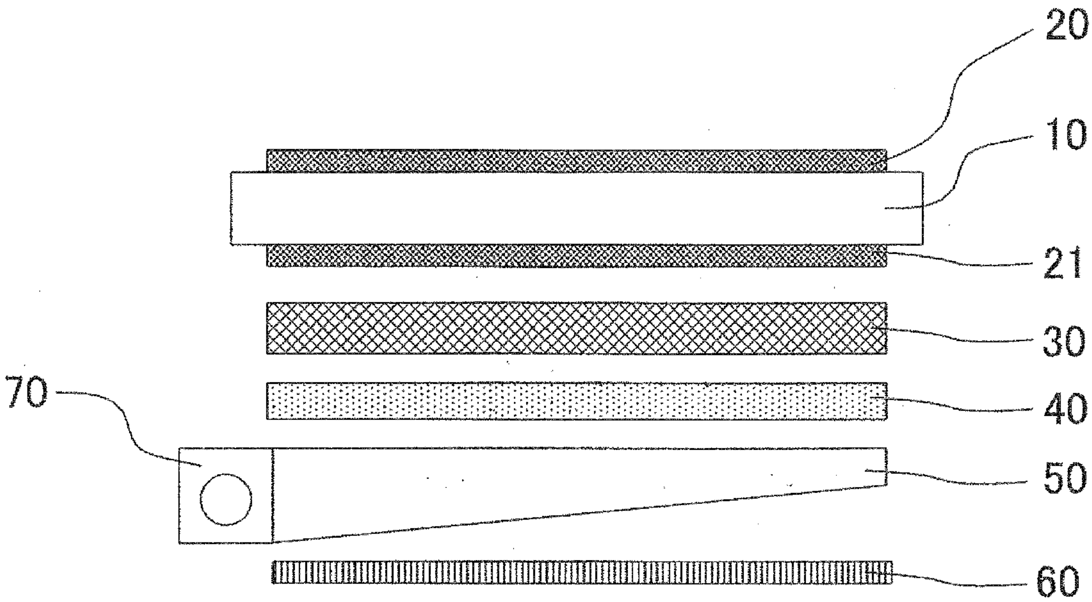


FIG.7

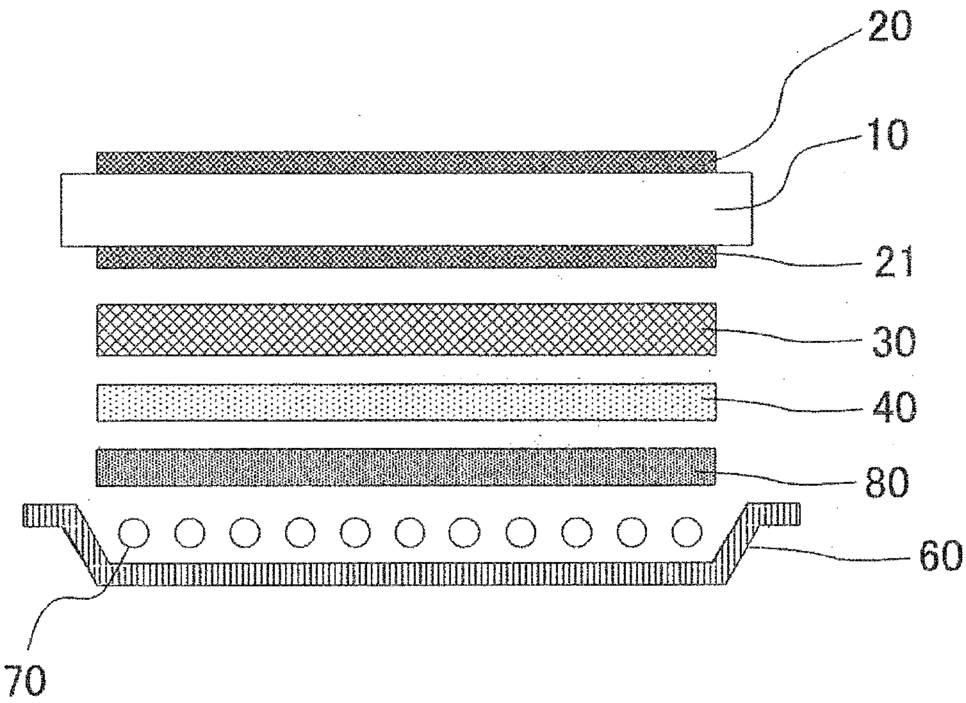


FIG.8

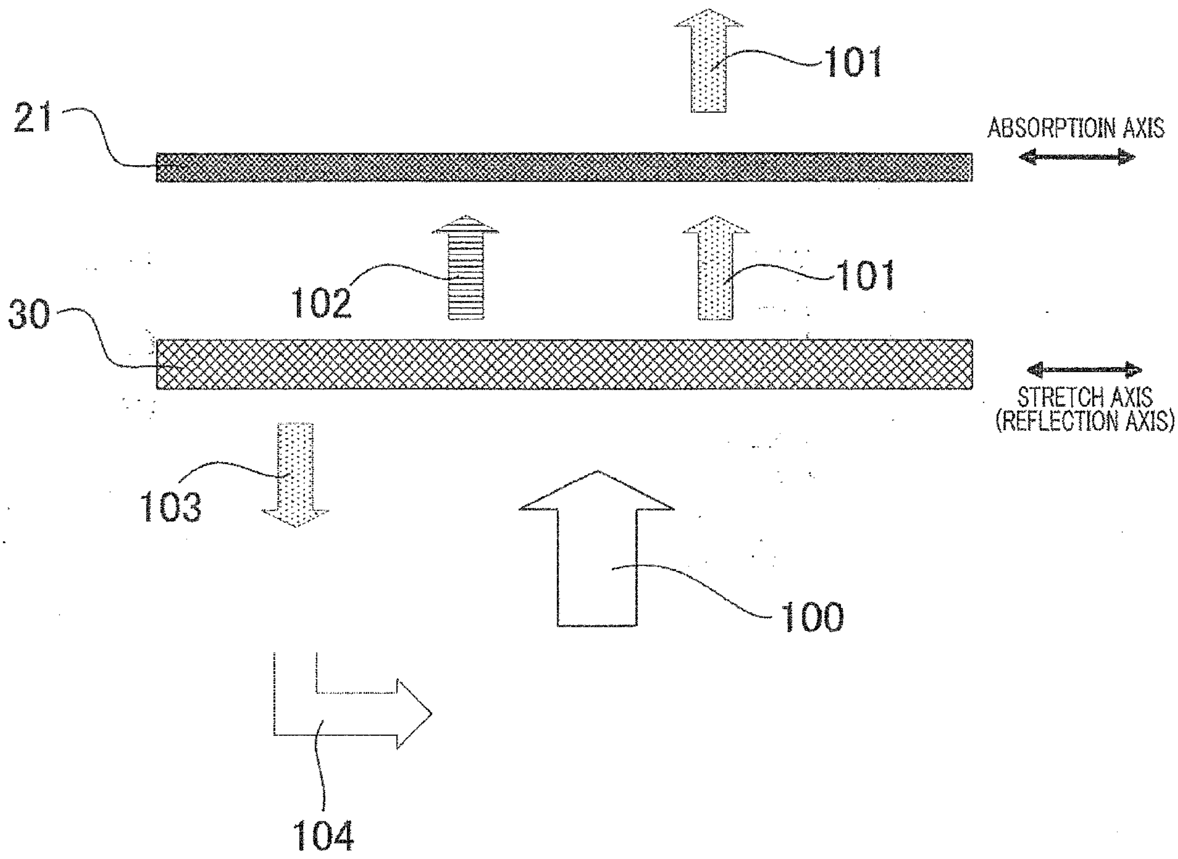
101
21
ABSORPTIOIN AXIS
102
101
30
STRETCH AXIS
(REFLECTION AXIS)
103
100
104

FIG.9

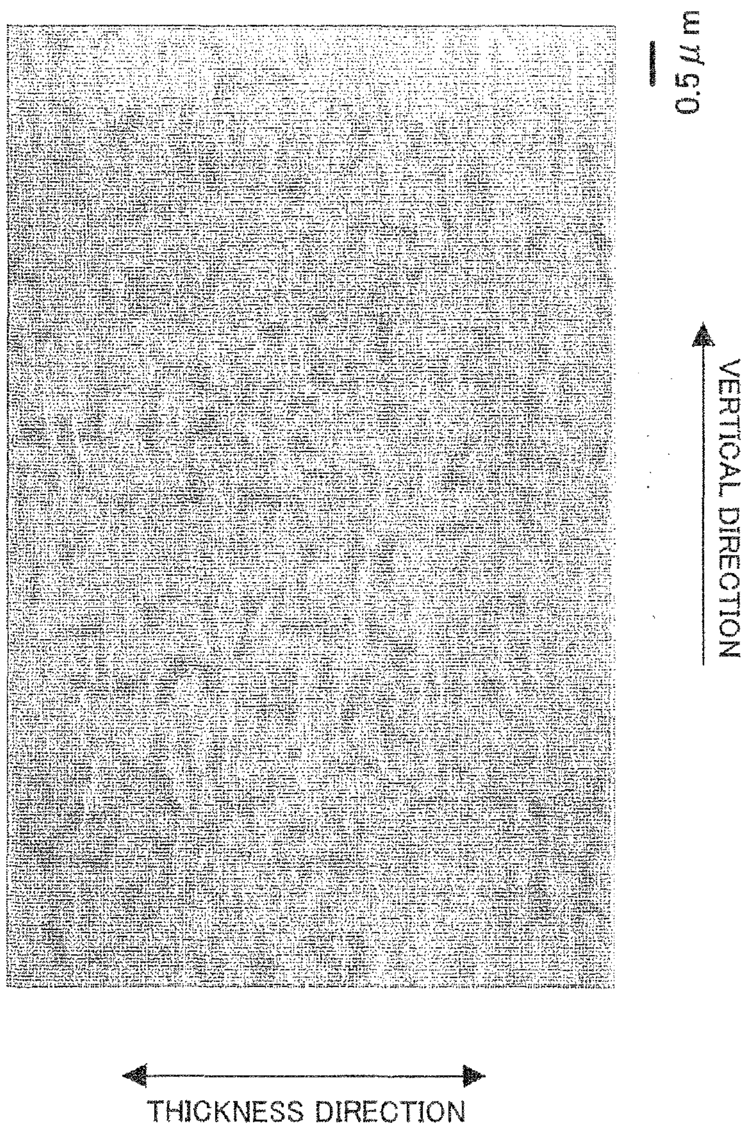


FIG.10A

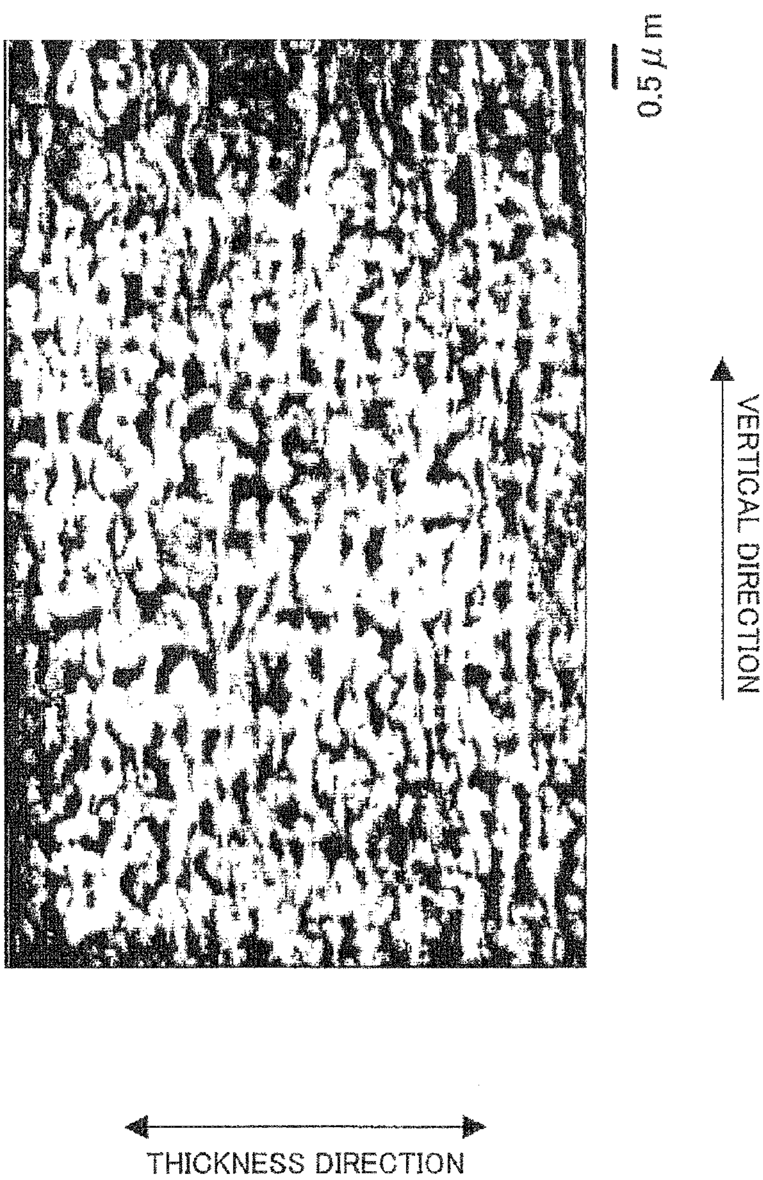


FIG.10B

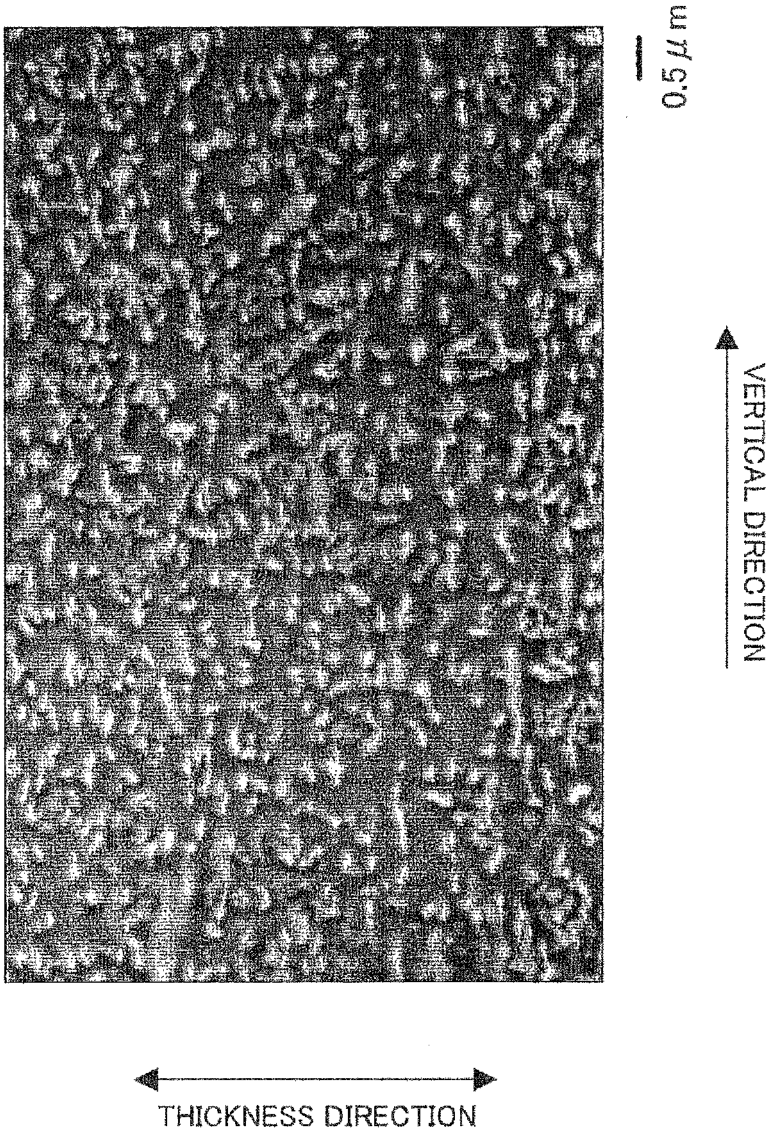


FIG.11A

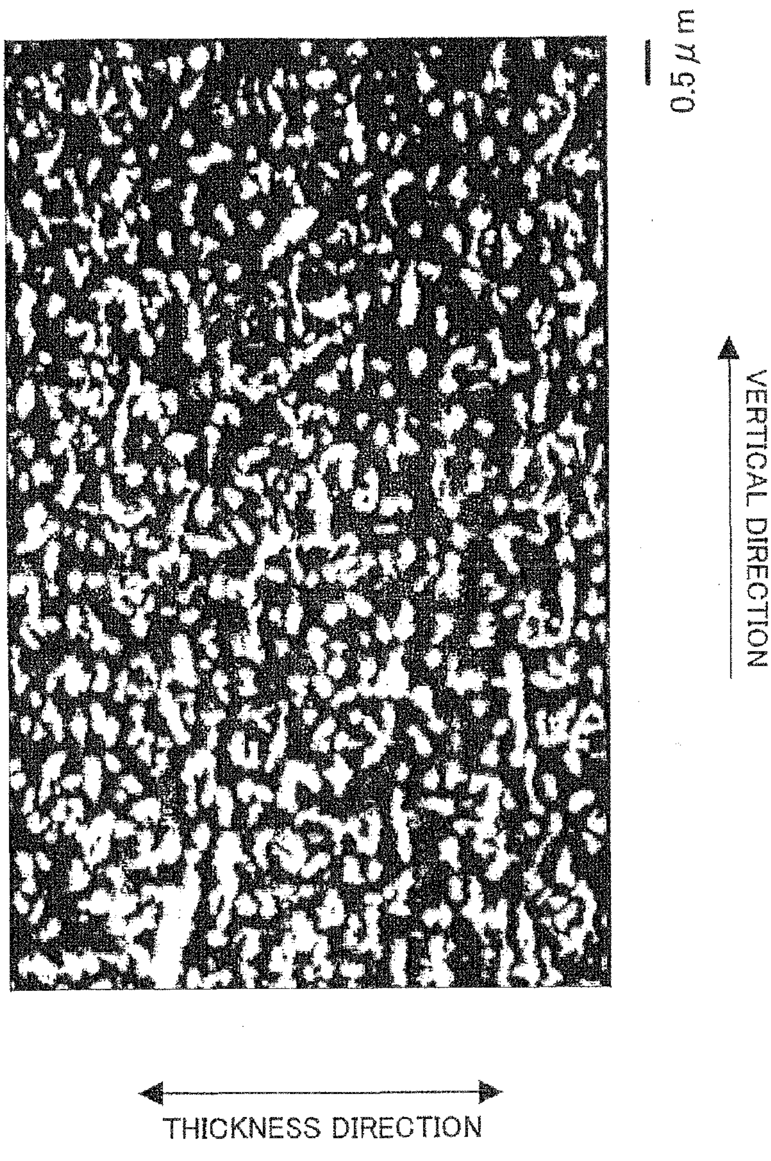


FIG.11B

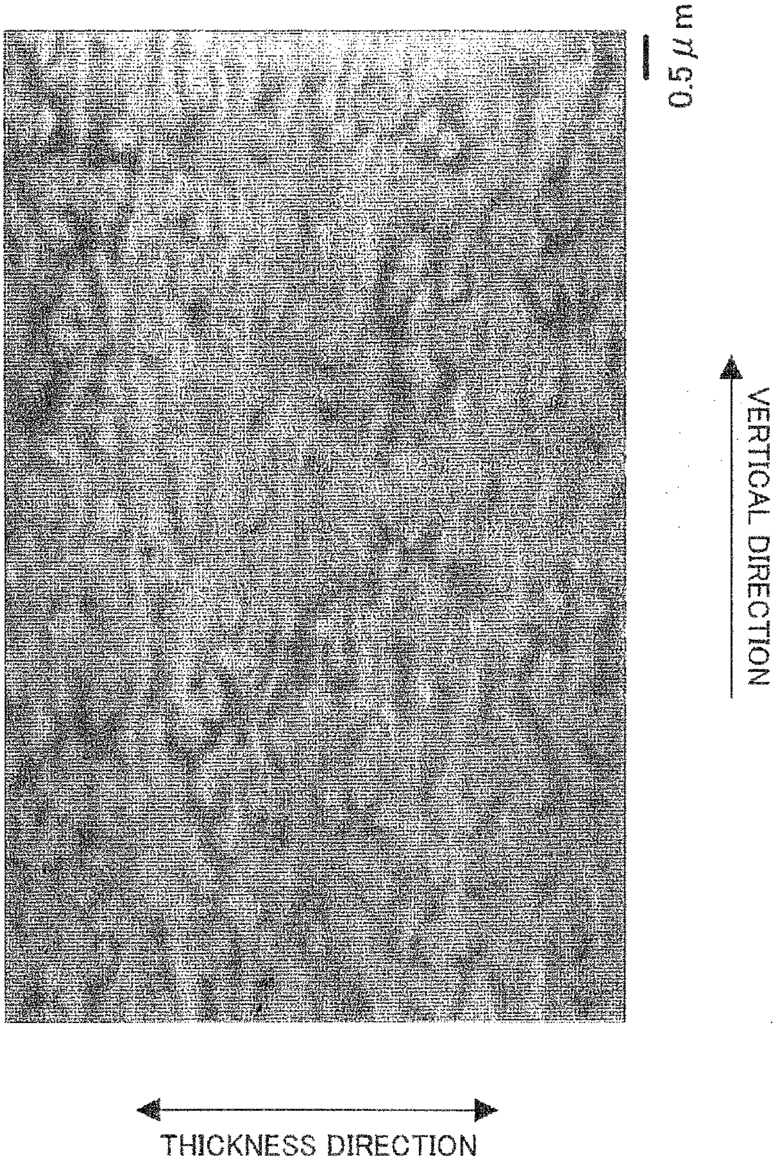


FIG.12A

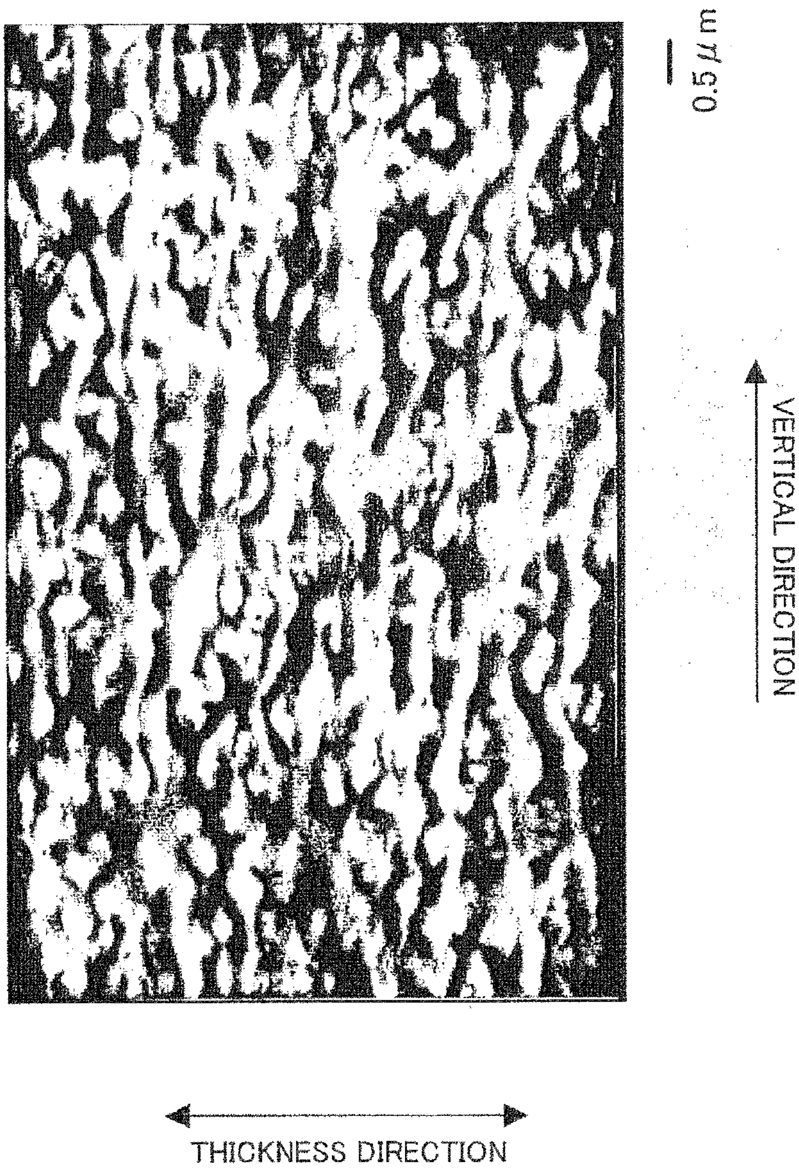


FIG.12B

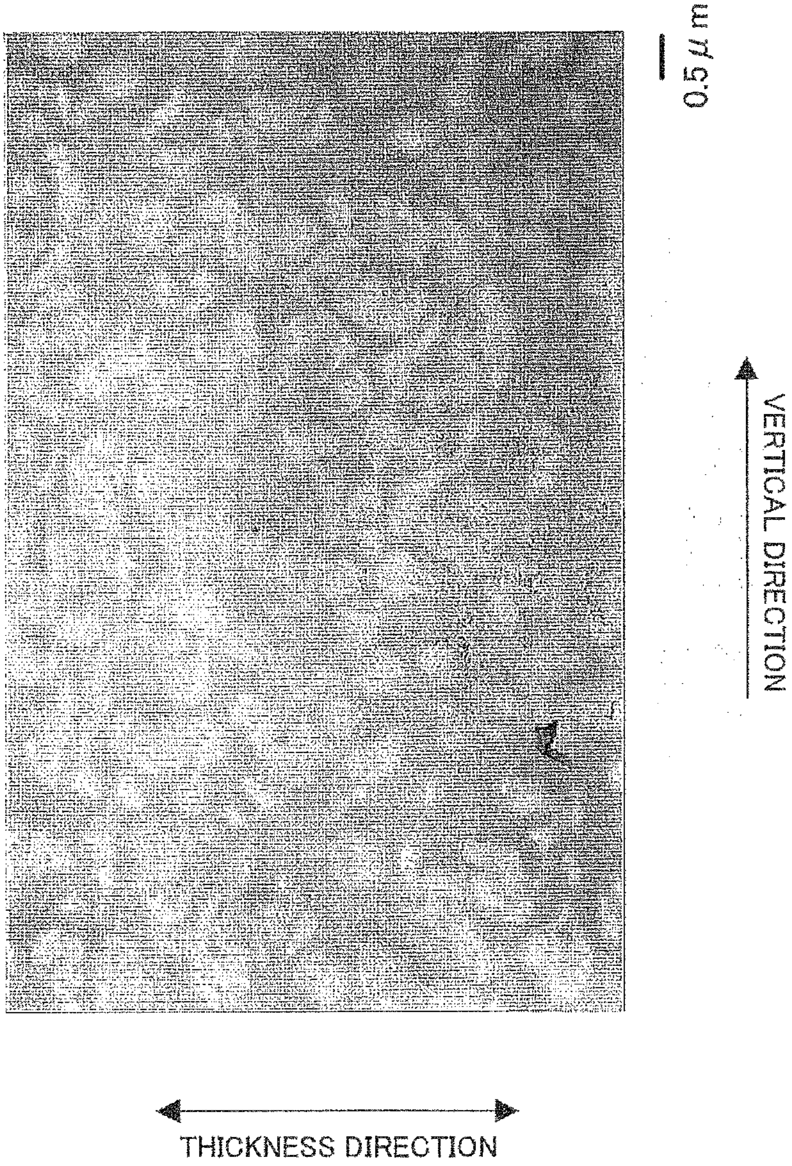


FIG.13A

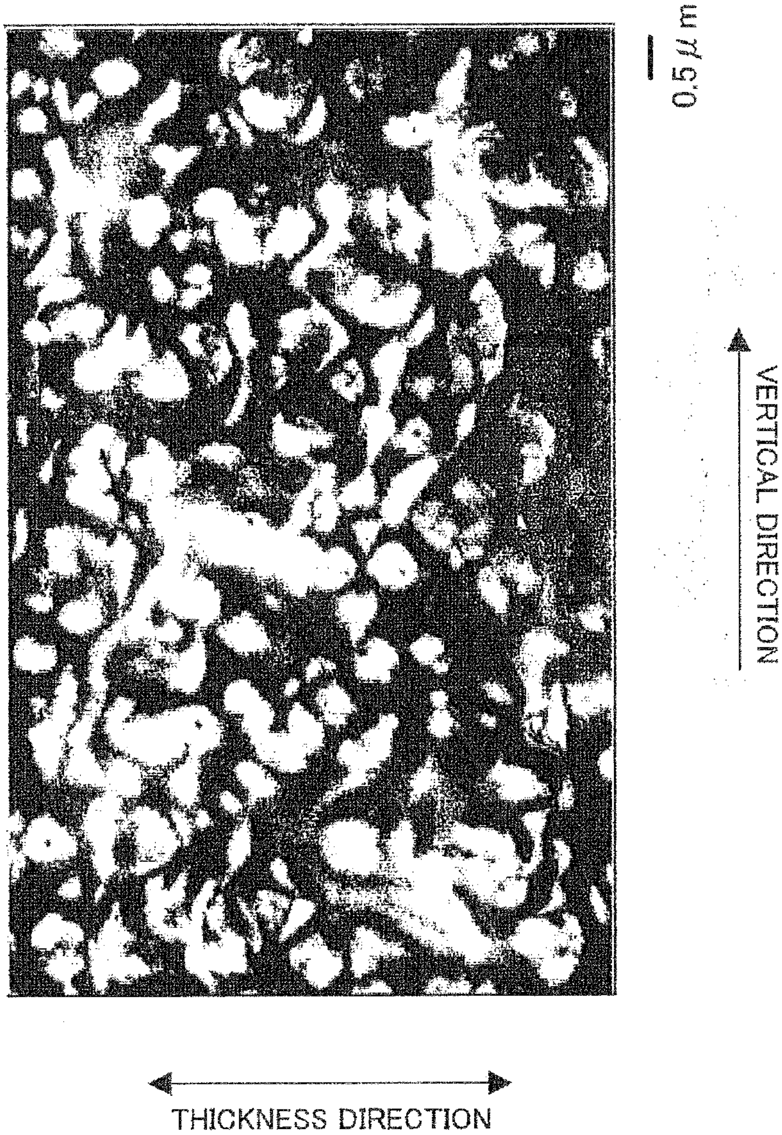


FIG.13B

FIG.14A

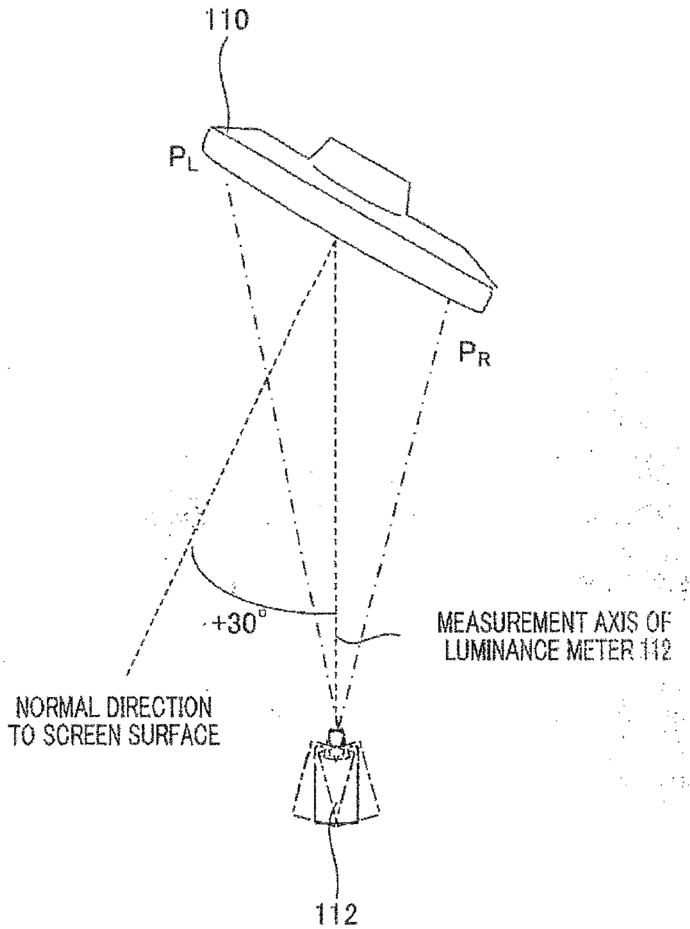


FIG.14B

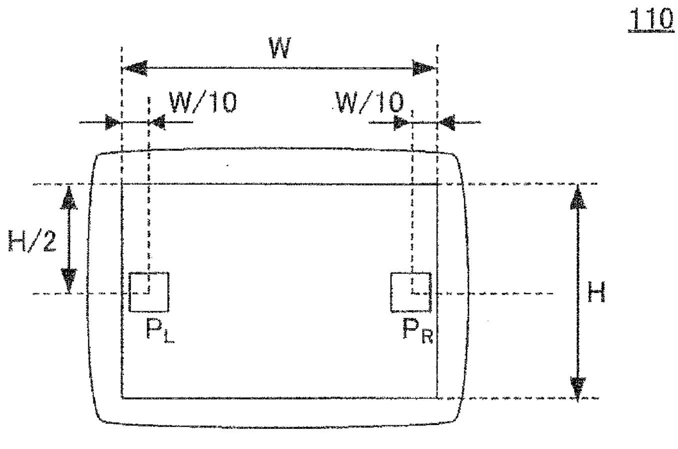

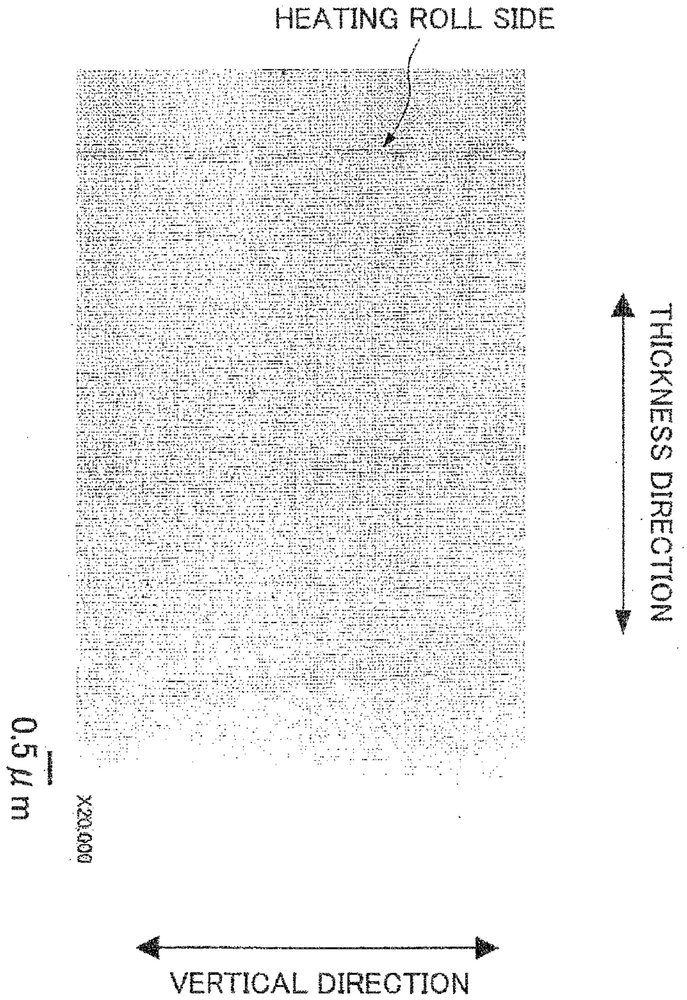
HEATING ROLL SIDE
THICKNESS DIRECTION
0.5 μm
X20,000
VERTICAL DIRECTION

FIG.15A

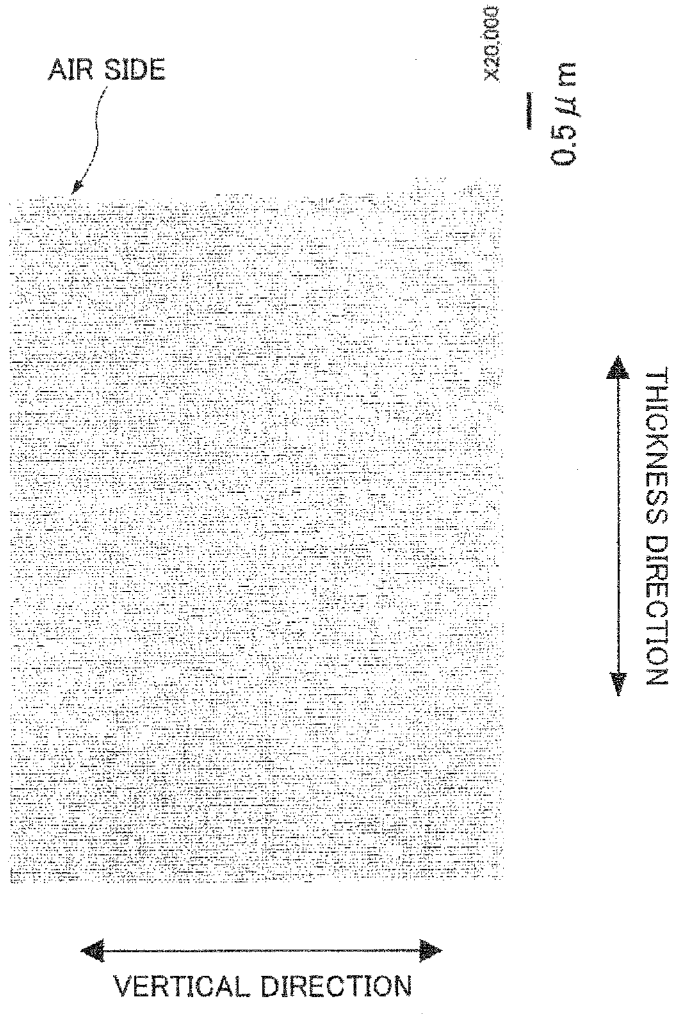
AIR SIDE
X20,000
0.5 μm
THICKNESS DIRECTION
VERTICAL DIRECTION

FIG.15B

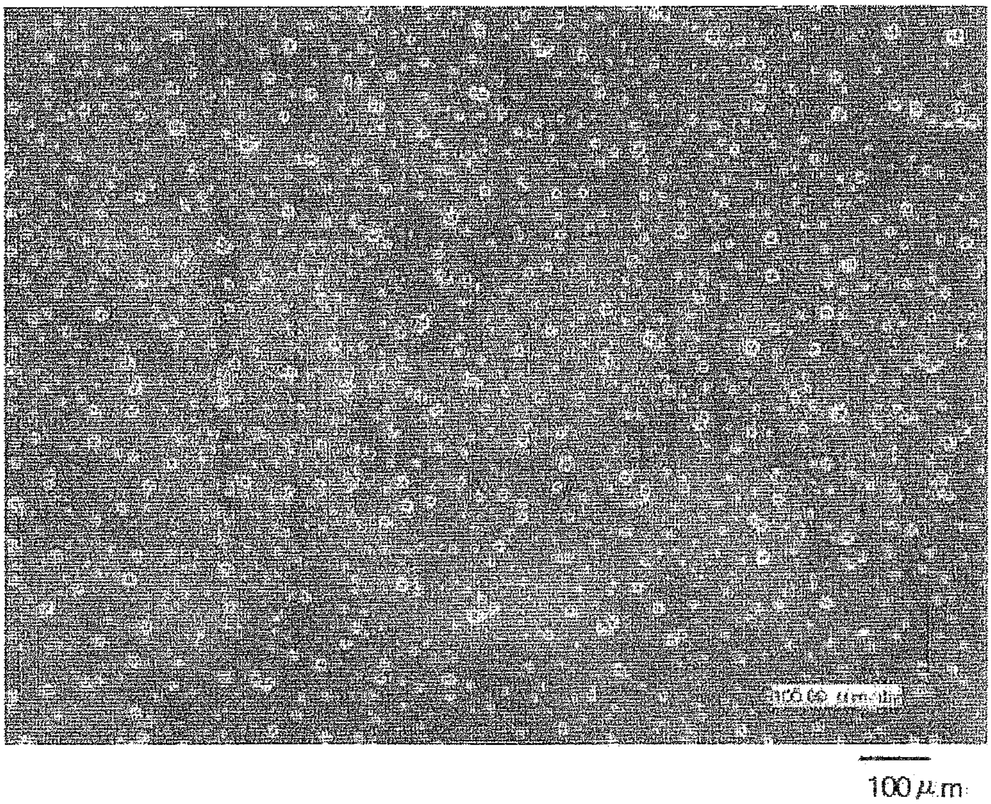


FIG.16

## INTERNATIONAL SEARCH REPORT

International application No.
PCT/JP2010/007490

A. CLASSIFICATION OF SUBJECT MATTER
*G02B5/02*(2006.01)i, *F21S2/00*(2006.01)i, *G02B5/30*(2006.01)i, *G02F1/1335*(2006.01)i, *F21Y103/00*(2006.01)n

According to International Patent Classification (IPC) or to both national classification and IPC

B. FIELDS SEARCHED

Minimum documentation searched (classification system followed by classification symbols)
G02B5/02, F21S2/00, G02B5/30, G02F1/1335, F21Y103/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br><br>Y | JP 2001-49008 A (Teijin Ltd.),<br>20 February 2001 (20.02.2001),<br>claims; paragraphs [0048] to [0051]; examples 3, 5, 6<br>& US 6559909 B1 & EP 1031872 A1<br>& WO 2000/016154 A1 & DE 69940300 D<br>& TW 507104 B | 1-4,13-16,<br>20-22,27-37,<br>42-44<br>5-12,17-19,<br>23-26,38-41 |
| X<br><br>Y | JP 2008-268861 A (Rohm and Haas Denmark Finance A/S),<br>06 November 2008 (06.11.2008),<br>claims; paragraphs [0027], [0082] to [0087], [0102] to [0133]<br>& US 2008/0197518 A1 & KR 10-2008-0056687 A<br>& CN 101311754 A | 1-4,13-22,<br>27-37,42-44<br>5-12,23-26,<br>38-41 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 January, 2011 (28.01.11) | Date of mailing of the international search report<br>08 February, 2011 (08.02.11) |
| Name and mailing address of the ISA/<br>Japanese Patent Office<br><br>Facsimile No. | Authorized officer<br><br><br>Telephone No. |

Form PCT/ISA/210 (second sheet) (July 2009)

INTERNATIONAL SEARCH REPORT

International application No.
PCT/JP2010/007490

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-75643 A (Daicel Chemical Industries, Ltd.), 12 March 2003 (12.03.2003), claims; paragraphs [0014], [0046] & US 2003/0081313 A1 & KR 10-2003-0001295 A | 1-4,13-16, 30-37,42-44 |
| X | JP 11-502036 A (Honeywell Inc.), 16 February 1999 (16.02.1999), claims; page 20, line 11 to page 22, line 19; fig. 3b, 3c, 3f, 3h & US 5751388 A & EP 819259 A & WO 1996/031794 A1 & DE 69626637 T & IL 126255 A & HK 1053871 A | 1-4,13-15, 17-19,30-37, 42-44 |
| X | JP 2000-66024 A (Nippon Telegraph And Telephone Corp.), 03 March 2000 (03.03.2000), claims; paragraphs [0027] to [0035]; fig. 5, 8 (Family: none) | 1-4,13-15, 30-37,42-44 |
| Y | JP 2008-518268 A (3M Innovative Properties Co.), 29 May 2008 (29.05.2008), paragraphs [0024] to [0026] & US 2006/0093809 A1 & EP 1805536 A & WO 2006/049715 A2 & KR 10-2007-0074642 A & CN 101052902 A | 5-8,23,38 |
| Y | WO 2009/110337 A1 (Toray Industries, Inc.), 11 September 2009 (11.09.2009), paragraphs [0027] to [0031] (Family: none) | 5-8,23,38 |
| Y | JP 2008-7593 A (ADEKA Corp.), 17 January 2008 (17.01.2008), claims (Family: none) | 9,24,39 |
| Y | JP 2006-249304 A (ADEKA Corp.), 21 September 2006 (21.09.2006), claims (Family: none) | 10,25,40 |
| Y | WO 2007/129527 A1 (ADEKA Corp.), 15 November 2007 (15.11.2007), claims & JP 2007-327028 A & US 2009/0176913 A1 & EP 2022826 A1 & KR 10-2009-0015088 A & CN 101443409 A | 11-12,26,41 |
| Y | JP 2007-272052 A (Asahi Kasei Corp.), 18 October 2007 (18.10.2007), claims; fig. 1 (Family: none) | 17-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9506985 A
- JP 2003075643 A
- JP 11281975 A
- JP 2001264539 A
- JP 2001049008 A
- JP 2005531445 A
- JP 2007272052 A
- JP 2007206569 A
- JP 2000506989 A
- JP 2004035347 A
- JP 2008007593 A
- JP 2006249304 A
- JP 2009096833 A
- JP 2007327028 A
- JP 2009295817 A
- JP 2009297761 A
- JP 2009297762 A
- JP 2010073650 A
- JP 2010129944 A

### Non-patent literature cited in the description

- **R.DE.P.DAUBENY ; C.W.BUNN ; C.J.BRROWN.** *Proc.Roy.Soc.,* 1954, vol. A226, 531
- *Flat Panel Displays ver.3.0,* 63-66
- *TCO'03 Displays Flat Panel Displays Ver.3.0,* 09 October 2005